# EUROPEAN PATENT SPECIFICATION

(11) **EP 1 301 004 B1**
(45) Date of publication and mention of the grant of the patent: **18.10.2006**
(21) Application number: 02017645.9
(22) Date of filing: 06.08.2002
(51) Int. Cl.: H04L 29/06, H04L 12/56, H04Q 7/38

(54) **Data reception and transmission policing in data communication systems**
Überwachungsfunktion zum Senden und Empfangen von Daten in Datenkommunikationssystemen
Politique de contrôle de réception et de transmission de données dans des systèmes de communication de données

(30) Priority: 06.08.2001 JP 2001237324
(43) Date of publication of application: 09.04.2003
(73) Proprietor: NEC CORPORATION, Tokyo (JP)
(72) Inventor: Uematsu, Akira, Nec Corporation, Minato-ku, Tokyo (JP); Momona, Morihisa, Nec Corporation, Minato-ku, Tokyo (JP); Kurashima, Akihisa, Nec Corporation, Minato-ku, Tokyo (JP)
(74) Representative: Vossius & Partner

(56) References cited:
- EP-A- 1 117 269
- WO-A-01/89251
- US-B1- 6 236 860

## Description

The present invention relates to a data communication system and a data communication terminal as well as a data communication method used by utilizing the system and terminal and a computer program executed to implement the method, and more particularly to a data communication system with a high mobility such as a mobile communication system for allowing a mobile terminal to change in network connection to plural available communication networks upon moving by taking into account respective inter-relationship between transmitting/receiving data and connected one of the plural available communication networks for establishing a highly secure data communication even when the network connection of the mobile terminal is changed among the plural available communication networks.

All of patents, patent applications, patent publications, scientific articles and the like, which will hereinafter be cited or identified in the present application, will, hereby, describe more fully the state of the art, to which the present invention pertains.

In the prior art, the data communication terminal stores a property in addition to data for communication. The property may in general not include any information involved in a network. The communication data are transmitted through the network and received by the data communication terminal, wherein the received communication data are stored is the data communication terminal. Those received communication data are not distinctive nor distinguishable from other data generated by the data communication terminal or received through other communication network. Namely, the data stored in the data communication terminal are free of any identifier which identify one of data-obtaining measures such as the terminal itself, or the networks.

In recent years, portable data communication terminals and portable telecommunication terminals with data communication function have widely been spread. Wireless local area networks have been equipped in home and office. There is a plan to offer public wireless access services.

In the above circumstances, it will be expected or desired that the wireless data communication terminal is capable of automatically establishing continuous data communications even when an accessible or connectable communication network is changed upon move of the wireless data communication terminal.

In the prior art, the data obtained via a network does not include nor accompanying any additional information involved in this network. Security data obtained via an office network may be opened or leaked by user's careless mistake in establishing a connection to an unreliable public line or network. The data communication terminal may be invaded by a virus program through an unreliable public line or network. The communication network may be exposed to such a virus program.

EP-A-1 117 269 describes a method for the handover of a terminal in a cellular communication system with base stations for providing connections to terminals in at least one cell served by the base station is described. A terminal has a memory for identifying a measurement set of cells and measures quantities of the cells identified in the measurement set. The decision of a handover of a terminal to a further connection is executed according to the measurement quantities. A classification is performed whether the execution of a handover is urgent. The number of cells identified in the measurement set is reduced to a defined number if the handover is classified as urgent and the number of cells identified is larger than the defined number. Devices and programs performing the method are also described in this document.

In the above circumstances, the development of a novel data communication system free from the above problems is desirable.

Accordingly, it is an object of the present invention to provide a novel data communication system free from the above problems.

It is a further object of the present invention to provide a novel data communication system for establishing a highly secure data communication.

It is a still further object of the present invention to provide a novel data communication system for allowing a mobile terminal to change in network connection to plural available communication networks upon moving by taking into account respective inter-relationship between transmitting/receiving data and connected one of the plural available communication networks for establishing a highly secure data communication even when the network connection of the mobile terminal is changed among the plural available communication networks.

It is yet a further object of the present invention to provide a novel data communication terminal free from the above problems.

It is further more object of the present invention to provide a novel data communication terminal for establishing a highly secure data communication.

It is still further more object of the present invention to provide a novel data communication terminal for allowing a mobile terminal to change in network connection to plural available communication networks upon moving by taking into account respective inter-relationship between transmitting/receiving data and connected one of the plural available communication networks for establishing a highly secure data communication even when the network connection of the mobile terminal is changed among the plural available communication networks.

It is another object of the present invention to provide a novel data communication method free from the above problems.

It is further another object of the present invention to provide a novel data communication method for establishing a highly secure data communication.

It is still further another object of the present invention to provide a novel data communication method for allowing a mobile terminal to change in network connection to plural available communication networks upon moving by taking into account respective inter-relationship between transmitting/receiving data and connected one of the plural available communication networks for establishing a highly secure data communication even when the network connection of the mobile terminal is changed among the plural available communication networks.

It is an additional object of the present invention to provide a novel computer-program to be executed for implementing data communication method free from the above problems.

It is a further additional object of the present invention to provide a novel computer-program to be executed for implementing data communication method for establishing a highly secure data communication.

It is a still further additional object of the present invention to provide a novel computer-program to be executed for implementing data communication method for allowing a mobile terminal to change in network connection to plural available communication networks upon moving by taking into account respective inter-relationship between transmitting/receiving data and connected one of the plural available communication networks for establishing a highly secure data communication even when the network connection of the mobile terminal is changed among the plural available communication networks.

The present invention provides a data communication system including : a plurality of network ; and a plurality of terminal being accessible to the plurality of network. Each of the plurality of network is assigned with each network property value. Each of the plurality of terminal further includes : at least an access policy for making a decision on permissibility for access to other terminal of the plurality of terminal than the each terminal, with reference to at least one of a first network property value assigned to a first network connected with the each terminal and a second network property value assigned to a second network connected with the other terminal, so that only when the access is permitted based on the access policy, then the terminal makes an access to the other terminal.

The above and other objects, features and advantages of the present invention will be apparent from the following descriptions.

Preferred embodiments according to the present invention will be described in detail with reference to the accompanying drawings.
FIG. 1 is a block diagram of a data communication system in a first embodiment in accordance with the present invention.
FIG. 2 is a block diagram of an internal structure of each of the fourth data communication terminals included in the system of FIG. 1.
FIG. 3 is a block diagram of typical examples of data structure to be stored in the data storage region in the data communication terminal of FIG. 2.
FIG. 4 is a diagram of one typical example of the transmission policy stored in the access policy storage unit included in the data communication terminal of FIG. 2.
FIG. 5 is a flow chart illustrative of a typical example of processes or operations shown by the data transmission permission decision function block included in the data communication terminal of FIG. 2.
FIG. 6 is a diagram of one typical example of transmission packet to be transmitted onto the data communication network by the packet transmission function block included in the data communication terminal of FIG. 2.
FIG. 7 is a block diagram of an internal structure of the data communication terminal of the second embodiment in accordance with the present invention.
FIG. 8 is a flow chart of operations or processes of the network property value addition function block included in the data communication terminal of FIG. 7.
FIG. 9 is a block diagram of an internal structure of the data communication terminal of the third embodiment in accordance with the present invention.
FIG. 10 is a diagram of one typical example of the receiving policy stored in the access policy storage unit included in the data communication terminal of FIG. 9.
FIG. 11 is a flow chart illustrative of a typical example of processes or operations shown by the data receiving permission decision function block included in the data communication terminal of FIG. 9.
FIG. 12 is a block diagram of an internal structure of the data communication terminal of the fourth embodiment in accordance with the present invention.
FIG. 13 is a flow chart of operations or processes of the network property value changing function block included in the data communication terminal of FIG. 12.
FIG. 14 is a block diagram of an internal structure of the data communication terminal of the fifth embodiment in accordance with the present invention.
FIG. 15 is a flow chart of operations or processes of the access policy changing function block included in the data communication terminal of FIG. 14.
FIG. 16 is a block diagram of an internal structure of the data communication terminal of the sixth embodiment in accordance with the present invention.
FIG. 17 is a block diagram of an internal structure of one of the data storage regions included in the data communication terminal of FIG. 16.
FIG. 18 is a flow chart of operations or processes of the network property value addition function block included in the data communication terminal of FIG. 16.
FIG. 19 is a diagram of one typical example of the transmission policy stored in the access policy storage unit included in the data communication terminal of FIG. 16.
FIG. 20 is a flow chart illustrative of a typical example of processes or operations shown by the data transmission permission decision function block included in the data communication terminal of FIG. 16.
FIG. 21 is a block diagram of an internal structure of the data communication terminal of the seventh embodiment in accordance with the present invention.
FIG. 22 is a diagram of one typical example of the transmission policy stored in the access policy storage unit included in the data communication terminal of FIG. 21.
FIG. 23 is a flow chart illustrative of a typical example of processes or operations shown by the data receiving permission decision function block included in the data communication terminal of FIG. 21.
FIG. 24 is a block diagram of an internal structure of the data communication terminal of the eighth embodiment in accordance with the present invention.
FIG. 25 is a flow chart illustrative of a typical example of processes or operations shown by the data receiving permission decision function block included in the data communication terminal of FIG. 24.
FIG. 26 is a block diagram of an internal structure of the data communication terminal of the ninth embodiment in accordance with the present invention.
FIG. 27 is a flow chart of operations or processes of the network property value changing function block included in the data communication terminal of FIG. 26.
FIG. 28 is a block diagram of an internal structure of the data communication terminal of the tenth embodiment in accordance with the present invention.
FIG. 29 is a flow chart of operations or processes of the access policy changing function block included in the data communication terminal of FIG. 28.
FIG. 30 is a block diagram of an internal structure of the data communication terminal of the eleventh embodiment in accordance with the present invention.
FIG. 31 is a flow chart of processes or operations shown by the data transmission permission decision function block of the data communication terminal of FIG. 30.
FIG. 32 is a block diagram of an internal structure of the data communication terminal of the twelfth embodiment in accordance with the present invention.
FIG. 33 is a flow chart illustrative of a typical example of processes or operations shown by the data receiving permission decision function block included in the data communication terminal of FIG. 32.

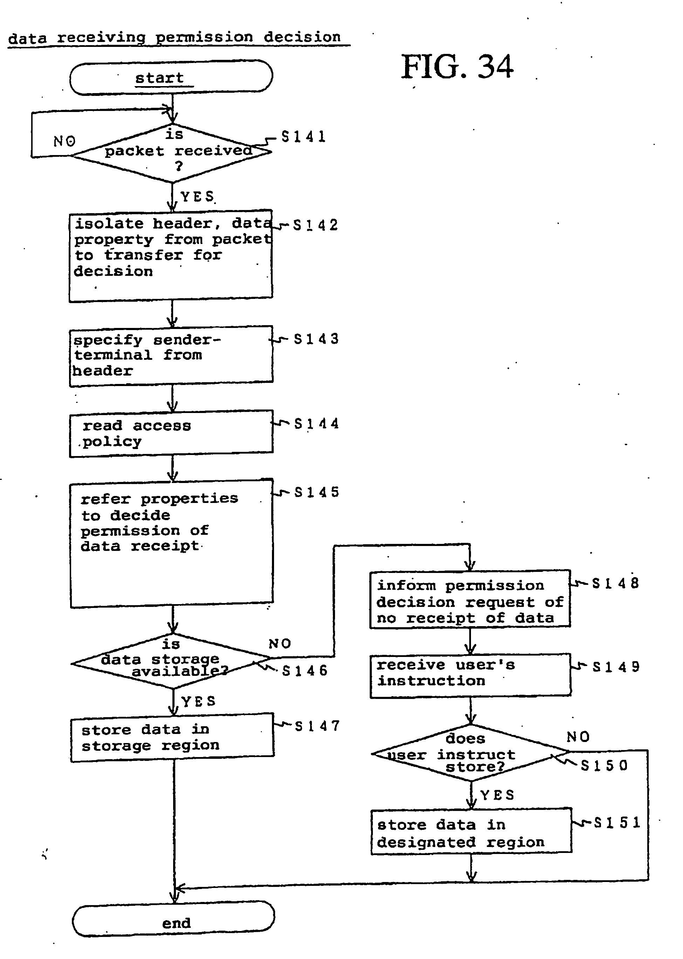

FIG. 34 is a flow chart illustrative of a typical example of processes or operations shown by the data receiving permission decision function block included in the data communication terminal of FIG. 24.
FIG. 35 is a block diagram of an internal structure of the data communication terminal of the fourteenth embodiment in accordance with the present invention.
FIG. 36 is a flow chart of operations of the data transmission permission decision function block included in the data communication terminal of FIG. 35.
FIG. 37 is a block diagram of an internal structure of the data communication terminal of the fifteenth embodiment in accordance with the present invention.
FIG. 38 is a flow chart of operations of the data transmission permission decision function block included in the data communication terminal of FIG. 37.
FIG. 39 is a block diagram of an internal structure of the data communication terminal of the sixteenth embodiment in accordance with the present invention.
FIG. 40 is a flow chart of operations or processes of the data transmission permission decision operation inhibiting function block included in the data communication terminal of FIG. 39.
FIG. 41 is a flow chart of operations of the data transmission permission decision function block included in the data communication terminal of FIG. 2.
FIG. 42 is a diagram of a structure of the transmission data packet free of the network property value involved in step S209 of FIG. 41.
FIG. 43 is a diagram of a typical example of the hierarchical network structure involved in the network property values in the twentieth embodiment in accordance with the present invention.
FIG. 44 is a diagram of a typical example of a transmission policy suitable for the hierarchical network structure of FIG. 43.
FIG. 45 is a block diagram of a data communication terminal in a twenty second embodiment in accordance with the present invention.
FIG. 46 is a block diagram of an internal structure of the data communication terminal of the twenty second embodiment in accordance with the present invention.

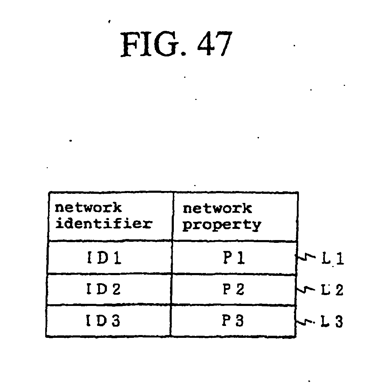

FIG. 47 is a diagram of a typical example of contents registered on the network property value table included in the data communication terminal of FIG. 46.
FIG. 48 is a flow chart of operations of the data transmission permission decision function block included in the data communication terminal of FIG. 46.
FIG. 49 is a flow chart illustrative of a typical example of processes or operations shown by the data receiving permission decision function block included in the data communication terminal of FIG. 46.

A first aspect of the present invention is a data communication system including : a plurality of network ; and a plurality of terminal being accessible to the plurality of network. Each of the plurality of network is assigned with each network property value. Each of the plurality of terminal further includes : at least an access policy for making a decision on permissibility for access to other terminal of the plurality of terminal than the each terminal, with reference to at least one of a first network property value assigned to a first network connected with the each terminal and a second network property value assigned to a second network connected with the other terminal, so that only when the access is permitted based on the access policy, then the terminal makes an access to the other terminal.

The first and second network property values may be either identical with or different each other, and the first and second networks are also either identical with or different each other.

The access policy may typically include at least a transmission policy for making a decision on permissibility for data transmission to the other terminal, with reference to at least one of the first and second network property values, so that only when the data transmission is permitted based on the transmission policy, then the terminal makes the data transmission to the other terminal.

The terminal may advantageously be adjusted that a data-accompanying network property value is added to data entered by user before the data accompanied with the data-accompanying network property value are stored in at least a data storage region of the terminal, to make the decision on permissibility for data transmission based on the transmission policy with reference to the first and second network property values and the data-accompanying network property value, so that only when the data transmission is permitted based on the transmission policy, then the terminal makes a transmission of the data accompanied with the data-accompanying network property value to the other terminal.

The terminal may advantageously be adjusted to allow user to set the data-accompanying network property value to be added to the entered data every time when the entered data are stored in the data storage region.

The terminal may advantageously be adjusted to set and change the data-accompanying network property value stored in the data storage region.

The terminal may advantageously be adjusted to change the access policy.

The access policy may advantageously further include, in addition to the transmission policy, at least a receiving policy for making a decision on permissibility for data receiving from the other terminal, with reference to at least one of the first and second network property values, so that only when the data receiving is permitted based on the receiving policy, then the terminal makes the data receiving from the other terminal.

The terminal may advantageously be adjusted that a data-accompanying network property value is added to data entered by user before the data accompanied with the data-accompanying network property value are stored in at least a data storage region of the terminal, to make the decision on permissibility for at least one of data transmission and data receiving, based on at least one of the transmission policy and the receiving policy, with reference to the first and second network property values and the data-accompanying network property value, so that only when the data transmission is permitted based on the transmission policy, then the terminal makes a transmission of the data accompanied with the data-accompanying network property value to the other terminal, as well as only when the data receiving is permitted based on the receiving policy, then the terminal makes a receipt of the data accompanied with the data-accompanying network property value from the other terminal.

The terminal may advantageously be adjusted to allow an user's instruction to set the data-accompanying network property value to be added to the entered data every time when the entered data are stored in the data storage region.

The terminal may advantageously be adjusted to set and change the data-accompanying network property value stored in the data storage region.

The terminal may advantageously be adjusted to change the receiving policy.

The data storage region may advantageously comprise a plurality of data storage regions each of which is assigned with a storage-region-accompanying network property value, to make the decision on permissibility for data transmission based on the transmission policy with reference to the first and second network property values; and the storage-region-accompanying network property value, so that only when the data transmission is permitted based on the transmission policy, then the terminal makes a transmission of the data accompanied with the storage-region-accompanying network property value to the other terminal.

The terminal may advantageously be adjusted to set and change the storage-region-accompanying network property value stored in the data storage region.

The terminal may advantageously be adjusted to change the transmission policy.

The data storage region may advantageously comprise a plurality of data storage region, each of which is assigned with a storage-region-accompanying network property value, to make the decision on permissibility for at least one of data transmission and data receiving, based on at least one of the transmission policy and the receiving policy, with reference to the first and second network property values and the storage-region-accompanying network property value, so that only when the data transmission is permitted based on the transmission policy, then the terminal makes a transmission of the data accompanied with the storage-region-accompanying network property value to the other terminal, as well as only when the data receiving is permitted based on the receiving policy, then the terminal makes a receipt of the data from the other terminal.

The terminal may advantageously be adjusted to set and change the storage-region-accompanying network property value stored in each of the plurality of data storage region.

The terminal may advantageously be adjusted to change the receiving policy.

The terminal may advantageously be adjusted that one of the plurality of data storage region is selected in accordance with an user's designation for allowing the selected one of the plurality of data storage region to store the received data.

The terminal may advantageously be adjusted to inform user that the data receiving is not permitted based on the receiving policy.

The terminal may advantageously be adjusted that if the data receiving is not permitted based on the receiving policy, then the decision on permissibility of data receiving is made in accordance with an user's instruction.

The terminal may advantageously be adjusted that if the user's instruction is to permit storing the received data, then a temporary permission for receiving data is added to the receiving policy in a predetermined time period.

The terminal may advantageously be adjusted that if the data receiving is permitted based on the receiving policy but the plurality of data storage region does not include any data storage region assigned with the same network property value as a network property value added to the received data, then a decision on permissibility for storing the received data into any one of the plurality of data storage region is made in accordance with an user's instruction.

If the user's instruction is to permit storing the received data, then a selection of one of the plurality of data storing regions for storing the received data may advantageously be made in accordance with an user's instruction.

The terminal may advantageously be adjusted that if the user's instruction is to permit storing the received data, then a temporary permission for receiving data is added to the receiving policy in a predetermined time period.

The terminal may advantageously be adjusted to inform user that the data transmission is not permitted based on the transmission policy.

The terminal may advantageously be adjusted that if the data transmission is not permitted based on the transmission policy, then the decision on permissibility of data transmission is made in accordance with an user's instruction.

The terminal may advantageously be adjusted that if the user's instruction is to permit transmitting the data, then a temporary permission for transmitting data is added to the transmission policy in a predetermined time period.

The terminal may advantageously be adjusted to allow an entered user's instruction to make invalid the decision on permissibility for access based on the access policy.

The terminal may advantageously be adjusted that if the each terminal is connected to a network assigned with the same network property value as of the other terminal, then the data only are transmitted to the other terminal without being accompanied the data-accompanying network property value.

The network property value may advantageously include identifiers which identify a private network and a public network respectively.

The network property value may advantageously include identifiers which identify different organizations respectively.

The network property value may advantageously include identifiers which identify respective node points included in a hierarchical network structure.

The network property value may advantageously include identifiers which do not identify any network.

Each of the plurality of network may advantageously be assigned with each network identifier which uniquely identifies the each network, and the each terminal may advantageously be adjusted to specify the other terminal, to which the each terminal makes an access, based on a terminal address which includes the each network identifier.

The terminal may advantageously be adjusted to hold respective correspondence between the each network identifier and the each network property value assigned to a network which is also assigned to the each network identifier for obtaining a network identifier assigned to a network connected to the other terminal, to which the each terminal makes an access, based on a terminal address of the other terminal, to specify a corresponding network property value to the obtained network identifier.

The terminal may advantageously include at least one file system which provides an additional data storage region.

The terminal may advantageously include at least one hard disk which provides an additional data storage region.

A second aspect of the present invention is a terminal accessible though a plurality of network assigned with each network property value to other terminal for data communication. The terminal includes : an access policy storing unit for storing at least an access policy ; and an access permission decision function block for making a decision on permissibility for access to the other terminal, with reference to at least one of a first network property value assigned to a first network connected with the terminal and a second network property value assigned to a second network connected with the other terminal, so that only when the access is permitted based on the access policy, then the terminal makes an access to the other terminal.

The first and second network property values may be either identical with or different each other, and the first and second networks are also either identical with or different each other.

The access policy may advantageously include at least a transmission policy, and the access permission decision function block includes a data transmission permission decision function block which makes a decision on permissibility for data transmission to the other terminal, with reference to at least one of the first and second network property values, so that only when the data transmission is permitted based on the transmission policy, then the terminal makes the data transmission to the other terminal.

The terminal may further include : a network property value adding function block for adding a data-accompanying network property value to data entered by user ; and at least a data storage region for storing the data accompanied with the data-accompanying network property value. The data transmission permission decision function block may advantageously make the decision on permissibility for data transmission based on the transmission policy stored in the access policy storing unit with reference to the first and second network property values and the data-accompanying network property value, so that only when the data transmission is permitted based on the transmission policy, then the terminal makes a transmission of the data accompanied with the data-accompanying network property value to the other terminal.

The network property value adding function block may advantageously be adjusted to allow user to set the data-accompanying network property value to be added to the entered data every time when the entered data are stored in the data storage region.

The terminal may advantageously and further include a network property value changing function block for setting and changing the data-accompanying network property value stored in the data storage region.

The terminal may advantageously and further include an access policy changing function block for changing the access policy stored in the access policy storing unit.

The terminal may advantageously and further include a data receiving permission decision function block. The access policy storing unit may advantageously and further store, in addition to the transmission policy, at least a receiving policy, for allowing the data receiving permission decision function block to make a decision on permissibility for data receiving from the other terminal, with reference to at least one of the first and second network property values, so that only when the data receiving is permitted based on the receiving policy, then the terminal makes the data receiving from the other terminal.

The network property value adding function block may advantageously be adjusted to add a data-accompanying network property value to data entered by user before the data storage region stores the data accompanied with the data-accompanying network property value, to allow at least one of the data transmission permission decision function block and the data receiving permission decision function block to make the decision on permissibility for at least one of data transmission and data receiving, based on at least one of the transmission policy and the receiving policy, with reference to the first and second network property values and the data-accompanying network property value, so that only when the data transmission is permitted based on the transmission policy, then the terminal makes a transmission of the data accompanied with the data-accompanying network property value to the other terminal, as well as only when the data receiving is permitted based on the receiving policy, then the terminal makes a receipt of the data accompanied with the data-accompanying network property value from the other terminal.

The network property value adding function block, may advantageously be adjusted to allow an user's instruction to set the data-accompanying network property value to be added to the entered data every time when the entered data are stored in the data storage region.

The terminal may advantageously and further include an network property value changing function block for setting and changing the data-accompanying network property value stored in the data storage region.

The may advantageously and further include ane access, policy changing function block for changing at least one of the transmission policy and the receiving policy.

The data storage region may advantageously comprise a plurality of data storage region, each of which is assigned with a storage-region-accompanying network property value, to allow the data transmission permission decision function block to make the decision on permissibility for data transmission based on the transmission policy with reference to the first and second network property values and the storage-region-accompanying network property value, so that only when the data transmission is permitted based on the transmission policy, then the terminal makes a transmission of the data accompanied with the storage-region-accompanying network property value to the other terminal.

The terminal may advantageously and further include a network property value changing function block for setting and changing the storage-region-accompanying network property value stored in the data storage region.

The terminal may advantageously and further include an access policy changing function block for changing the transmission policy.

The data storage region may advantageously comprise a plurality of data storage region, each of which is assigned with a storage-region-accompanying network property value, to allow at least one of the data transmission permission decision function block and the data receiving permission decision function block to make the decision on permissibility for at least one of data transmission and data receiving, based on at least one of the transmission policy and the receiving policy, with reference to the first and second network property values and the storage-region-accompanying network property value, so that only when the data transmission is permitted based on the transmission policy, then the terminal makes a transmission of the data accompanied with the storage-region-accompanying network property value to the other terminal, as well as only when the data receiving is permitted based on the receiving policy, then the terminal makes a receipt of the data from the other terminal.

The terminal may advantageously and further including network property value changing function block for setting and changing the storage-region-accompanying network property value stored in each of the plurality of data storage regions.

The terminal may advantageously and further include an access policy changing function block for changing the receiving Policy.

The terminal may advantageously and further include a data storage region selecting function block for selecting one of the plurality of data storage region in accordance with an user's designation for allowing the selected one of the plurality of data storage regions to store the received data.

The terminal may advantageously and further include an alarm function block for informing user that the data receiving is not permitted based on the receiving policy.

The terminal may advantageously and further include a data receiving permission decision request function block which is adjusted that if the data receiving is not permitted based on the receiving policy, then the decision on permissibility of data receiving is made in accordance with an user's instruction.

The data receiving permission decision request function block may advantageously be adjusted that if the user's instruction is to permit storing the received data, then a temporary permission for receiving data is added to the receiving policy in a predetermined time period.

The terminal may advantageously and further include a data storage region selecting function block for making a decision on permissibility for storing the received data into any one of the plurality of data storage regions in accordance with an user's instruction, if the data receiving is permitted based on the receiving policy but the plurality of data storage region does not include any data storage region assigned with the same network property value as a network property value added to the received data.

If the user's instruction is to permit storing the received data, then the data storage region selecting function block may advantageously select one of the plurality of data storing regions for storing the received data in accordance with an user's instruction.

The terminal may advantageously and further include a data receiving permission decision request function block adds a temporary permission for receiving data to the receiving policy in a predetermined time period if the user's instruction is to permit storing the received data.

The terminal may advantageously and further include an alarm function block for informing user that the data transmission is not permitted based on the transmission policy.

The terminal may advantageously and further include a data transmission permission decision request function block for making the decision on permissibility of data transmission in accordance with an user's instruction, if the data transmission is not permitted based on the transmission policy.

The data transmission permission decision request function block may advantageously add a temporary permission for transmitting data to the transmission policy in a predetermined time period, if the user's instruction is to permit transmitting the data.

The terminal may advantageously and further include an access permission decision operation inhibiting function block for making invalid the decision on permissibility for access based on the access policy in accordance with an entered user's instruction.

The terminal may advantageously and further include a network property value table for holding respective correspondence between each network identifier and each network property value assigned to a network which is also assigned to the each network identifier for the access permission decision function block to obtain a network identifier assigned to a network connected to the other terminal, to which the each terminal makes an access, based on a terminal address of the other terminal, to specify a corresponding network property value to the obtained network identifier.

The terminal may advantageously include at least one file terminal which provides an additional data storage region.

The terminal may advantageously include at least one hard disk which provides an additional data storage region.

A third aspect of the present invention is a method for data communication between a plurality of terminal being accessible through a plurality of networks. The method includes: assigning each network property value to each of the plurality of networks; setting at least an access policy; making a decision on permissibility for access from a terminal to other terminal of the plurality of terminal, with reference to at least one of a first network property value assigned to a first network connected with the each terminal and a second network property value assigned to a second network connected with the other terminal ; and making an access to the other terminal only when the access is permitted based on the access policy.

The first and second network property values may be either identical with or different each other, and the first and second networks are also either identical with or different each other.

The access policy may advantageously include at least a transmission policy for making a decision on permissibility for data transmission to the other terminal, with reference to at least one of the first and second network property values, so that only when the data transmission is permitted based on the transmission policy, then the terminal makes the data transmission to the other terminal.

A data-accompanying network property value may advantageously be added to data entered by user before the data accompanied with the data-accompanying network property value are stored in at least a data storage region of the terminal, to make the decision on permissibility for data transmission based on the transmission policy with reference to the first and second network property values and the data-accompanying network property value, so that only when the data transmission is permitted based on the transmission, policy, then the terminal makes a transmission of the data accompanied with the data-accompanying network property value to the other terminal.

The method may advantageously and further including : allowing user to set the data-accompanying network property value to be added to the entered data every time when the entered data are stored in the data storage region.

The method may advantageously and further including : setting and changing the data-accompanying network property value stored in the data storage region.

The method may advantageously and further including : changing the access policy.

The access policy may advantageously further include, in addition to the transmission policy, at least a receiving policy for making a decision on permissibility for data receiving from the other terminal, with reference to at least one of the first and second network property values, so that only when the data receiving is permitted based on the receiving policy, then the terminal makes the data receiving from the other terminal.

A data-accompanying network property value may advantageously be added to data entered by user before the data accompanied with the data-accompanying network property value are stored in at least a data storage region of the terminal, to make the decision on permissibility for at least one of data transmission and data receiving, based on at least one of the transmission policy and the receiving policy, with reference to the first and second network property values and the data-accompanying network property value, so that only when the data transmission is permitted based on the transmission policy, then the terminal makes a transmission of the data accompanied with the data-accompanying network property value to the other terminal, as well as only when the data receiving is permitted based on the receiving policy, then the terminal makes a receipt of the data accompanied with the data-accompanying network property value from the other terminal.

The method may advantageously and further include : allowing an user's instruction to set the data-accompanying network property value to be added to the entered data every time when the entered data are stored in the data storage region.

The method may advantageously and further including : setting and changing the data-accompanying network property value stored in the data storage region.

The method may advantageously and further include : changing the receiving policy.

The method may advantageously and further include : assigning each storage-region-accompanying, network property value a plurality of data storage regions, to make the decision on permissibility for data transmission based on the transmission policy with reference to the first and second network property values and the storage-region-accompanying network property value, so that only when the data transmission is permitted based on the transmission policy, then the terminal makes a transmission of the data accompanied with the storage-region-accompanying network property value to the other terminal.

The method may advantageously and further include : setting and changing the storage-region-accompanying network property value stored in the data storage region.

The method may advantageously and further include : changing the transmission policy.

The method may advantageously and further include : assigning each storage-region-accompanying network property value to each of a plurality of data storage region, to make the decision on permissibility for at least one of data transmission and data receiving, based on at least one of the transmission policy and the receiving policy, with reference to the first and second network property values and the storage-region-accompanying network property value, so that only when the data transmission is permitted based on the transmission policy, then the terminal makes a transmission of the data accompanied with the storage region-accompanying network property value to the other terminal, as well as only when the data receiving is permitted based on the receiving policy, then the terminal makes a receipt of the data from the other terminal.

The method may advantageously and further include : setting and changing the storage-region-accompanying network property value stored in each of the plurality of data storage region.

The method may advantageously and further include changing the receiving policy.

One of the plurality of data storage regions may advantageously be selected in accordance with an user's designation for allowing the selected one of the plurality of data storage region to store the received data.

The method may advantageously and further include informing user that the data receiving is not permitted based on the receiving policy.

If the data receiving is not permitted based on the receiving policy, then the decision on permissibility of data receiving, may advantageously be made in accordance with an user's instruction.

If the user's instruction is to permit staring the received data, then a temporary permission for receiving data may advantageously be added to the receiving policy in a predetermined time period.

If the data receiving is permitted based on the receiving policy but the plurality of data storage regions does not include any data storage region assigned with the same network property value as a network property value added to the received data, then a decision on permissibility for storing the received data into any one of the plurality of data storage regions may advantageously be made in accordance with an user's instruction.

If the user's instruction is to permit storing the received data, then a selection of one of the plurality of data storing regions for storing the received data may advantageously be made in accordance with an user's instruction.

If the user's instruction is to permit storing the received data, then a temporary permission for receiving data may advantageously be added to the receiving policy in a predetermined time period.

The method may advantageously and further include : informing user that the data transmission is not permitted based on the transmission policy.

If the data transmission is not permitted based on the transmission policy, then the decision on permissibility of data transmission may advantageously be made in accordance with an user's instruction.

If the user's instruction is to permit transmitting the data, then a temporary permission for transmitting data may advantageously be added to the transmission policy in a predetermined time period.

The method may advantageously and further include: allowing an entered user's instruction to make invalid the decision on permissibility for access based on the access policy. If the each terminal is connected to a network assigned with the same network property value as of the other terminal, then the data only may advantageously be transmitted to the other terminal without being accompanied the data-accompanying network property value.

The network property value may advantageously include identifiers which identify a private network and a public network respectively.

The network property value may advantageously include identifiers which identify different organizations respectively.

The network property value may advantageously include identifiers which identify respective node points included in a hierarchical network structure.

The network property value may advantageously include identifiers which do not identify any network.

Each of the plurality of network may advantageously be assigned with each network identifier which uniquely identifies the each network, to specify the other terminal, to which the each terminal makes an access, based on a terminal address which includes the each network identifier.

The method may advantageously and further include : holding respective correspondence between the each network identifier and the each network property value assigned to a network which is also assigned to the each network identifier for obtaining a network identifier assigned to a network connected to the other terminal, to which the each terminal makes an access, based on a terminal address of the other terminal, to specify a corresponding network property value to the obtained network identifier.

The following embodiments are typical examples for practicing the foregoing aspects of the present invention. Although the subject matters of the present invention have been described in details, the following additional descriptions in one or more typical preferred embodiments or examples will be made with reference to the drawings for making it easy to understand the typical modes for practicing the foregoing aspects of the present invention.

### FIRST EMBODIMENT :

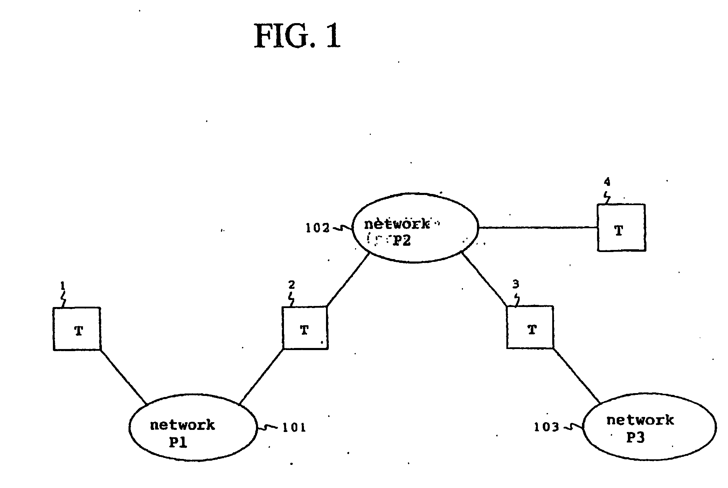

A first embodiment according to the present invention will be described in detail with reference to the drawings. FIG. 1 is a block diagram of a data communication system in a first embodiment in accordance with the present invention. The data communication system in accordance with the present invention may include a plurality of different data communication networks and a plurality of data communication terminals. As one example, it will be assumed that the data communication system includes three different data communication networks 101, 102 and 103 and four data communication terminals 1, 2, 3 and 4. The data communication network 101 is assigned with a property value P1. The data communication network 102 is assigned with a property value P2. The data communication network 103 is assigned with a property value P3. Those property values P1, P2 and P3 may be either different from each other or identical with each other. Those property values P1, P2 and P3 are identifiers which identify the kinds of the networks.

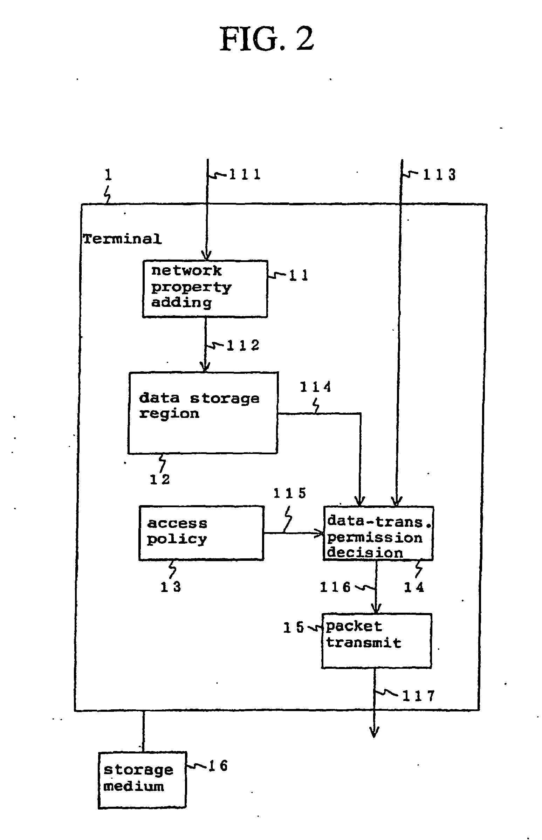

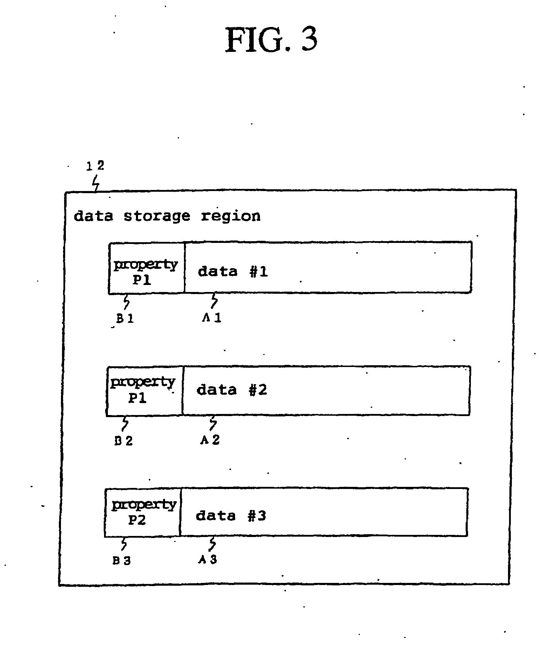

FIG. 2 is a block diagram of an internal structure of each of the fourth data communication terminals included in the system of FIG. 1. A data communication terminal 1 may include a network property value addition function block 11, a data storage region 12, an access policy storage unit 13, a data transmission permission decision function block 14, a packet transmission function block 15, and a storage medium 16 for storing one or more programs to be executed by the above respective function blocks 11, 14 and 15. The storage medium 16 may be realized by any available storage means such as read only memory or integrated circuit memory. The network property value addition function block 11 is provided for adding a determined network property value to data 111 which have been entered by user of the data communication terminal 1 for allowing the data 112 together with the added network property value to be stored in the data storage region 12. The data storage region 12 is provided for storing the data and the network property values added by the network property value addition function block 11. FIG. 3 is a block diagram of typical examples of data structure to be stored in the data storage region in the data communication terminal of FIG. 2. Three data A1, A2 and A3 are stored in the data storage region 12. The data A1 are assigned with the network property value P1(B1). The data A2 are assigned with the network property value P2(B2). The data A3 are assigned with the network property value P3(B3).

With reference back to FIG. 2, the access policy storage unit 13 is provided for storing an access policy or a transmission policy for allowing a decision, based on the transmission policy, of the permission of transmission of the data stored in the data storage region 12 to other data communication terminals 2, 3 and 4 over the data communication network 101.

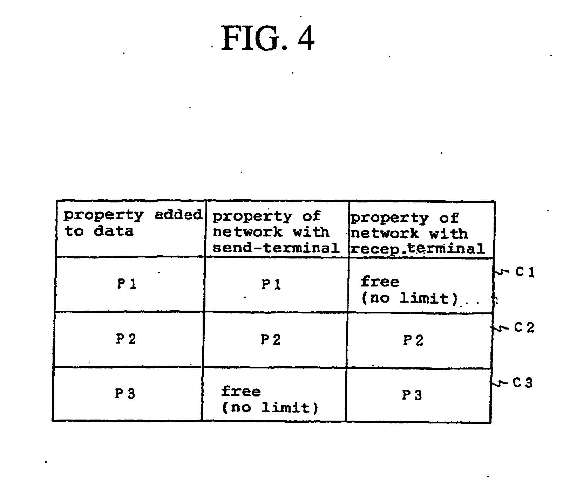

FIG. 4 is a diagram of one typical example of the transmission policy stored in the access policy storage unit included in the data communication terminal of FIG. 2. The data communication terminal is the data communication terminal 1 shown in FIG 1. The transmission policy comprises three entries C1, C2 and C3. The contents in the entry C1 mean that in case of the network property value P1 added to the data and stored in the data storage region 12, if the property value assigned to the data communication network having the current connection with the present data communication terminal 1 as "sender" is P1, then the data transmission would be permitted to any data communication terminals as "receiver" over all of the data communication networks. The contents in the entry C2 mean that in case of the network property value P2 added to the data and stored in the data storage region 12, if the property value assigned to the data communication network having the current connection with the present data communication terminal 1 as "sender" is P2, then the data transmission would be permitted to any data communication terminals as "receiver" but only over the data communication network assigned to the network property value P2. Namely, the data transmission would be permitted to any data communication terminals as "receiver" over the same data communication network, to which the present data communication terminal 1 as "sender" is currently connected. The contents in the entry C3 mean that in case of the network property value P3 added to the data and stored in the data storage region 12, then independent from the property value assigned to the data communication network having the current connection with the present data communication terminal 1 as "sender", the data transmission would be permitted to any data communication terminals as "receiver" but only over the data communication network assigned to the network property value P3. Namely, the data transmission would be permitted to any data communication terminals as "receiver" but only over the data communication network assigned to the property value P3, regardless of the issue of current network connection between the present data communication terminal 1 as "sender" and any one of the data communication networks. The above presented contents are mere examples but should not be limited thereto.

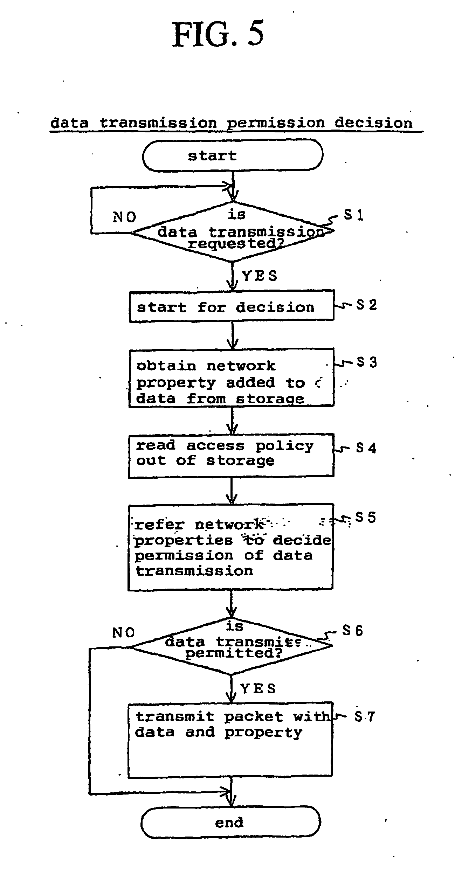

FIG. 5 is a flow chart illustrative of a typical example of processes or operations shown by the data transmission permission decision function block included in the data communication terminal of FIG 2. The processes or operations shown by the data transmission permission decision function block 14 are implemented by execution of the program from the storage medium 16. In steps S1 and S2, the data transmission permission decision function block 14 is started upon receipt of a data transmission request 113. In step S3, the data transmission permission decision function block 14 retrieves the transmission data from the data storage region 12 and obtains the network property value added to the retrieved transmission data 114. In step S4, the data transmission permission decision function block 14 reads out the transmission policy 115 from the access policy storage unit 13. In step S5, the data transmission permission decision function block 14 refers the network property value assigned to the data communication network connected with one or more data communication terminals, to which the data transmission is intended to be made, and also refers the network property value assigned to the data communication network connected with the present data communication terminal 1, so that the data transmission permission decision function block 14 makes a decision on the permissibility of the data transmission based on the referred network property values. In step S6, if the data transmission permission decision function block 14 decides that the data transmission is permitted based on the transmission policy, then in step S7 the data transmission permission decision function block 14 transfers the transmission data 116 along with the network property value added to the transmission data to the packet transmission function block 15 for requesting the packet transmission function block 15 to transmit the data.

If the data communication terminal as "sender", from which the data are transmitted, is connected to plural data communication networks, the data transmission permission decision function block 14 refers the network property value assigned to the data communication network, via which the data transmission is intended to be made. If the data communication terminal as "receiver", to which the data are transmitted, is connected to plural data communication networks, the data transmission permission decision function block 14 refers the network property value assigned to the data communication network, via which the data transmission as "receiver" is intended to receive the transmitted data.

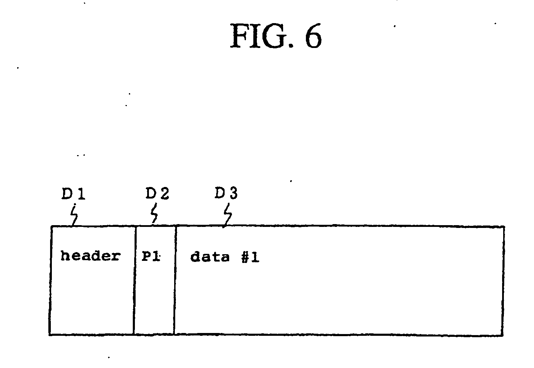

FIG. 6 is a diagram of one typical example of transmission packet to be transmitted onto the data communication network by the packet transmission function block included in the data communication terminal of FIG. 2. In this typical example, a transmission data packet 117 shown in FIG. 2 is transmitted onto the data communication network 101 assigned with the network property value P1. The transmission data packet 117 comprises a header D1 for controlling the transmission, the network property value D2 of the transmission data, and transmission data (data #1) D3. The position of the network property value D2 of the transmission data should not be limited to as shown in FIG 6. Whereas the above descriptions of the internal structure of the data communication terminal has been made with reference to the data communication terminal 1, other data communication terminals 2, 3 and 4 have the same internal structures.

### SECOND EMBODIMENT :

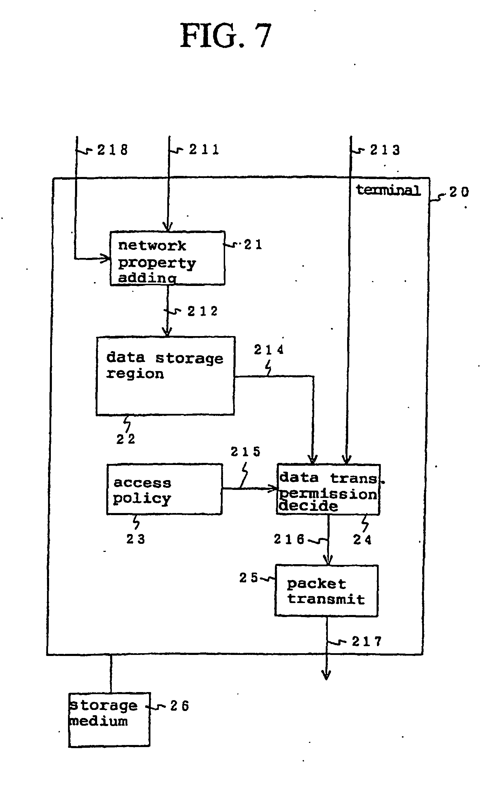

A second embodiment according to the present invention will be described in detail with reference to the drawings. The second embodiment is applicable to the data communication system shown in FIG 1 and described in the first embodiment. FIG. 7 is a block diagram of an internal structure of the data communication terminal of the second embodiment in accordance with the present invention. A data communication terminal 20 may include a network property value addition function block 21, a data storage region 22, an access policy storage unit 23, a data transmission permission decision function block 24, a packet transmission function block 25, and a storage medium 26 for storing one or more programs to be executed by the above respective function blocks. The storage medium 26 may be realized by any available storage means such as read only memory or integrated circuit memory.

In this embodiment, the network property value addition function block 21 and its interface with user are different from the first embodiment. The network property value addition function block 21 is provided for adding a user-designated network property value to data 211 which have been entered by user of the data communication terminal 20 for allowing the data 212 together with the added network property value to be stored in the data storage region 22.

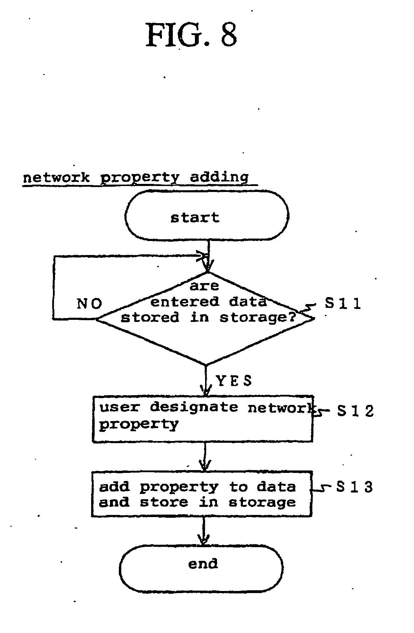

FIG. 8 is a flow chart of operations or processes of the network property value addition function block included in the data communication terminal of FIG. 7. The operations or processes of the network property value addition function block 21 may be implemented by execution of the program from the storage, medium 26. In step S11, the network property value addition function block 21 receives an entry of the data from user with a request for storing the data into the data storage region 22. In step S 12, the network property value addition function block 21 also receives a designation 218 of the network property value from the user. In step S13, the network property value addition function block 21 adds the user-designated network property value to the data, and sends the data 212 with the user-designated network property value to the data storage region 22 for storing the same. The data storage region 22 stores the data and the network property values added by the network property value addition function block 21. The access policy storage unit 23 stores an access policy or a transmission policy for allowing a decision, based on the transmission policy, of the permission of transmission of the data stored in the data storage region 22 to other data communication terminals over the data communication networks.

The processes or operations shown by the data transmission permission decision function block 24 are implemented by execution of the program from the storage medium 26 as shown in FIG. 5 and described in the first embodiment. With reference back to FIG. 5, in steps S1 and S2, the data transmission permission decision function block 24 is started upon receipt of a data transmission request 213. In step S3, the data transmission permission decision function block 24 retrieves the transmission data from the data storage region 22 and obtains the network property value added to the retrieved transmission data 214. In step S4, the data transmission permission decision function block 24 reads out the transmission policy 215 from the access policy storage unit 23. In step S5, the data transmission permission decision function block 24 refers the network property value assigned to the data communication network connected with one or more data communication terminals, to which the data transmission is intended to be made, and also refers the network property value assigned to the data communication network connected with the present data communication terminal 20, so that the data transmission permission decision function block 24 makes a decision on the permissibility of the data transmission based on the referred network property values. In step S6, if the data transmission permission decision function block 24 decides that the data transmission is permitted based on the transmission policy, then in step S7 the data transmission permission decision function block 24 transfers the transmission data 216 along with the network property value added to the transmission data to the packet transmission function block 25 for requesting the packet transmission function block 25 to transmit the data and the header with the network property value. A transmission data packet 217 is transmitted by the packet transmission function block 25 onto the data communication network assigned with the network property value of the data.

### THIRD EMBODIMENT:

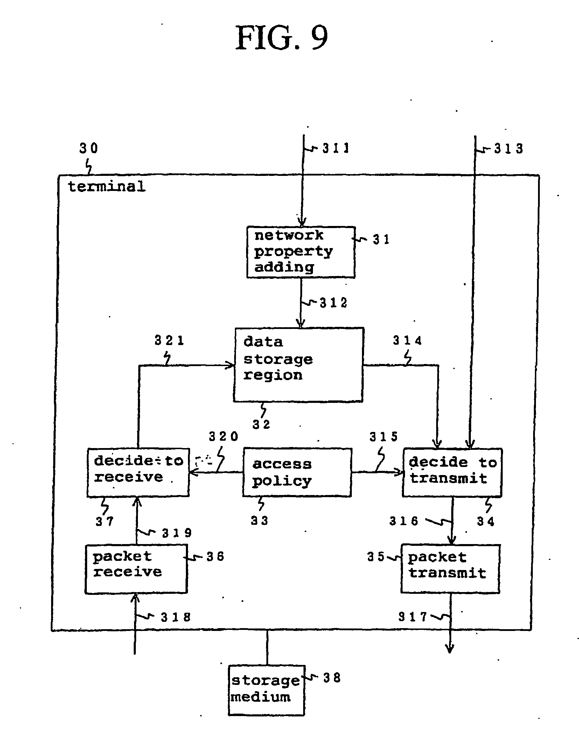

A third embodiment according to the present invention will be described in detail with reference to the drawings. The third embodiment is applicable to the data communication system shown in FIG. 1 and described in the first embodiment. FIG 9 is a block diagram of an internal structure of the data communication terminal of the third embodiment in accordance with the present invention. A data communication terminal 30 may include a network property value addition function block 31, a data storage region 32, an access policy storage unit 33, a data transmission permission decision function block 34, a packet transmission function block 35, a packet receiving function block 36, a data receiving permission decision function block 37 and a storage medium 38 for storing one or more programs to be executed by the above respective function blocks. The storage medium 38 may be realized by any available storage means such as read only memory or integrated circuit memory.

In this embodiment, additional provisions of the packet receiving function block 36 and the data receiving permission decision function block 37 as well as a receiving policy being stored in the access policy storage unit 33 in addition to the transmission policy are different from the first embodiment. The network property value addition function block 31 is provided for adding a determined network property value to data 311 which have been entered by user of the data communication terminal 30 for allowing the data 312 together with the added network property value to be stored in the data storage region 32. The data storage region 32 stores the data and the network property values added by the network property value addition function block 31. The access policy storage unit 33 stores not only a transmission policy but also a receiving policy. The transmission policy allows a decision, based on the transmission policy, of the permission of transmission of the data stored in the data storage region 32 to other data communication terminals over the data communication networks. The receiving policy allows a decision, based on the receiving policy, of the permission of receipt of the data from other data communication terminals over the data communication networks.

The processes or operations shown by the data transmission permission decision function block 34 are implemented by execution of the program from the storage medium 38 as shown in FIG. 5 and described in the first embodiment. With reference back to FIG. 5, in steps S1 and S2, the data transmission permission decision function block 34 is started upon receipt of a data transmission request 313. In step S3, the data transmission permission decision function block 34 retrieves the transmission data from the data storage region 32 and obtains the network property value added to the retrieved transmission data 314. In step S4, the data transmission permission decision function block 34 reads out the transmission policy 315 from the access policy storage unit 33. In step S5, the data transmission permission decision function block 34 refers the network property value assigned to the data communication network connected with one or more data communication terminals, to which the data transmission is intended to be made, and also refers the network property value assigned to the data communication network connected with the present data communication terminal 30, so that the data transmission permission decision function block 34 makes a decision on the permissibility of the data transmission based on the referred network property values. In step S6, if the data transmission permission decision function block 34 decides that the data transmission is permitted based on the transmission policy, then in step S7 the data transmission permission decision function block 34 transfers the transmission data 316 along with the network property value added to the transmission data to the packet transmission function block 35 for requesting the packet transmission function block 35 to transmit the data and the header with the network property value. A transmission data packet 317 is transmitted by the packet transmission function block 35 onto the data communication network assigned with the network property value of the data.

If the data communication terminal as "sender", from which the data are transmitted, is connected to plural data communication networks, the data transmission permission decision function block 34 refers the network property value assigned to the data communication network, via which the data transmission is intended to be made. If the data communication terminal as "receiver", to which the data are transmitted, is connected to plural data communication networks, the data transmission permission decision function block 34 refers the network property value assigned to the data communication network, via which the data transmission as "receiver" is intended to receive the transmitted data.

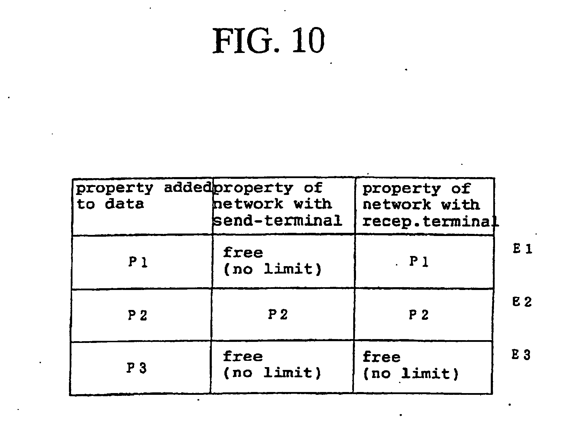

FIG. 10 is a diagram of one typical example of the receiving policy stored in the access policy storage unit included in the data communication terminal of FIG. 9. The receiving policy comprises three entries E1, E2 and E3. The contents in the entry E1 mean that in case of the network property value P1 added to the data as transmitted, then independent from the property value assigned to the data communication network having the current connection with the present data communication terminal 30 as "receiver", the data receiving would be permitted from any data communication terminals as "sender" but only over the data communication network assigned to the network property value P1. Namely, the data receiving would be permitted from any data communication terminals as "sender" but only over the data communication network assigned to the property value P1, regardless of the issue of current network connection between the present data communication terminal 30 as "receiver" and any one of the data communication networks. The contents in the entry E2 mean that in case of the network property value P2 added to the data as transmitted, if the property value assigned to the data communication network having the current connection with the present data communication terminal 30 as "receiver" is P2, then the data receiving would be permitted from any data communication terminals as "sender" but only over the data communication network assigned to the network property value P2. Namely, the data receiving would be permitted from any data communication terminals as "sender" over the same data communication network, to which the present data communication terminal 30 as "receiver" is currently connected. The contents in the entry E3 mean that in case of the network property value P3 added to the data as transmitted, then independent from the property value assigned to the data communication network having the current connection with the present data communication terminal 30 as "receiver", the data receiving would be permitted to any data communication terminals as "sender" over all of the data communication networks. The above presented contents are mere examples but should not be limited thereto

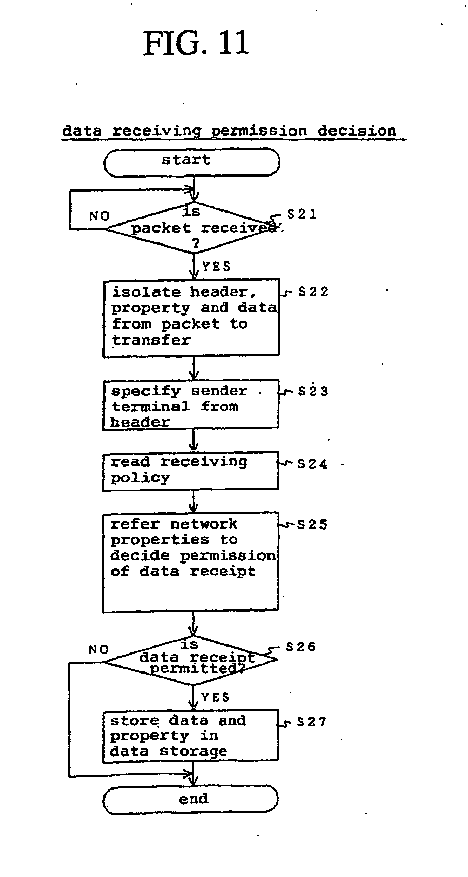

FIG. 11 is a flow chart illustrative of a typical example of processes or operations shown by the data receiving permission decision function block included in the data communication terminal of FIG. 9. The processes or operations shown by the data receiving permission decision function block 37 are implemented by execution of the program from the storage medium 38. In step S21, the packet receiving function block 36 receives a packet 318. In step S22, the packet receiving function block 36 isolates a transmission control header, a network property value and the data from the received packet 318. The packet receiving function block 36 sends a set 319 of the isolated transmission control header, the network property value and the data to the data receiving permission decision function block 37. In step S23, the data receiving permission decision function block 37 specifies a "sender" data communication terminal based on the received transmission control header. In step S24, the data receiving permission decision function block 37 reads out the receiving policy 320 from the access policy storage unit 33. In step S25, the data receiving permission decision function block 37 refers a network property value which is assigned to the data communication network connected with the "sender" data communication terminal, and also refers the network property value received from the packet receiving function block 36, so that the data receiving permission decision function block 37 makes a decision on the permissibility of the data receiving with reference to the above both network property values. In step S26, if the data receiving permission decision function block 37 decides that the data receiving is permitted based on the receiving policy, then in step S27, the data receiving permission decision function block 37 sends the received data 321 together with the network property value of the received data to the data storage region 32.

If the sender data communication terminal as "sender", from which the data are transmitted, is connected to plural data communication networks, the data transmission receiving decision function block 37 refers the network property value assigned to the data communication network, via which the data transmission was made. If the present data communication terminal as "receiver", to which the data were transmitted, is connected to plural data communication networks, the data transmission receiving decision function block 37 refers the network property value assigned to the data communication network, via which the present data communication terminal as "receiver" receives the transmitted data. The difference of this embodiment from the first embodiment may also be applicable to the second embodiment, so as to modify the data communication terminal of the second embodiment in accordance with this third embodiment

### FOURTH EMBODIMENT:

A fourth embodiment according to the present invention will be described in detail with reference to the drawings. The fourth embodiment is applicable to the data communication system shown in FIG. 1 and described in the first embodiment. FIG.. 12 is a block diagram of an internal structure of the data communication terminal of the fourth embodiment in accordance with the present invention. A data communication terminal 40 may include a network property value addition function block 41, a data storage region 42, an access policy storage unit 43, a data transmission permission decision function block 44, a packet transmission function block 45, a packet receiving function block 46, a data receiving permission decisions function block 47, a network property value changing function block 48 and a storage medium 49 for storing one or more programs to be executed by the above respective function blocks. The storage medium 49 may be realized by any available storage means such as read only memory or integrated circuit memory.

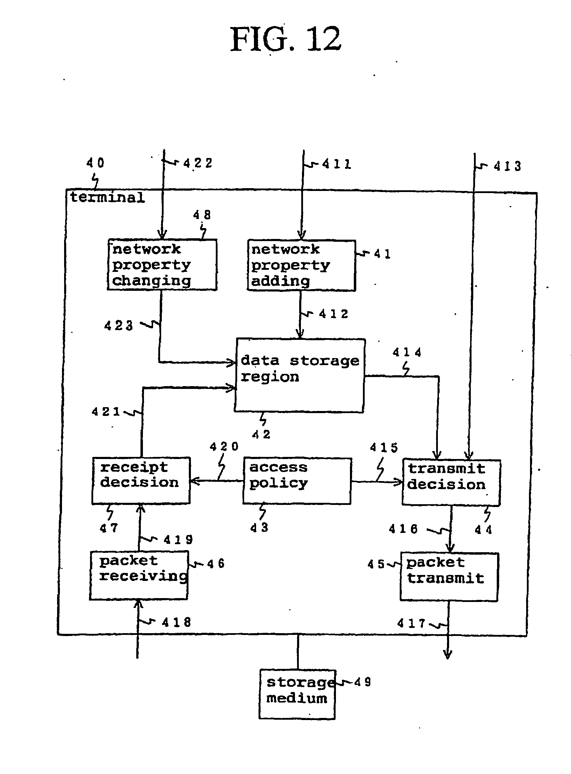

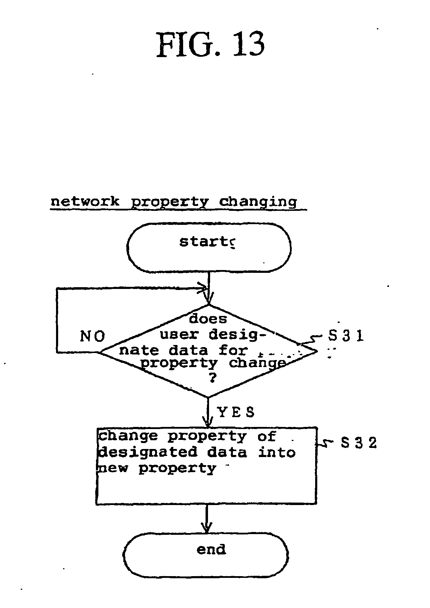

In this embodiment, an additional provision of the network property value changing function block 48 is different from the third embodiment. The network property value addition function block 41 is provided for adding a determined network property value to data 411 which have been entered by user of the data communication terminal 40 for allowing the data 412 together with the added network property value to be stored in the data storage region 42. The network property value changing function block 48 is provided for changing the present network property value accompanied to the presently stored data in the data storage region 42 into a user's designated new network property value. FIG. 13 is a flow chart of operations or processes of the network property value changing function block included in the data communication terminal of FIG. 12. The operations or processes of the network property value changing function block 48 are implemented by execution of the program from the storage medium 49. In step S31, user of the data communication terminal 40 may designate data accompanied with the network property value which is intended by the user to be changed into an user's designated new network property value. The user also enters the designation of the data and this user's designated new network property value 422 into the network property value changing function block 48. In step S32, the network property value changing function block 48 changes the present network property value accompanied to the designated data presently stored in the data storage region 42 into the user's designated new network property value 423. The data storage region 42 stores the data and the network property values added by the network property value addition function block 41 or the new network property values changed by the network property value changing function block 48. The access policy storage unit 43 stores not only a transmission policy but also a receiving policy. The transmission policy allows a decision, based on the transmission policy, of the permission of transmission of the data stored in the data storage region 42 to other data communication terminals over the data communication networks. The receiving policy allows a decision, based on the receiving policy, of the permission of receipt of the data from other data communication terminals over the data communication networks.

The processes or operations shown by the data transmission permission decision function block 44 are implemented by execution of the program from the storage medium 49 as shown in FIG. 5 and described in the first embodiment. With reference back to FIG. 5, in steps S1 and S2, the data transmission permission decision function block 44 is started upon receipt of a data transmission request 413. In step S3, the data transmission permission decision function block 44 retrieves the transmission data from the data storage region 42 and obtains the network property value added to the retrieved transmission data 414. In step S4, the data transmission permission decision function block 44 reads out the transmission policy 415 from the access policy storage unit 43. In step S5, the data transmission permission decision function block 44 refers the network property value assigned to the data communication network connected with one or more data communication terminals, to which the data transmission is intended to be made, and also refers the network property value assigned to the data communication network connected with the present data communication terminal 40, so that the data transmission permission decision function block 44 makes a decision on the permissibility of the data transmission based on the referred network property values. In step S6, if the data transmission permission decision function block 44 decides that the data transmission is permitted based on the transmission policy, then in step S7 the data transmission-permission decision function block 44 transfers the transmission data 416 along with the network property value added to the transmission data to the packet transmission function block 45 for requesting the packet transmission function block 45 to transmit the data and the header with the network property value. A transmission data packet 417 is transmitted by the packet transmission function block 45 onto the data communication network assigned with the network property value of the data.

If the data communication terminal as "sender", from which the data are transmitted, is connected to plural data communication networks, the data transmission permission decision function block 44 refers the network property value assigned to the data communication network, via which the data transmission is intended to be made. If the data communication terminal as "receiver", to which the data are transmitted, is connected to plural data communication networks, the data transmission permission decision function block 44 refers the network property value assigned to the data communication network, via which the data transmission as "receiver" is intended to receive the transmitted data.

The processes or operations shown by the data receiving permission decision function block 47 are implemented by execution of the program from the storage medium 49 which are described in the third embodiment with reference to FIG. 11. In step S21, the packet receiving function block 46 receives a packet 418. In step S22, the packet receiving function block 46 isolates a transmission control header, a network property value and the data from the received packet 418. The packet receiving function block 46 sends a set 419 of the isolated transmission control header, the network property value and the data to the data receiving permission decision function block 47. In step S23, the data receiving permission decision function block 47 specifies a "sender" data communication terminal based on the received transmission control header. In step S24, the data receiving permission decision function block 47 reads out the receiving policy 420 from the access policy storage unit 43. In step S25, the data receiving permission decision function block 47 refers a network property value which is assigned to the data communication network connected with the "sender" data communication terminal, and also refers the network property value received from the packet receiving function block 46, so that the data receiving permission decision function block 47 makes a decision on the permissibility of the data receiving with reference to the above both network property values. In step S26, if the data receiving permission decision function block 47 decides that the data receiving is permitted based on the receiving policy, then in step S27, the data receiving permission decision function block 47 sends the received data 421 together with the network property value of the received data to the data storage region 42.

If the sender data communication terminal as "sender", from which the data are transmitted, is connected to plural data communication networks, the data transmission receiving decision function block 47 refers the network property value assigned to the data communication network, via which the data transmission was made. If the present data communication terminal as "receiver", to which the data were transmitted, is connected to plural data communication networks, the data transmission receiving decision function block 47 refers the network property value assigned to the data communication network, via which the present data transmission as "receiver" receives the transmitted data. The difference of this embodiment from the third embodiment may also be applicable to the above first and second embodiments, so as to modify the data communication terminals of the first and second embodiments in accordance with this fourth embodiment.

### FIFTH EMBODIMENT:

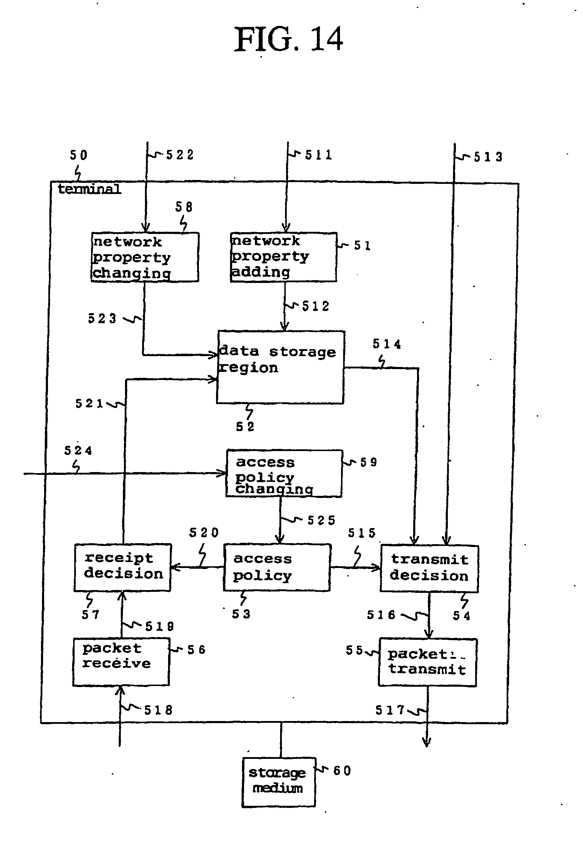

A fifth embodiment according to the present invention will be described in detail with reference to the drawings. The fifth embodiment is applicable to the data communication system shown in FIG. 1 and described in the first embodiment. FIG. 14 is a block diagram of an internal structure of the data communication terminal of the fifth embodiment in accordance with the present invention. A data communication terminal 50 may include a network property value addition function block 51, a data storage region 52, an access policy storage unit 53, a data transmission permission decision function block 54, a packet transmission function block 55, a packet receiving function block 56, a data receiving permission decision function block 57, a network property value changing function block 58, an access policy changing function block 59 and a storage medium 60 for storing one or more programs to be executed by the above respective function blocks. The storage medium 60 may be realized by any available storage means such as read only memory or integrated circuit memory.

In this embodiment, an additional provision of the access policy changing function block 59 is different from the fourth embodiment. The network property value addition function block 51 is provided for adding a determined network property value to data 511 which have been entered by user of the data communication terminal 50 for allowing the data 512 together with the added network property value to be stored in the data storage region 52. The network property value changing function block 58 is provided for changing the present network property value accompanied to the presently stored data in the data storage region 52 into a user's designated new network property value. The operations or processes of the network property value changing function block 58 are implemented by execution of the program from the storage medium 60 as described in the fourth embodiment with reference to FIG. 13. In step S31, user of the data communication terminal 50 may designates data accompanied with the network property value which is intended by the user to be changed into an user's designated new network property value. The user also enters the designation of the data and this user's designated new network property value 522 into the network property value changing function block 58. In step S32, the network property value changing function block 58 changes the present network property value accompanied to the designated data presently stored in the data storage region 52 into the user's designated new network property value 523. The data storage region 52 stores the data and the network property values added by the network property value addition function block 51 or the new network property values changed by the network property value changing function block 58. The access policy storage unit 53 stores not only a transmission policy but also a receiving policy. The transmission policy allows a decision, based on the transmission policy, of the permission of transmission of the data stored in the data storage region 52 to other data communication terminals over the data communication networks. The receiving policy allows a decision, based on the receiving policy, of the permission of receipt of the data from other data communication terminals over the data communication networks. The access policy changing function block 59 changes or replaces the present access policy, for example, at least one of the transmission policy and the receiving policy stored in the access policy storage unit 53 into a new access policy 524, for example, at least one of a new transmission policy 524 and a new receiving policy 524 which are designated by the user.

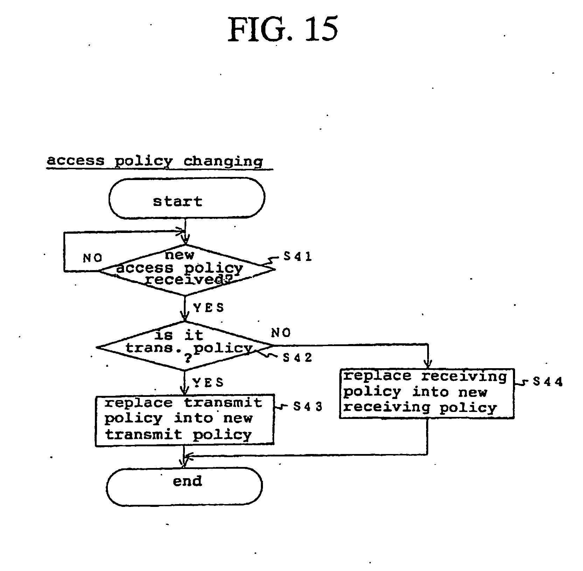

FIG. 15 is a flow chart of operations or processes of the access policy changing function block included in the data communication terminal of FIG. 14. The operations or processes of the access policy changing function block 59 are implemented by execution of the program from the storage medium 60. In steps S41, user of the data communication terminal 50 may enter a new access policy 524, for example, at least one of a new transmission policy 524 and a new receiving policy 524 into the access policy changing function block 59. In step S42, if the entered new access policy 524 is a user's designated new transmission policy 524, then in step S43, the access policy changing function block 59 changes or replaces the present transmission policy stored in the access policy storage unit 53 into the user's designated new transmission policy 525. If the entered new access policy 524 is a user's designated new receiving policy 524, then in step S44, the access policy changing function block 59 changes or replaces the present receiving policy stored in the access policy storage unit 53 into the user's designated new receiving policy 525.

The processes or operations shown by the data transmission permission decision function block 54 are implemented by execution of the program from the storage medium 60 as shown in FIG. 5 and described in the first embodiment. With reference back to FIG. 5, in steps S1 and S2, the data transmission permission decision function block 54 is started upon receipt of a data transmission request 513. In step S3, the data transmission permission decision function block 54 retrieves the transmission data from the data storage region 52 and obtains the network property value added to the retrieved transmission data 514. In step S4, the data transmission permission decision function block 54 reads out the transmission policy 515 from the access policy storage unit 53. In step S5, the data transmission permission decision function block 54 refers the network property value assigned to the data communication network connected with one or more data communication terminals, to which the data transmission is intended to be made; and also refers the network property value assigned to the data communication network connected with the present data communication terminal 50, so that the data transmission permission decision function block 54 makes a decision on the permissibility of the data transmission based on the referred network property values. In step S6, if the data transmission permission decision function block 54 decides that the data transmission is permitted based on the transmission policy, then in step S7 the data transmission permission decision function block 54 transfers the transmission data 516 along with the network property value added to the transmission data to the packet transmission function block 55 for requesting the packet transmission function block 55 to transmit the data and the header with the network property value. A transmission data packet 517 is transmitted by the packet transmission function block 55 onto the data communication network assigned with the network property value of the data.

If the data communication terminal as "sender", from which the data are transmitted, is connected to plural data communication networks, the data transmission permission decision function block 54 refers the network property value assigned to the data communication network, via which the data transmission is intended to be made. If the data communication terminal as "receiver", to which the data are transmitted, is connected to plural data communication networks, the data transmission permission decision function block 54 refers the network property value assigned to the data communication network, via which the data transmission as "receiver" is intended to receive the transmitted data.

The processes or operations shown by the data receiving permission decision function block 57 are implemented by execution of the program from the storage medium 60 which are described in the third embodiment with reference to FIG. 11. In step S21, the packet receiving function block 56 receives a packet 518. In step S22, the packet receiving function block 56 isolates a transmission control header, a network property value and the data from the received packet 518. The packet receiving function block 56 sends a set 519 of the isolated transmission control header, the network property value and the data to the data receiving permission decision function block 57. In step S23, the data receiving permission decision function block 57 specifies a "sender" data communication terminal based on the received transmission control header. In step S24, the data receiving permission decision function block 57 reads out the receiving policy 520 from the access policy storage unit 53. In step S25, the data receiving permission decision function block 57 refers a network property value which is assigned to the data communication network connected with the "sender" data communication terminal, and also refers the network property value received from the packet receiving function block 56, so that the data receiving permission decision function block 57 makes a decision on the permissibility of the data receiving with reference to the above both network property values. In step S26, if the data receiving permission decision function block 57 decides that the data receiving is permitted based on the receiving policy, then in step S27, the data receiving permission decision function block 57 sends the received data 521 together with the network property value of the received data to the data storage region 52.

If the sender data communication terminal as "sender", from which the data are transmitted, is connected to plural data communication networks, the data transmission receiving decision function block 57 refers the network property value assigned to the data communication network, via which the data transmission was made. If the present data communication terminal as "receiver", to which the data were transmitted, is connected to plural data communication networks, the data transmission receiving decision function block 57 refers the network property value assigned to the data communication network, via which the present data transmission as "receiver" receives the transmitted data. The difference of this embodiment from the fourth embodiment may also be applicable to the above first, second and third embodiments, so as to modify the data communication terminals of the first, second and third embodiments in accordance with this fifth embodiment.

### SIXTH EMBODIMENT :

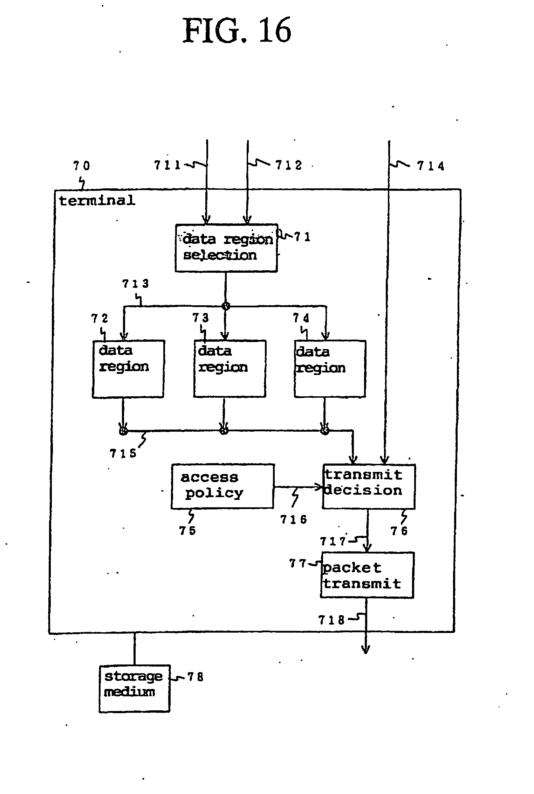

A sixth embodiment according to the present invention will be described in detail with reference to the drawings. The sixth embodiment is applicable to the data communication system shown in FIG. 1 and described in the first embodiment. FIG. 16 is a block diagram of an internal structure of the data communication terminal of the sixth embodiment in accordance with the present invention. A data communication terminal 70 may include a data storage region selecting function block 71, plural data storage regions 72, 73 and 74, an access policy storage unit 75, a data transmission permission decision function block 76, a packet transmission function block 77, and a storage medium 78 for storing one or more programs to be executed by the above respective function blocks. The storage medium 78 may be realized by any available storage means such as read only memory or integrated circuit memory. The number of the plural data storage regions may be three as shown by the reference numerals 72, 73 and 74 but should not be limited to three. In this embodiments a plurality of data storage regions is provided.

In this embodiment, an alternative provision of the data storage region selecting function block 71 instead of the network property value addition function block and a further provision of the plural number of the data storage region are different from the first embodiment. The data storage region selecting function block 71 is provided for adding a user-designated network property value to data 711 which have been entered by user of the data communication terminal 70 for allowing the data 713 together with the added network property value to be stored in the data storage regions 72, 73 and 74.

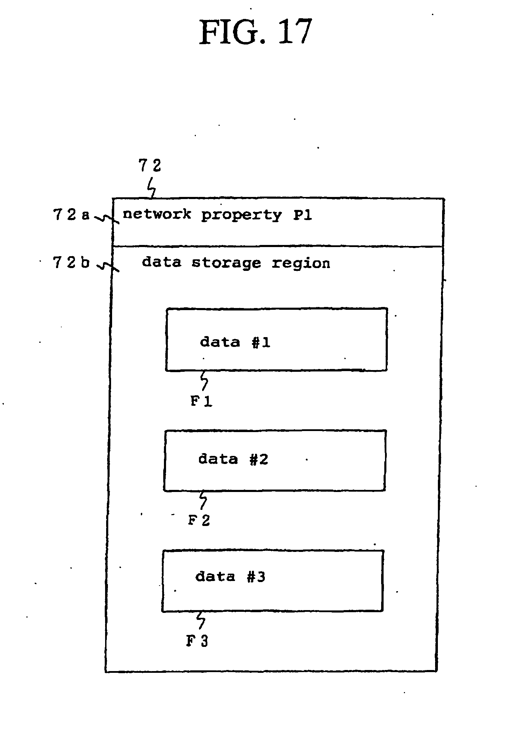

FIG. 17 is a block diagram of an internal structure of one of the data storage regions included in the data communication terminal of FIG.. 16. The data storage region 72 includes a network property value storage region 72a and a data storage region 72b. The network property value storage region 72a stores a network property value P1. The data storage region 72b stores three data #1, #2 and #3.

FIG.. 18 is a flow chart of operations or processes of the network property value addition function block included in the data communication terminal of FIG. 16. The operations or processes of the data storage region selecting function block 71 may be implemented by execution of the program from the storage medium 78. In step S51, the data storage region selecting function block 71 receives an entry of data 711 and a network property value 712 from user. In step S52, the data storage region selecting function block 71 also selects one of the data storage regions 72, 73 and 74, wherein the selected one of the data storage regions 72, 73 and 74 has the same network property value as the user's designated network property value 712 received from user. The data storage region selecting function block 71 sends the data 713 to the selected one of the data storage regions 72, 73 and 74 for storing the data 713 therein. The access policy storage unit 75 stores an access policy or a transmission policy for allowing a decision, based on the transmission policy, of the permission of transmission of the data stored in the data storage regions 72, 73 and 74 to other data communication terminals over the data communication networks.

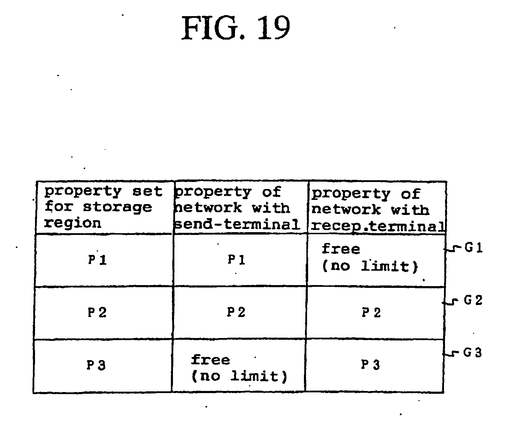

FIG. 19 is a diagram of one typical example of the transmission policy stored in the access policy storage unit included in the data communication terminal of FIG. 16. The transmission policy comprises three entries G1, G2 and G3. The contents in the entry G1 mean that in case that data are stored in the data storage region having the network property value P1, if the property value assigned to the data communication network having the current connection with the present data communication terminal as "sender" is P1, then the data transmission would be permitted to any data communication terminals as "receiver" over all of the data communication networks. The contents in the entry G2 mean that in case that data are stored in the data storage region having the network property value P2, if the property value assigned to the data communication network having the current connection with the present data communication terminal as "sender" is P2, then the data transmission would be permitted to any data communication terminals as "receiver" but only over the data communication network assigned to the network property value P2. Namely, the data transmission would be permitted to any data communication terminals as "receiver" over the same data communication network, to which the present data communication terminal 1 as "sender" is currently connected. The contents in the entry G3 mean that in case that data are stored in the data storage region having the network property value P3, then independent from the property value assigned to the data communication network having the current connection with the present data communication terminal as "sender", the data transmission would be permitted to any data communication terminals as "receiver" but only over the data communication network assigned to the network property value P3. Namely, the data transmission would be permitted to any data communication terminals as "receiver" but only over the data communication network assigned to the property value P3, regardless of the issue of current network connection between the present data communication terminal as "sender" and any one of the data communication networks. The above presented contents are mere examples but should not be limited thereto.

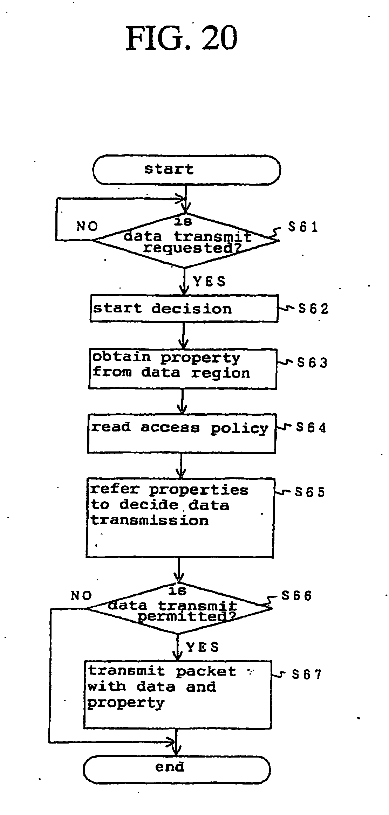

FIG. 20 is a flow chart illustrative of a typical example of processes or operations shown by the data transmission permission decision function block included in the data communication terminal of FIG. 16. The processes or operations shown by the data transmission permission decision function block 76 are implemented by execution of the program from the storage medium 78 as follows. With reference back to FIG. 20, in steps S61 and S62, the data transmission permission decision function block 76 is started upon receipt of a data transmission request 714. In step S63, the data transmission permission decision function block 76 obtains respective network property values 715 from the data storage regions 72, 73 and 74. In step S64, the data transmission permission decision function block 76 reads out the transmission policy 716 from the access policy storage unit 75. In step S65, the data transmission permission decision function block 76 refers the network property value assigned to the data communication network connected with one or more data communication terminals as "receiver", to which the data transmission is intended to be made, and also refers the network property value assigned to the data communication network connected with the present data communication terminal 70 as "sender", so that the data transmission permission decision function block 76 makes a decision on the permissibility of the data transmission based on the referred network property values. In step S66, if the data transmission permission decision function block 76 decides that the data transmission is permitted based on the transmission policy, then in step S67 the data transmission permission decision function block 76 transfers the transmission data 717 along with the network property value of the data storage region 72, 73 or 74 stored the transmission data to the packet transmission function block 77 for requesting the packet transmission function block 77 to transmit the data and the header with the network property value. A transmission data packet 718 is transmitted by the packet transmission function block 77 onto the data communication network assigned with the network property value of the data.

### SEVENTH EMBODIMENT:

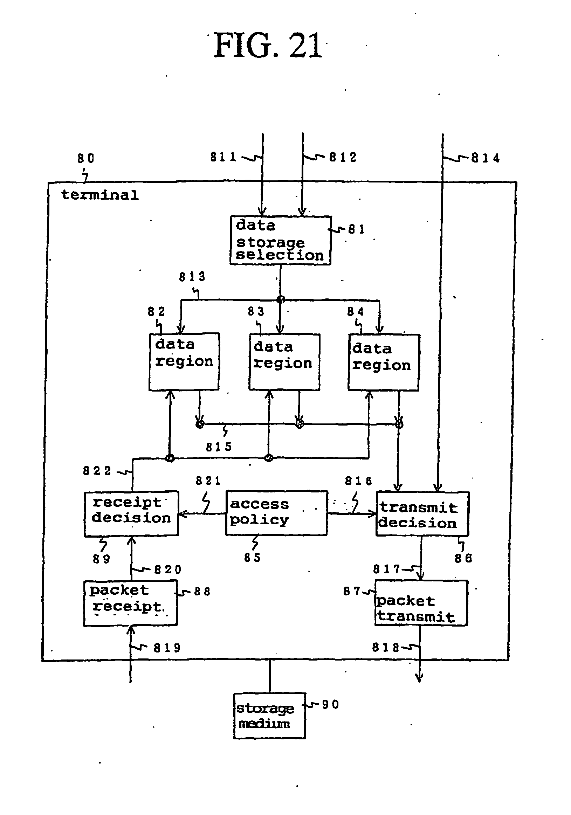

A seventh embodiment according to the present invention will be described in detail with reference to the drawings. The seventh embodiment is applicable to the data communication system shown in FIG. 1 and described in the first embodiment. FIG. 21 is a block diagram of an internal structure of the data communication terminal of the seventh embodiment in accordance with the present invention. A data communication terminal 80 may include a data storage region selecting function block 81, plural data storage regions 82, 83 and 84, an access policy storage unit 85, a data transmission permission decision function block 86, a packet transmission function block 87, a packet receiving function block 88, a data receiving permission decision function block 89 and a storage medium 90 for storing one or more programs to be executed by the above respective function blocks. The storage medium 90 may be realized by any available storage means such as read only memory or integrated circuit memory. The number of the plural data storage regions may be three as shown by the reference numerals 82, 83 and 84 but should not be limited to three. In this embodiment, a plurality of data storage region is provided.

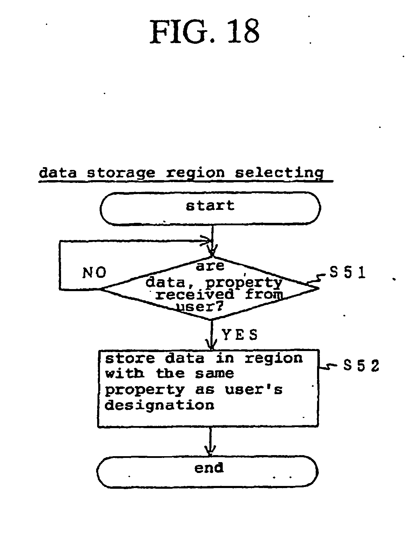

In this embodiment, additional provisions of the packet receiving function block 88 and the data receiving permission decision function block 89 as well as a receiving policy being stored in the access policy storage unit 85 in addition to the transmission policy are different from the sixth embodiment. The data storage region selecting function block 81 is provided for adding a user-designated network property value to data 811 which have been entered by user of the data communication terminal 80 for allowing the data 813 together with the added network property value to be stored in the data storage regions 82, 83 and 84. The operations or processes of the data storage region selecting function block 81 may be implemented by execution of the program from the storage medium 90 as shown in FIG. 18 and described in the sixth embodiment. In step S51, the data storage region selecting function block 81 receives an entry of data 811 and a network property value 812 from user. In step S52, the data storage region selecting function block 81 also selects one of the data storage regions 82, 83 and 84, wherein the selected one of the data storage regions 82, 83 and 84 has the same network property value as the user's designated network property value 812 received from user. The data storage region selecting function block 81 sends the data 813 to the selected one of the data storage regions 82, 83 and 84 for storing the data 813 therein. The access policy storage unit 85 stores not only a transmission policy but also a receiving policy. The transmission policy allows a decision, based on the transmission policy, of the permission of transmission of the data stored in the data storage region 82, 83 or 84 to other data communication terminals over the data communication networks. The receiving policy allows a decision, based on the receiving policy, of the permission of receipt of the data from other data communication terminals over the data communication networks.

The processes or operations shown by the data transmission permission decision function block 86 are implemented by execution of the program from the storage medium 90 as shown in FIG. 20 and as follows. With reference back to FIG. 20, in steps S61 and S62, the data transmission permission decision function block 86 is started upon receipt of a data transmission request 814. In step S63, the data transmission permission decision function block 86 obtains respective network property values 815 of the data storage regions 82, 83 and 84. In step S64, the data transmission permission decision function block 86 reads out the transmission policy 816 from the access policy storage unit 85. In step S65, the data transmission permission decision function block 86 refers the network property value assigned to the data communication network connected with one or more data communication terminals as "receiver", to which the data transmission is intended to be made, and also refers the network property value assigned to the data communication network connected with the present data communication terminal 80 as "sender", so that the data transmission permission decision function block 86 makes a decision on the permissibility of the data transmission based on the referred network property values. In step S66, if the data transmission permission decision function block 86 decides that the data transmission is permitted based on the transmission policy, then in step S67 the data transmission permission decision function block 86 transfers the transmission data 817 along with the network property value of the data storage region 82, 83 or 84 stored the transmission data to the packet transmission function block 87 for requesting the packet transmission function block 87 to transmit the data and the header with the network property value. A transmission data packet 818 is transmitted by the packet transmission function block 87 onto the data communication network assigned with the network property value of the data. If the data communication terminal as "sender", from which the data are transmitted, is connected to plural data communication networks, the data transmission permission decision function block 86 refers the network property value assigned to the data communication network, via which the data transmission is intended to be made. If the data communication terminal as "receiver", to which the data are transmitted, is connected to plural data communication networks, the data transmission permission decision function block 86 refers the network property value assigned to the data communication network, via which the data transmission as "receiver" is intended to receive the transmitted data.

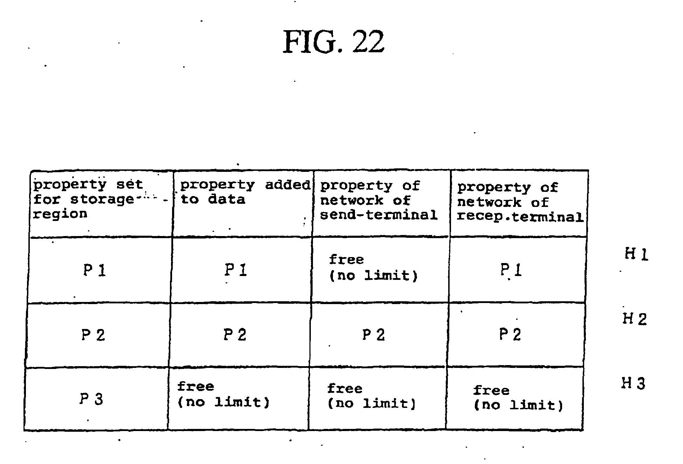

FIG. 22 is a diagram of one typical example of the transmission policy stored in the access policy storage unit included in the data communication terminal of FIG.. 21. The transmission policy comprises three entries H1, H2 and H3. The contents in the entry H1 mean that in case that data are stored in the data storage region having the network property value P1 and also the network property value added to the data is P1, then independent from the property value assigned to the data communication network having the current connection with the present data communication terminal 80 as "receiver", the data receiving would be permitted from any data communication terminals as "sender" but only over the data communication network assigned to the network property value P1. The contents in the entry H2 mean that in case that data are stored in the data storage region having the network property value P2 and also the network property value added to the data is P2, if the property value assigned to the data communication network having the current connection with the present data communication terminal 80 as "receiver" is P2, then the data receiving would be permitted from any data communication terminals as "sender" but only over the data communication network assigned to the network property value P2. The contents in the entry H3 mean that in case that data are stored in the data storage region-having the network property value P3, then independent from the network property value added to the data and also from the property value assigned to the data communication network having the current connection with the present data communication terminal 80 as "receiver", the data receiving would be permitted to any data communication terminals as "sender" over all of the data communication networks. The above presented contents are mere examples but should not be limited thereto.

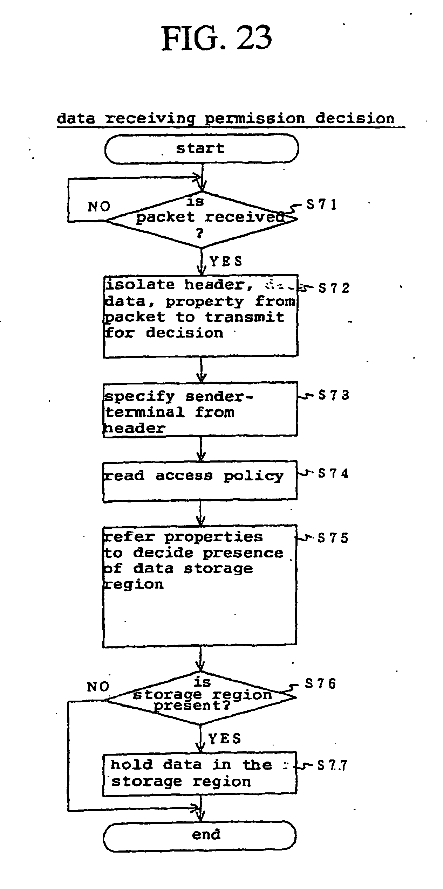

FIG. 23 is a flow chart illustrative of a typical example of processes or operations shown by the data receiving permission decision function block included in the data communication terminal of FIG. 21. The processes or operations shown by the data receiving permission decision function block 89 are implemented by execution of the program from the storage medium 90. In step S71, the packet receiving function block 88 receives a packet 819. In step S72, the packet receiving function block 88 isolates a transmission control header, a network property value and the data from the received packet 819. The packet receiving function block 88 sends a set 820 of the isolated transmission control header, the network property value and the data to the data receiving permission decision function block 89. In step S73, the data receiving permission decision function block 89 specifies a "sender" data communication terminal based on the received transmission control header. In step S74, the data receiving permission decision function block 89 reads out the receiving policy 821 from the access policy storage unit 85. In step S75, the data receiving permission decision function block 89 refers a network property value which is assigned to the data communication network connected with the "sender" data communication terminal, and also refers the network property value received from the packet receiving function block 88 as well as refers a network property value which is assigned to the data communication network connected with the present data communication terminal as "receiver", so that the data receiving permission decision function block 89 makes a decision on the permissibility of the data receiving with reference to the above respective network property values. In step S76, if the data receiving permission decision function block 89 decides that the data receiving is permitted based on the receiving policy, then in step S77, the data receiving permission decision function block 89 sends the received data 822 together with the network property value of the received data to the data storage region 82, 83 or 84. If the sender data communication terminal as "sender", from which the data are transmitted, is connected to plural data communication networks, the data transmission receiving decision function block 89 refers the network property value assigned to the data communication network, via which the data transmission was made. If the present data communication terminal as "receiver", to which the data were transmitted, is connected to plural data communication networks, the data transmission receiving decision function block 89 refers the network property value assigned to the data communication network, via which the present data transmission as "receiver" receives the transmitted data.

### EIGHTH EMBODIMENT :

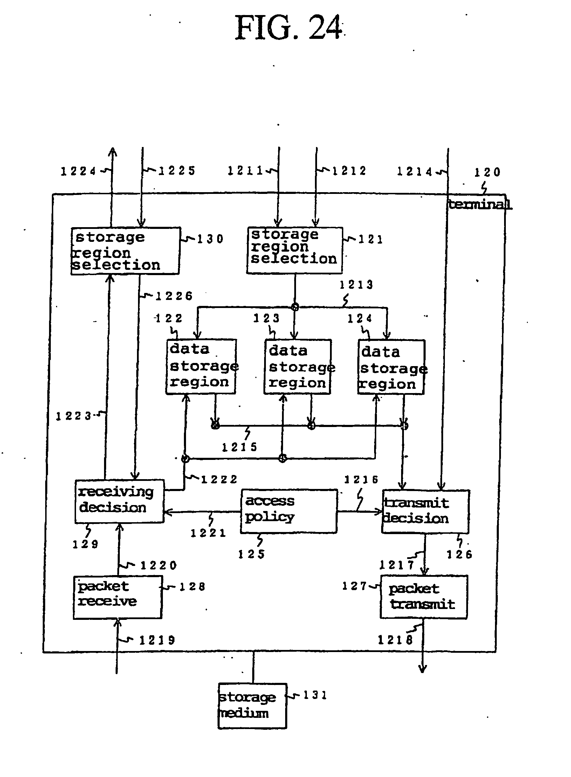

An eighth embodiment according to the present invention will be described in detail with reference to the drawings. The eighth embodiment is applicable to the data communication system shown in FIG. 1 and described in the first embodiment. FIG. 24 is a block diagram of an internal structure of the data communication terminal of the eighth embodiment in accordance with the present invention. A data communication terminal 120 may include a data storage region selecting function block 121, plural data storage regions 122, 123 and 124, an access policy storage unit 125, a data transmission permission decision function block 126, a packet transmission function block 127, a packet receiving function block 128, a data receiving permission decision function block 129, a received data storage region selecting function block 130 and a storage medium 131 for storing one or more programs to be executed by the above respective function blocks. The storage medium 131 may be realized by any available storage means such as read only memory or integrated circuit memory. The number of the plural data storage regions may be three as shown by the reference numerals 122, 123 and 124 but should not be limited to three. In this embodiment, a plurality of data storage region is provided.

In this embodiment, an additional provision of the received data storage region selecting function block 130 as well as modification in operation of the data receiving permission decision function block 129 are different from the seventh embodiment. The data storage region selecting function block 121 is provided for adding a user-designated network property value to data 1211 which have been entered by user of the data communication terminal 120 for allowing the data 1213 together with the added network property value to be stored in the data storage regions 122, 123 and 124. The operations or processes of the data storage region selecting function block 121 may be implemented by execution of the program from the storage medium 131 as shown in FIG. 18 and described in the sixth embodiment. In step S51, the data storage region selecting function block 121 receives an entry of data 1211 and a network property value 1212 from user. In step S52, the data storage region selecting function block 121 also selects one of the data storage regions 122, 123 and 124, wherein the selected one of the data storage regions 122, 123 and 124 has the same network property value as the user's designated network property value 1212 received from user. The data storage region selecting function block 121 sends the data 1213 to the selected one of the data storage regions 122, 123 and 124 for storing the data 1213 therein. The access policy storage unit 125 stores not only a transmission policy but also a receiving policy. The transmission policy allows a decision, based on the transmission policy, of the permission of transmission of the data stored in the data storage region 122, 123 or 124 to other data communication terminals over the data communication networks. The receiving policy allows a decision, based on the receiving policy, of the permission of receipt of the data from other data communication terminals over the data communication networks.

The processes or operations shown by the data transmission permission decision function block 126 are implemented by execution of the program from the storage medium 131 as shown in FIG. 20 and as follows. With reference back to FIG. 20, in steps S61 and S62, the data transmission permission decision function block 126 is started upon receipt of a data transmission request 1214. In step S63, the data transmission permission decision function block 126 obtains respective network property values 1215 of the data storage regions 122, 123 and 124. In step S64, the data transmission permission decision function block 126 reads out the transmission policy 1216 from the access policy storage unit 125. In step S65, the data transmission permission decision function block 126 refers the network property value assigned to the data communication network connected with one or more data communication terminals as "receiver", to which the data transmission is intended to be made, and also refers the network property value assigned to the data communication network connected with the present data communication terminal 120 as "sender", so that the data transmission permission decision function block 126 makes a decision on the permissibility of the data transmission based on the referred network property values. In step S66, if the data transmission permission decision function block 126 decides that the data transmission is permitted based on the transmission policy, then in step S67 the data transmission permission decision function block 126 transfers the transmission data 1217 along with the network property value of the data storage region 122, 123 or 124 stored the transmission data to the packet transmission function block 127 for requesting the packet transmission function block 127 to transmit the data and the header with the network property value. A transmission data packet 1218 is transmitted by the packet transmission function block 127 onto the data communication network assigned with the network property value of the data.

If the data communication terminal as "sender", from which the data are transmitted, is connected to plural data communication networks, the data transmission permission decision function block 126 refers the network property value assigned to the data communication network, via which the data transmission is intended to be made. If the data communication terminal as "receiver", to which the data are transmitted, is connected to plural data communication networks, the data transmission permission decision function block 126 refers the network property value assigned to the data communication network, via which the data transmission as "receiver" is intended to receive the transmitted data.

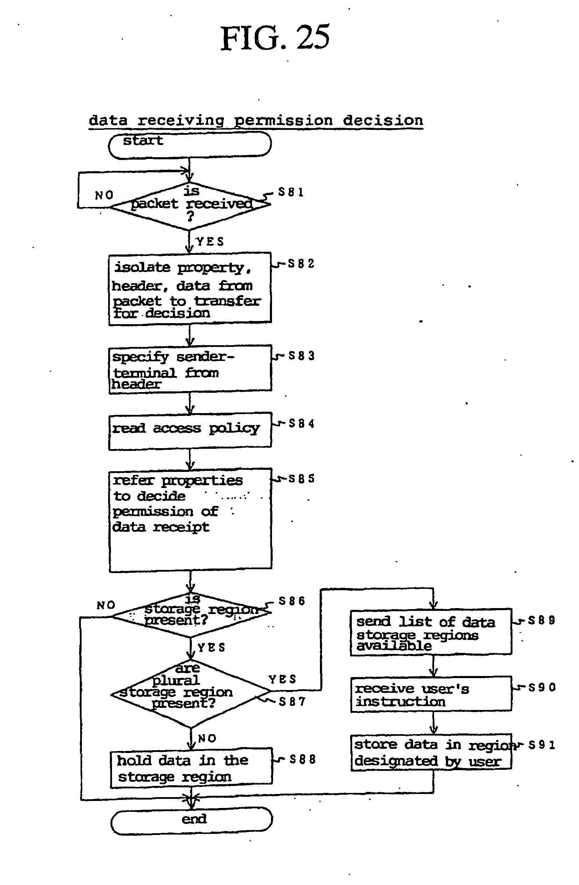

FIG. 25 is a flow chart illustrative of a typical example of processes or operations shown by the data receiving permission decision function block included in the data communication terminal of FIG. 24. The processes or operations shown by the data receiving permission decision function block 129 are implemented by execution of the program from the storage medium 131. In step S81, the packet receiving function block 128 receives a packet 1219. In step S82, the packet receiving function block 128 isolates a transmission control header, a network property value and the data from the received packet 1219. The packet receiving function block 128 sends a set 1220 of the isolated transmission control header, the network property value and the data to the data receiving permission decision function block 129. In step S83, the data receiving permission decision function block 129 specifies a "sender" data communication terminal based on the received transmission control header. In step S84, the data receiving permission decision function block 129 reads out the receiving policy 1221 from the access policy storage unit 125. In step S85, the data receiving permission decision function block 129 refers a network property value which is assigned to the data communication network connected with the "sender" data communication terminal, and also refers the network property value received from the packet receiving function block 128 as well as refers a network property value which is assigned to the data communication network connected with the present data communication terminal as "receiver", so that the data receiving permission decision function block 129 makes a decision on the permissibility of the data receiving with reference to the above respective network property values. In step S86, if the data receiving permission decision function block 129 decides that the data transmission is permitted based on the transmission policy, then in step S87, the data receiving permission decision function block 129 confirms whether two or more data storage regions are permitted to store the received data, or only one data storage region is permitted to store the received data. If only one data storage region is permitted is permitted to store the received data, then in step S88, the data receiving permission decision function block 129 sends the received data 1222 together with the network property value of the received data to the data storage region 122, 123 or 124 is permitted to store the received data.

If two or more data storage regions are permitted to store the received data, then in step S89, the data receiving permission decision function block 129 sends a list of the two or more data storage regions permitted to store the received data to the received data storage region selecting function block 130. In step S90, the received data storage region selecting function block 130 informs the user of the received list 1224 and the receives a user's instruction 1225 from user. The received data storage region selecting function block 130 sends the user's instruction 1226 to the data receiving permission decision function block 129. In step S91, the data receiving permission decision function block 129 designates one of the two or more data storage regions permitted to store the received data in accordance with the received user's instruction. The data receiving permission decision function block 129 sends the received data 1222 together with the network property value of the received data to the designated one of the data storage regions 122, 123 and 124. If the sender data communication terminal as "sender", from which the data are transmitted, is connected to plural data communication networks, the data transmission receiving decision function block 129 refers the network property value assigned to the data communication network, via which the data transmission was made. If the present data communication terminal as "receiver", to which the data were transmitted, is connected to plural data communication networks, the data transmission receiving decision function block 129 refers the network property value assigned to the data communication network, via which the present data transmission as "receiver" receives the transmitted data.

### NINTH EMBODIMENT:

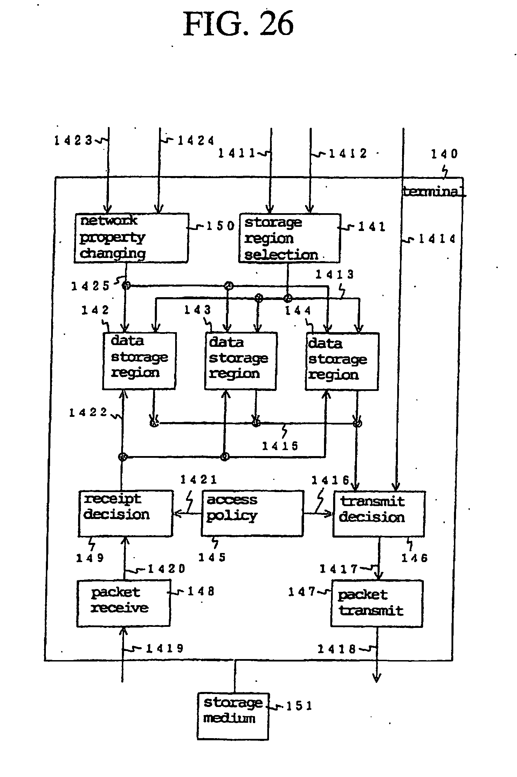

A ninth embodiment according to the present invention will be described in detail with reference to the drawings. The ninth embodiment is applicable to the data communication system shown in FIG. 1 and described in the first embodiment. FIG. 26 is a block diagram of an internal structure of the data communication terminal of the ninth embodiment in accordance with the present invention. A data communication terminal 140 may include a data storage region selecting function block 141, plural data storage regions 142, 143 and 144, an access policy storage unit 145, a data transmission permission decision function block 146, a packet transmission function block 147, a packet receiving function block 148, a data receiving permission decision function block 149, a network property value changing function block 150 and a storage medium 151 for storing one or more programs to be executed by the above respective function blocks. The storage medium 151 may be realized by any available storage means such as read only memory or integrated circuit memory. The number of the plural data storage regions may be three as shown by the reference numerals 142, 143 and 144 but should not be limited to three. In this embodiment, a plurality of data storage region is provided.

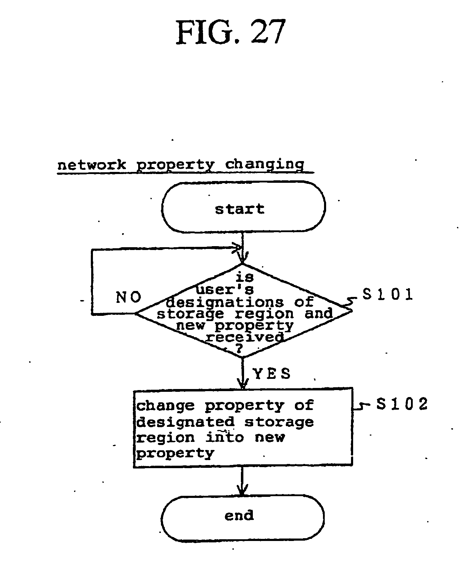

In this embodiment, an additional provision of the network property value changing function block 150 is different from the seventh embodiment. The data storage region selecting function block 141 is provided for adding a user-designated network property value to data 1411 which have been entered by user of the data communication terminal 140 for allowing the data 1413 together with the added network property value to be stored in the data storage regions 142, 143 and 144. The operations or processes of the data storage region selecting function block 141 may be implemented by execution of the program from the storage medium 151 as shown in FIG. 18 and described in the sixth embodiment. In step S51, the data storage region selecting function block 141 receives an entry of data 1411 and a network property value 1412 from user. In step S52, the data storage region selecting function block 141 also selects one of the data storage regions 142, 143 and 144, wherein the selected one of the data storage regions 142, 143 and 144 has the same network property value as the user's designated network property value 1412 received from user. The data storage region selecting function block 141 sends the data 1413 to the selected one of the data storage regions 142, 143 and 144 for storing the data 1413 therein. The network property value changing function block 150 is provided for changing the present network property value accompanied to the presently stored data in the data storage region 142, 143 or 144 into a user's designated new network property value. FIG. 27 is a flow chart of operations or processes of the network property value changing function block included in the data communication terminal of FIG. 26. The operations or processes of the network property value changing function block 150 are implemented by execution of the program from the storage medium 151. In step S101, user of the data communication terminal 140 may enter a designation 1423 for one of the data storage regions 142, 143, and 144 and a further designation 1424 for the new network property value into the network property value changing function block 150. In step S102, the network property value changing function block 150 changes the present network property value assigned to the user's designated one of the data storage regions 142, 143 and 144 into the user's designated new network property value 1425. The access policy storage unit 145 stores not only a transmission policy but also a receiving policy. The transmission policy allows a decision, based on the transmission policy, of the permission of transmission of the data stored in the data storage region 142, 143 or 144 to other data communication terminals over the data communication networks. The receiving policy allows a decision, based on the receiving policy, of the permission of receipt of the data from other data communication terminals over the data communication networks.

The processes or operations shown by the data transmission permission decision function block 146 are implemented by execution of the program from the storage medium 151 as shown in FIG. 20 and as follows. With reference back to FIG. 20, in steps S61 and S62, the data transmission permission decision function block 146 is started upon receipt of a data transmission request 1414. In step S63, the data transmission permission decision function block 146 obtains respective network property values 1415 of the data storage regions 142, 143 and 144. In step S64, the data transmission permission decision function block 146 reads out the transmission policy 1416 from the access policy storage unit 145. In step S65, the data transmission permission decision function block 146 refers the network property value assigned to the data communication network connected with one or more data communication terminals as "receiver", to which the data transmission is intended to be made, and also refers the network property value assigned to the data communication network connected with the present data communication terminal 140 as "sender", so that the data transmission permission decision function block 146 makes a decision on the permissibility of the data transmission based on the referred network property values. In step S66, if the data transmission permission decision function block 146 decides that the data transmission is permitted based on the transmission policy, then in step S67 the data transmission permission decision function block 146 transfers the transmission data 1417 along with the network property value of the data storage region 142, 143 or 144 stored the transmission data to the packet transmission function block 147 for requesting the packet transmission function block 147 to transmit the data and the header with the network property value. A transmission data packet 1418 is transmitted by the packet transmission function block 147 onto the data communication network assigned with the network property value of the data.

If the data communication terminal as "sender", from which the data are transmitted, is connected to plural data communication networks, the data transmission permission decision function block 146 refers the network property value assigned to the data communication network, via which the data transmission is intended to be made. If the data communication terminal as "receiver", to which the data are transmitted, is connected to plural data communication networks, the data transmission permission decision function block 146 refers the network property value assigned to the data communication network, via which the data transmission as "receiver" is intended to receive the transmitted data.The processes or operations shown by the data receiving permission decision function block 149 are implemented by execution of the program from the storage medium 151 which are described in the seventh embodiment with reference to FIG. 23. In step S71, the packet receiving function block 148 receives a packet 1419. In step S72, the packet receiving function block 148 isolates a transmission control.header, a network property value and the data from the received packet 1419. The packet receiving function block 148 sends a set 1420 of the isolated transmission control header, the network property value and the data to the data receiving permission decision function block 149. In step S73, the data receiving permission decision function block 149 specifies a "sender" data communication terminal based on the received transmission control header. In step S74, the data receiving permission decision function block 149 reads out the receiving policy 1421 from the access policy storage unit 145. In step S75, the data receiving permission decision function block 149 refers a network property value which is assigned to the data communication network connected with the "sender" data communication terminal, and also refers the network property value received from the packet receiving function block 148 as well as refers a network property value which is assigned to the data communication network connected with the present data communication terminal as "receiver", so that the data receiving permission decision function block 149 makes a decision on the permissibility of the data receiving with reference to the above respective network property values. In step S76, if the data receiving permission decision function block 149 decides that the data receiving is permitted based on the receiving policy, then in step S77, the data receiving permission decision function block 149 sends the received data 1422 together with the network property value of the received data to the data storage region 142, 143 or 144. If the sender data communication terminal as "sender", from which the data are transmitted, is connected to plural data communication networks, the data transmission receiving decision function block 149 refers the network property value assigned to the data communication network, via which the data transmission was made. If the present data communication terminal as "receiver", to which the data were transmitted, is connected to plural data communication networks, the data transmission receiving decision function block 149 refers the network property value assigned to the data communication network, via which the present data transmission as "receiver" receives the transmitted data. The difference of this embodiment from the seventh embodiment may also be applicable to the above sixth and eighth embodiments, so as to modify the data communication terminals of the sixth and eighth embodiments in accordance with this ninth embodiment.

### TENTH EMBODIMENT :

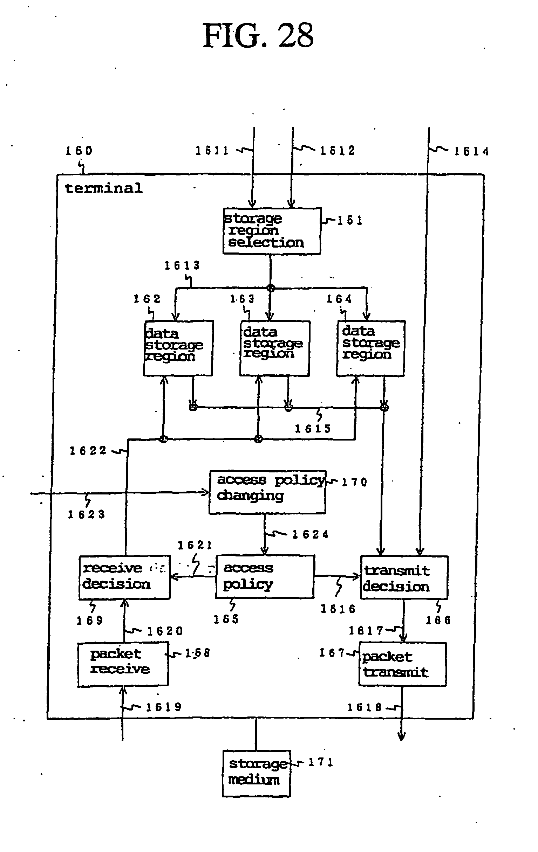

A tenth embodiment according to the present invention will be described in detail with reference to the drawings. The tenth embodiment is applicable to the data communication system shown in FIG. 1 and described in the first embodiment. FIG. 28 is a block diagram of an internal structure of the data communication terminal of the tenth embodiment in accordance with the present invention. A data communication terminal 160 may include a data storage region selecting function block 161, plural data storage regions 162, 163 and 164, an access policy storage unit 165, a data transmission permission decision function block 166, a packet transmission function block 167, a packet receiving function block 168, a data receiving permission decision function block 169, an access policy changing function block 170 and a storage medium 171 for storing one or more programs to be executed by the above respective function blocks. The storage medium 171 may be realized by any available storage means such as read only memory or integrated circuit memory. The number of the plural data storage regions may be three as shown by the reference numerals 162, 163 and 164 but should not be limited to three. In this embodiment, a plurality of data storage region is provided.

In this embodiment, an additional provision of the access policy changing function block 170 is different from the seventh embodiment. The data storage region selecting function block 161 is provided for adding a user-designated network property value to data 1611 which have been entered by user of the data communication terminal 160 for allowing the data 1613 together with the added network property value to be stored in the data storage regions 162, 163 and 164. The operations or processes of the data storage region selecting function block 161 may be implemented by execution of the program from the storage medium 171 as shown in FIG. 18 and described in the sixth embodiment. In step S51, the data storage region selecting function block 161 receives an entry of data 1611 and a network property value 1612 from user. In step S52, the data storage region selecting function block 161 also selects one of the data storage regions 162, 163 and 164, wherein the selected one of the data storage regions 162, 163 and 164 has the same network property value as the user's designated network property value 1612 received from user. The data storage region selecting function block 161 sends the data 1613 to the selected one of the data storage regions 162, 163 and 164 for storing the data 1613 therein.

The access policy storage unit 165 stores not only a transmission policy but also a receiving policy. The transmission policy allows a decision, based on the transmission policy, of the permission of transmission of the data stored in the data storage region 162, 163 or 164 to other data communication terminals over the data communication networks. The receiving policy allows a decision, based on the receiving policy, of the permission of receipt of the data from other data communication terminals over the data communication networks. The access policy changing function block 170 changes or replaces the present access policy, for example, at least one of the transmission policy and the receiving policy stored in the access policy storage unit 165 into a new access policy 1624, for example, at least one of a new transmission policy 1624 and a new receiving policy 1624 which are designated by the user.

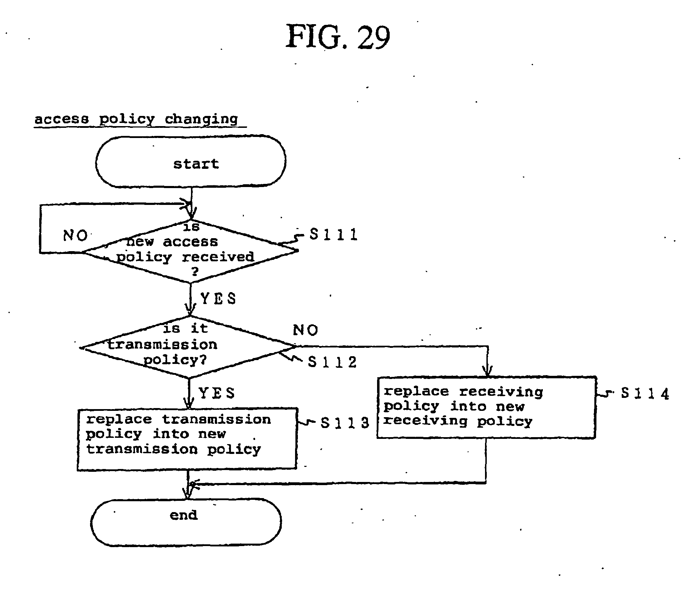

FIG. 29 is a flow chart of operations or processes of the access policy changing function block included in the data communication terminal of FIG, 28. The operations or processes of the access policy changing function block 170 are implemented by execution of the program from the storage medium 171. In steps S111, user of the data communication terminal 160 may enter a new access policy 1623, for example, at least one of a new transmission policy 1623 and a new receiving policy 1623 into the access policy changing function block 170. In step S112, if the entered new access policy 1623 is a user's designated new transmission policy 1623, then in step. S113, the access policy changing function block 170 changes or replaces the present transmission policy stored in the access policy storage unit 165 into the user's designated new transmission policy 1624. If the entered new access policy 1623 is a user's designated new receiving policy 1623, then in step S114, the access policy changing function block 170 changes or replaces the present receiving policy stored in the access policy storage unit 165 into the user's designated new receiving policy 1624. The processes or operations shown by the data transmission permission decision function block 166 are implemented by execution of the program from the storage medium 171 as shown in FIG. 20 and as follows. With reference back to FIG. 20, in steps S61 and S62, the data transmission permission decision function block 166 is started upon receipt of a data transmission request 1614. In step S63, the data transmission permission decision function block 166 obtains respective network property values 1615 of the data storage regions 162, 163 and 164. In step S64, the data transmission permission decision function block 166 reads out the transmission policy 1616 from the access policy storage unit 165. In step S65, the data transmission permission decision function block 166 refers the network property value assigned to the data communication network connected with one or more data communication terminals as "receiver", to which the data transmission is intended to be made, and also refers the network property value assigned to the data communication network connected with the present data communication terminal 160 as "sender", so that the data transmission permission decision function block 166 makes a decision on the permissibility of the data transmission based on the referred network property values. In step S66, if the data transmission permission decision function block 166 decides that the data transmission is permitted based on the transmission policy, then in step S67 the data transmission permission decision function block 166 transfers the transmission data 1617 along with the network property value of the data storage region 162, 163 or 164 stored the transmission data to the packet transmission function block 167 for requesting the packet transmission function block 167 to transmit the data and the header with the network property value. A transmission data packet 1618 is transmitted by the packet transmission function block 167 onto the data communication network assigned with the network property value of the data. If the data communication terminal as "sender", from which the data are transmitted, is connected to plural data communication networks, the data transmission permission decision function block 166 refers the network property value assigned to the data communication network, via which the data transmission is intended to be made. If the data communication terminal as "receiver", to which the data are transmitted, is connected to plural data communication networks, the data transmission permission decision function block 166 refers the network property value assigned to the data communication network, via which the data transmission as "receiver" is intended to receive the transmitted data. The processes or operations shown by the data receiving permission decision function block 169 are implemented by execution of the program from the storage medium 171 which are described in the seventh embodiment with reference to FIG.. 23. In step S71, the packet receiving function block 168 receives a packet 1619. In step S72, the packet receiving function block 168 isolates a transmission control header, a network property value and the data from the received packet 1619. The packet receiving function block 168 sends a set 1620 of the isolated transmission control header, the network property value and the data to the data receiving permission decision function block 169. In step S73, the data receiving permission decision function block 169 specifies a "sender" data communication terminal based on the received transmission control header. In step S74, the data receiving permission decision function block 169 reads out the receiving policy 1621 from the access policy storage unit 165. In step S75, the data receiving permission decision function block 169 refers a network property value which is assigned to the data communication network connected with the "sender" data communication terminal, and also refers the network property value received from the packet receiving function block 168 as well as refers a network property value which is assigned to the data communication network connected with the present data communication terminal as "receiver", so that the data receiving permission decision function block 169 makes a decision on the permissibility of the data receiving with reference to the above respective network property values. In step S76, if the data receiving permission decision function block 169 decides that the data receiving is permitted based on the receiving policy, then in step S77, the data receiving permission decision function block 169 sends the received data 1622 together with the network property value of the received data to the data storage region 162, 163 or 164. If the sender data communication terminal as "sender", from which the data are transmitted, is connected to plural data communication networks, the data transmission receiving decision function block 169 refers the network property value assigned to the data communication network, via which the data transmission was made. If the present data communication terminal as "receiver", to which the data were transmitted, is connected to plural data communication networks, the data transmission receiving decision function block 169 refers the network property value assigned to the data communication network, via which the present data transmission as "receiver" receives the transmitted data. The difference of this embodiment from the seventh embodiment may also be applicable to the above sixth, eighth and ninth embodiments, so as to modify the data communication terminals of the sixth, eighth and ninth embodiments in accordance with this tenth embodiment.

### ELEVENTH EMBODIMENT:

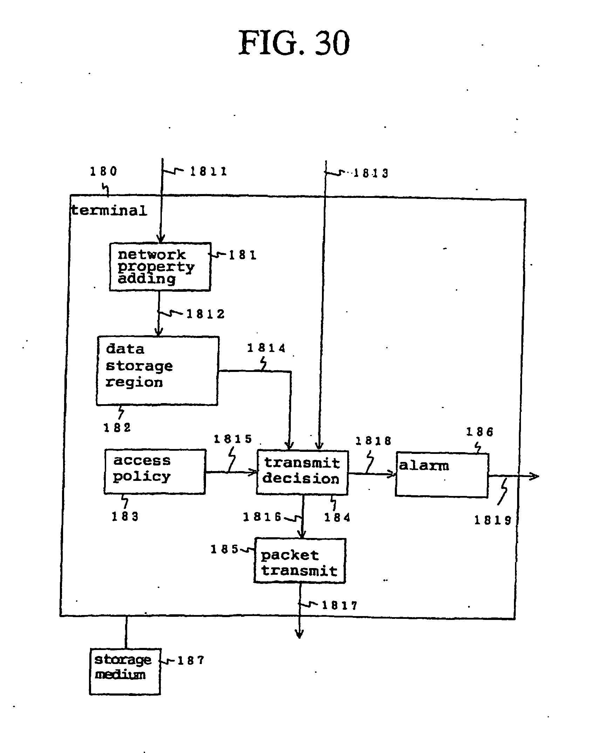

An eleventh embodiment according to the present invention will be described in detail with reference to the drawings. The eleventh embodiment is applicable to the data communication system shown in FIG. 1 and described in the first embodiment. FIG. 30 is a block diagram of an internal structure of the data communication terminal of the eleventh embodiment in accordance with the present invention. A data communication terminal 180 may include a network property value addition function block 181, a data storage region 182, an access policy storage unit 183, a data transmission permission decision function block 184, a packet transmission function block 185, an alarm function block 186 and a storage medium 187 for storing one or more programs to be executed by the above respective function blocks. The storage medium 187 may be realized by any available storage means such as read only memory or integrated circuit memory.

In this embodiment, an additional provision of the alarm function block 186 is different from the first embodiment. The network property value addition function block 181 is provided for adding a user-designated network property value to data 1811 which have been entered by user of the data communication terminal 180 for allowing the data 1812 together with the added network property value to be stored in the data storage region 182. The operations or processes of the network property value addition function block 181 may be implemented by execution of the program from the storage medium 187, which have been described above. In step S11, the network property value addition function block 181 receives an entry of the data from user with a request for storing the data into the data storage region 182. In step S12, the network property value addition function block 181 also receives a designation 1818 of the network property value from the user. In step S13, the network property value addition function block 181 adds the user-designated network property value to the data, and sends the data 1812 with the user-designated network property value to the data storage region 182 for storing the same. The data storage region 182 stores the data and the network property values added by the network property value addition function block 181. The access policy storage unit 183 stores an access policy or a transmission policy for allowing a decision, based on the transmission policy, of the permission of transmission of the data stored in the data storage region 182 to other data communication terminals over the data communication networks.

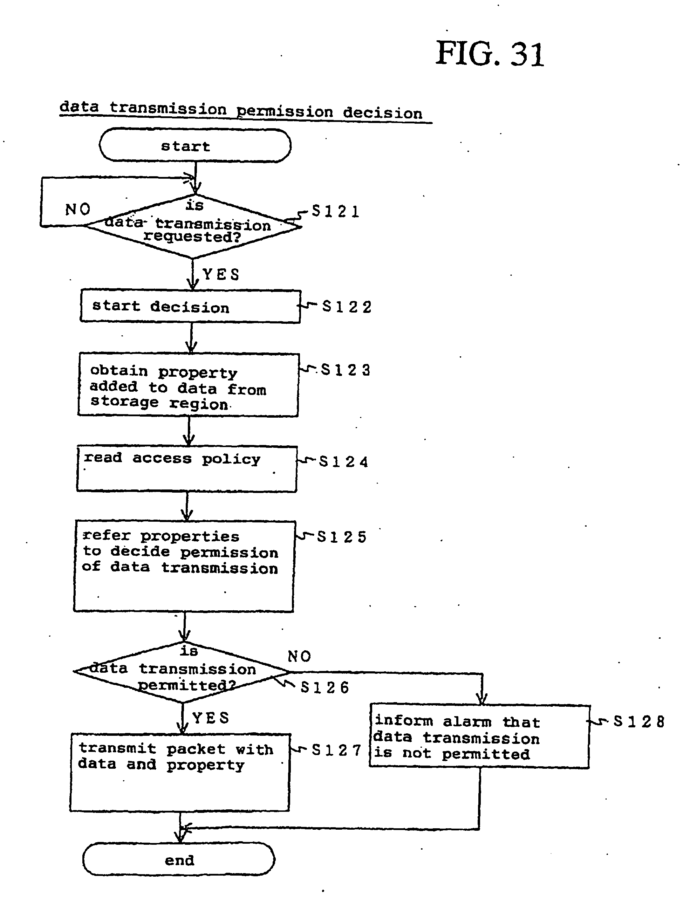

FIG. 31 is a flow chart of processes or operations shown by the data transmission permission decision function block of the data communication terminal of FIG. 30. The processes or operations shown by the data transmission permission decision function block 184 are implemented by execution of the program from the storage medium 187. In steps S121 and S122, the data transmission permission decision function block 184 is started upon receipt of a data transmission request 1813. In step S123, the data transmission permission decision function block 184 retrieves the transmission data from the data storage region 182 and obtains the network property value added to the retrieved transmission data 1814. In step S124, the data transmission permission decision function block 184 reads out the transmission policy 1815 from the access policy storage unit 183. In step S 125, the data transmission permission decision function block 184 refers the network property value assigned to the data communication network connected with one or more data communication terminals, to which the data transmission is intended to be made, and also refers the network property value assigned to the data communication network connected with the present data communication terminal 180, so that the data transmission permission decision function block 184 makes a decision on the permissibility of the data transmission based on the referred network property values. In step S126, if the data transmission permission decision function block 184 decides that the data transmission is permitted based on the transmission policy, then in step S127 the data transmission permission decision function block 184 transfers the transmission data 1816 along with the network property value added to the transmission data to the packet transmission function block 185 for requesting the packet transmission function block 185 to transmit the data and the header with the network property value. A transmission data packet 1817 is transmitted by the packet transmission function block 185 onto the data communication network assigned with the network property value of the data. If the data transmission permission decision function block 184 does not permit the data transmission, then in step S128, the data transmission permission decision function block 184 informs the alarm function block 186 that the data transmission is not permitted. The alarm function block 186 informs the user that the data transmission is not permitted. The difference of this embodiment from the first embodiment may also be applicable to the above second to tenth embodiments, so as to modify the data communication terminals of the second to tenth embodiments in accordance with this eleventh embodiment.

### TWELFTH EMBODIMENT:

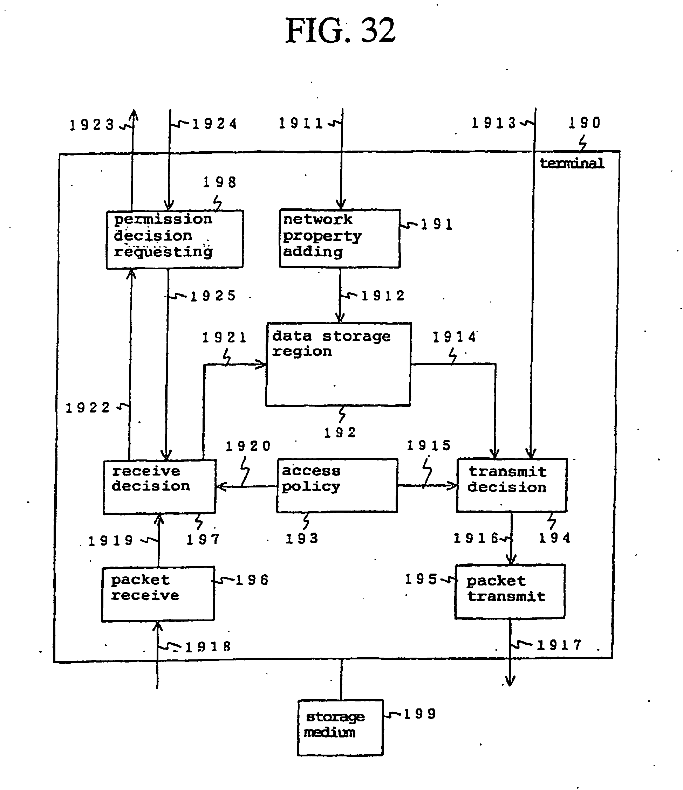

A twelfth embodiment according to the present invention will be described in detail with reference to the drawings. The twelfth embodiment is applicable to the data communication system shown in FIG. 1 and described in the first embodiment. FIG. 32 is a block diagram of an internal structure of the data communication terminal of the twelfth embodiment in accordance with the present invention. A data communication terminal 190 may include a network property value addition function block 191, a data storage region 192, an access policy storage unit 193, a data transmission permission decision function block 194, a packet transmission function block 195, a packet receiving function block 196, a data receiving permission decision function block 197, a data receiving permission decision request function block 198 and a storage medium 199 for storing one or more programs to be executed by the above respective function blocks. The storage medium 199 may be realized by any available storage means such as read only memory or integrated circuit memory.

In this embodiment, an additional provision of the data receiving permission decision request function block 198 as well as modification to the operations of the data receiving permission decision function block 197 are different from the third embodiment. The network property value addition function block 191 is provided for adding a determined network property value to data 1911 which have been entered by user of the data communication terminal 190 for allowing the data 1912 together with the added network property value to be stored in the data storage region 192.

The data storage region 192 stores the data and the network property values added by the network property value addition function block 19. The access policy storage unit 193 stores not only a transmission policy but also a receiving policy. The transmission policy allows a decision, based on the transmission policy, of the permission of transmission of the data stored in the data storage region 192 to other data communication terminals over the data communication networks. The receiving policy allows a decision, based on the receiving policy, of the permission of receipt of the data from other data communication terminals over the data communication networks. The processes or operations shown by the data transmission permission decision function block 194 are implemented by execution of the program from the storage medium 199 as shown in FIG. 5 and described in the first embodiment. With reference back to FIG. 5, in steps S1 and S2, the data transmission permission decision function block 194 is started upon receipt of a data transmission request 1913. In step S3, the data transmission permission decision function block 194 retrieves the transmission data from the data storage region 192 and obtains the network property value added to the retrieved transmission data 1914. In step S4, the data transmission permission decision function block 194 reads out the transmission policy 1915 from the access policy storage unit 193. In step S5, the data transmission permission decision function block 194 refers the network property value assigned to the data communication network connected with one or more data communication terminals, to which the data transmission is intended to be made, and also refers the network property value assigned to the data communication network connected with the present data communication terminal 190, so that the data transmission permission decision function block 194 makes a decision on the permissibility of the data transmission based on the referred network property values. In step S6, if the data transmission permission decision function block 194 decides that the data transmission is permitted based on the transmission policy, then in step S7 the data transmission permission decision function block 194 transfers the transmission data 1916 along with the network property value added to the transmission data to the packet transmission function block 195 for requesting the packet transmission function block 195 to transmit the data and the header with the network property value. A transmission data packet 1917 is transmitted by the packet transmission function block 195 onto the data communication network assigned with the network property value of the data. If the data communication terminal as "sender", from which the data are transmitted, is connected to plural data communication networks, the data transmission permission decision function block 194 refers the network property value assigned to the data communication network, via which the data transmission is intended to be made. If the data communication terminal as "receiver", to which the data are transmitted, is connected to plural data communication networks, the data transmission permission decision function block 194 refers the network property value assigned to the data communication network, via which the data transmission as "receiver" is intended to receive the transmitted data.

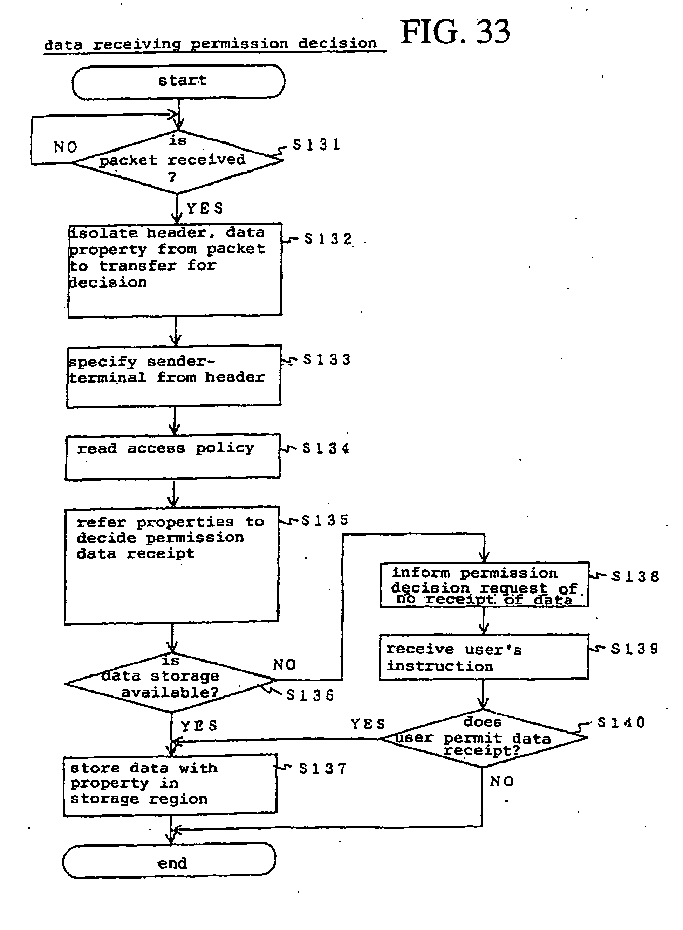

FIG. 33 is a flow chart illustrative of a typical example of processes or operations shown by the data receiving permission decision function block included in the data communication terminal of FIG. 32. The processes or operations shown by the data receiving permission decision function block 197 are implemented by execution of the program from the storage medium 199. In step S131, the packet receiving function block 196 receives a packet 1918. In step S132, the packet receiving function block 196 isolates a transmission control header, a network property value and the data from the received packet 1918. The packet receiving function block 196 sends a set 1919 of the isolated transmission control header, the network property value and the data to the data receiving permission decision function block 197. In step S133, the data receiving permission decision function block 197 specifies a "sender" data communication terminal based on the received transmission control header. In step S134, the data receiving permission decision function block 197 reads out the receiving policy 1920 from the access policy storage unit 193. In step S135, the data receiving permission decision function block 197 refers a network property value which is assigned to the data communication network connected with the "sender" data communication terminal, and also refers the network property value received from the packet receiving function block 196, so that the data receiving permission decision function block 197 makes a decision on the permissibility of the data receiving with reference to the above both network property values. In step S136, if the data receiving permission decision function block 197 decides that the data receiving is permitted based on the receiving policy 1920, then in step S 137, the data receiving permission decision function block 197 sends the received data 1921 together with the network property value of the received data to the data storage region 192. If in step S136 the data receiving permission decision function block 197 decides that the data receiving is not permitted based on the receiving policy 1920, then in step S138, the data receiving permission decision function block 197 sends the data receiving permission decision request function block 198 an information 1922 to the effect that the data receiving is not permitted. In step S139, the data receiving permission decision request function block 198 sends user an information 1923 to the effect that the data receiving is not permitted. The data receiving permission decision request function block 198 receives an user's instruction 1924. In step S140, if the received user's instruction 1924 is to permit the data receiving, then the data receiving permission decision request function block 198 sends the user's instruction to the data receiving permission decision function block 197, so that the data receiving permission decision function block 197 sends the received data 1921 together with the network property value of the received data to the data storage region 192. If, however, the received user's instruction 1924 is not to permit the data receiving, then the data receiving permission decision request function block 198 sends the user's instruction to the data receiving permission decision function block 197, so that the data receiving permission decision function block 197 does not send the received data 1921 together with the network property value of the received data to the data storage region 192. If the sender data communication terminal as "sender", from which the data are transmitted, is connected to plural data communication networks, the data receiving permission decision function block 197 refers the network property value assigned to the data communication network, via which the data transmission was made. If the present data communication terminal as "receiver", to which the data were transmitted, is connected to plural data communication networks, the data receiving permission decision function block 197 refers the network property value assigned to the data communication network, via which the present data transmission as "receiver" receives the transmitted data. The difference of this embodiment from the third embodiment may also be applicable to the fourth and fifth embodiments, so as to modify the data communication terminal of the fourth and fifth embodiments in accordance with this twelfth embodiment.

### THIRTEENTH EMBODIMENT :

An thirteenth embodiment according to the present invention will be described in detail with reference to the drawings. The thirteenth embodiment is applicable to the data communication system shown in FIG. 1 and described in the first embodiment. The data communication terminal of this embodiment has the same structure as the eighth embodiment shown in FIG. 24. A data communication terminal 120 may include a data storage region selecting function block 121, plural data storage regions 122, 123 and 124, an access policy storage unit 125, a data transmission permission decision function block 126, a packet transmission function block 127, a packet receiving function block 128, a data receiving permission decision function block 129, a received data storage region selecting function block 130 and a storage medium 131 for storing one or more programs to be executed by the above respective function blocks. The storage medium 131 may be realized by any available storage means such as read only memory or integrated circuit memory. The number of the plural data storage regions may be three as shown by the reference numerals 122, 123 and 124 but should not be limited to three. In this embodiment, a plurality of data storage regions is provided.

In this embodiment, modifications in operation of the data receiving permission decision function block 129 and the received data storage region selecting function block 130 are different from the eighth embodiment, The data storage region selecting function block 121 is provided for adding a user-designated network property value to data 1211 which have been entered by user of the data communication terminal 120 for allowing the data 1213 together with the added network property value to be stored in the data storage regions 122, 123 and 124. The operations or processes of the data storage region selecting function block 121 may be implemented by execution of the program from the storage medium 131 as shown in FIG. 18 and described in the sixth embodiment. In step S51, the data storage region selecting function block 121 receives an entry of data 1211 and a network property value 1212 from user. In step S52, the data storage region selecting function block 121 also selects one of the data storage regions 122, 123 and 124, wherein the selected one of the data storage regions 122, 123 and 124 has the same network property value as the user's designated network property value 1212 received from user. The data storage region selecting function block 121 sends the data 1213 to the selected one of the data storage regions 122, 123 and 124 for storing the data 1213 therein. The access policy storage unit 125 stores not only a transmission policy but also a receiving policy. The transmission policy allows a decision, based on the transmission policy, of the permission of transmission of the data stored in the data storage region 122, 123 or 124 to other data communication terminals over the data communication networks. The receiving policy allows a decision, based on the receiving policy, of the permission of receipt of the data from other data communication terminals over the data communication networks. The processes or operations shown by the data transmission permission decision function block 126 are implemented by execution of the program from the storage medium 131 as shown in FIG. 20 and as follows. With reference back to FIG. 20, in steps S61 and S62, the data transmission permission decision function block 126 is started upon receipt of a data transmission request 1214. In step S63, the data transmission permission decision function block 126 obtains respective network property values 1215 of the data storage regions 122, 123 and 124. In step S64, the data transmission permission decision function block 126 reads out the transmission policy 1216 from the access policy storage unit 125. In step S65, the data transmission permission decision function block 126 refers the network property value assigned to the data communication network connected with one or more data communication terminals as "receiver", to which the data transmission is intended to be made, and also refers the network property value assigned to the data communication network connected with the present data communication terminal 120 as "sender", so that the data transmission permission decision function block 126 makes a decision on the permissibility of the data transmission based on the referred network property values. In step S66, if the data transmission permission decision function block 126 decides that the data transmission is permitted based on the transmission policy, then in step S67 the data transmission permission decision function block 126 transfers the transmission data 1217 along with the network property value of the data storage region 122, 123 or 124 stored the transmission data to the packet transmission function block 127 for requesting the packet transmission function block 127 to transmit the data and the header with the network property value. A transmission data packet 1218 is transmitted by the packet transmission function block 127 onto the data communication network assigned with the network property value of the data. If the data communication terminal as "sender", from which the data are transmitted, is connected to plural data communication networks, the data transmission permission decision function block 126 refers the network property value assigned to the data communication network, via which the data transmission is intended to be made. If the data communication terminal as "receiver", to which the data are transmitted, is connected to plural data communication networks, the data transmission permission decision function block 126 refers the network property value assigned to the data communication network, via which the data transmission as "receiver" is intended to receive the transmitted data.

FIG.. 34 is a flow chart illustrative of a typical example of processes or operations shown by the data receiving permission decision function block included in the data communication terminal of FIG. 24. The processes or operations shown by the data receiving permission decision function block 129 are implemented by execution of the program from the storage medium 131. In step S141, the packet receiving function block 128 receives a packet 1219. In step S142, the packet receiving function block 128 isolates a transmission control header, a network property value and the data from the received packet 1219. The packet receiving function block 128 sends a set 1220 of the isolated transmission control header, the network property value and the data to the data receiving permission decision function block 129. In step S 143, the data receiving permission decision function block 129 specifies a "sender" data communication terminal based on the received transmission control header. In step S144, the data receiving permission decision function block 129 reads out the receiving policy 1221 from the access policy storage unit 125. In step S145, the data receiving permission decision function block 129 refers a network property value which is assigned to the data communication network connected with the "sender" data communication terminal, and also refers the network property value received from the packet receiving function block 128 as well as refers a network property value which is assigned to the data communication network connected with the present data communication terminal as "receiver", so that the data receiving permission decision function block 129 makes a decision on the permissibility of the data receiving with reference to the above respective network property values. In step S146, if the data receiving permission decision function block 129 decides that the data receiving is permitted based on the receiving policy, then in step S147, the data receiving permission decision function block 129 sends the received data 1222 together with the network property value of the received data to the data storage region 122, 123 or 124. If, however, the data receiving permission decision function block 129 decides that the data receiving is not permitted based on the receiving policy 1221, then in step S148, the data receiving permission decision function block 129 sends the received data storage region selecting function block 130 an information 1223 that the data receiving is not permitted. In step S 149, the received data storage region selecting function block 130 sends user an information 1224 that the data receiving is not permitted. The received data storage region selecting function block 130 receives an user's instruction 1225. The data receiving permission decision function block 129 receives an user's instruction 1226 from the received data storage region selecting function block 130. In step S150, if the received user's instruction 1226 is to permit the data receiving, then the data receiving permission decision function block 129 sends the received data 1222 together with the network property value of the received data to user's designated one of the data storage regions 122, 123 and 124. If the sender data communication terminal as "sender", from which the data are transmitted, is connected to plural data communication networks, the data receiving permission decision function block 129 refers the network property value assigned to the data communication network, via which the data transmission was made. If the present data communication terminal as "receiver", to which the data were transmitted, is connected to plural data communication networks, the data transmission receiving decision function block 129 refers the network property value assigned to the data communication network, via which the present data communication terminal as "receiver" receives the transmitted data. The difference of this embodiment from the eighth embodiment may also be applicable to the ninth and tenth embodiments, so as to modify the data communication terminal of the ninth and tenth embodiments in accordance with this thirteenth embodiment.

### FOURTEENTH EMBODIMENT:

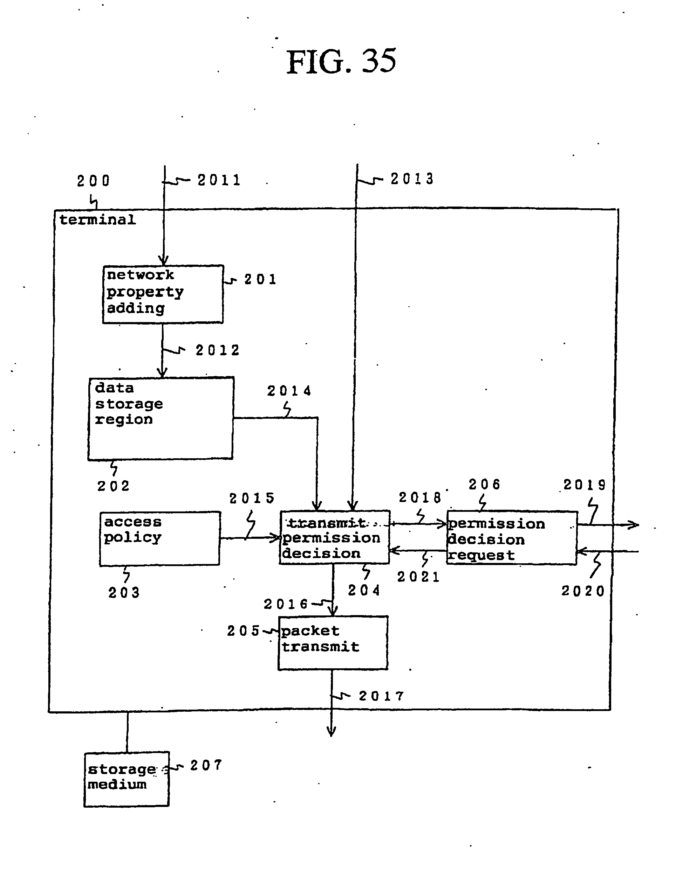

A fourteenth embodiment according to the present invention will be described in detail with reference to the drawings. The fourteenth embodiment is applicable to the data communication system shown in FIG. 1 and described in the first embodiment. FIG. 35 is a block diagram of an internal structure of the data communication terminal of the fourteenth embodiment in accordance with the present invention. A data communication terminal 200 may include a network property value addition function block 201, a data storage region 202, an access policy storage unit 203, a data transmission permission decision function block 204, a packet transmission function block 205, a data transmission permission decision request function block 206 and a storage medium 207 for storing one or more programs to be executed by the above respective function blocks. The storage medium 207 may be realized by any available storage means such as read only memory or integrated circuit memory.

In this embodiment, an additional provision of the data transmission permission decision request function block 206 and a modification to the operation of the data transmission permission decision function block 204 are different from the first embodiment. The network property value addition function block 201 is provided for adding a user-designated network property value to data 2011 which have been entered by user of the data communication terminal 200 for allowing the data 2012 together with the added network property value to be stored in the data storage region 202. The operations or processes of the network property value addition function block 201 may be implemented by execution of the program from the storage medium 207, which are described in the second embodiment with reference to FIG. 8. In step S11, the network property value addition function block 201 receives an entry of the data from user with a request for storing the data into the data storage region 202. In step S12, the network property value addition function block 201 also receives a designation of the network property value from the user. In step S 13, the network property value addition function block 201 adds the user-designated network property value to the data, and sends the data 2012 with the user-designated network property value to the data storage region 202 for storing the same. The data storage region 202 stores the data and the network property values added by the network property value addition function block 201. The access policy storage unit 203 stores an access policy or a transmission policy for allowing a decision, based on the transmission policy, of the permission of transmission of the data stored in the data storage region 202 to other data communication terminals over the data communication networks.

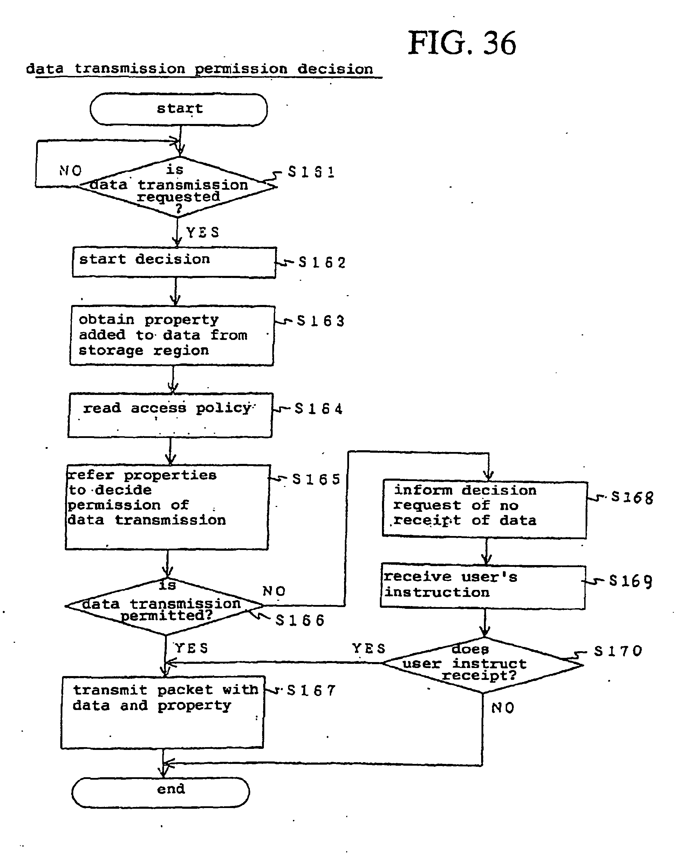

FIG. 36 is a flow chart of operations of the data transmission permission decision function block included in the data communication terminal of FIG. 35. The processes or operations shown by the data transmission permission decision function block 204 are implemented by execution of the program from the storage medium 207. In steps S161 and S162, the data transmission permission decision function block 204 is started upon receipt of a data transmission request 2013. In step S163, the data transmission permission decision function block 204 retrieves the transmission data from the data storage region 202 and obtains the network property value added to the retrieved transmission data 2014. In step S 164, the data transmission permission decision function block 204 reads out the transmission policy 2015 from the access policy storage unit 203. In step S165, the data transmission permission decision function block 204 refers the network property value assigned to the data communication network connected with one or more data communication terminals, to which the data transmission is intended to be made, and also refers the network property value assigned to the data communication network connected with the present data communication terminal 200, so that the data transmission permission decision function block 204 makes a decision on the permissibility of the data transmission based on the referred network property values. In step S166, if the data transmission permission decision function block 204 decides that the data transmission is permitted based on the transmission policy 2015, then in step S167 the data transmission permission decision function block 204 transfers the transmission data 2016 along with the network property value added to the transmission data to the packet transmission function block 205 for requesting the packet transmission function block 205 to transmit the data and the header with the network property value. A transmission data packet 2017 is transmitted by the packet transmission function block 205 onto the data communication network assigned with the network property value of the data. If, however, the data transmission permission decision function block 204 decides that the data transmission is not permitted based on the transmission policy 2015, then in step S168 the data transmission permission decision function block 204 sends the data transmission permission decision request function block 206 an information 2018 to the effect that the data transmission is not permitted. In step S169, the data transmission permission decision request function block 206 sends user an information 2019 to the effect that the data transmission is not permitted. The data transmission permission decision request function block 206 receives an user's instruction 2020. In step S170, if the user's instruction 2020 is to transmit the data, then in step S167, the data transmission permission decision request function block 206 sends the data transmission permission decision function block 204 the received user's instruction 2021. The data transmission permission decision function block 204 transfers the transmission data 2016 along with the network property value added to the transmission data to the packet transmission function block 205 for requesting the packet transmission function block 205 to transmit the data and the header with the network property value. A transmission data packet 2017 is transmitted by the packet transmission function block 205 onto the data communication network assigned with the network property value of the data. The difference of this embodiment from the first embodiment may also be applicable to the second to thirteenth embodiments, so as to modify the data communication terminal of the second to thirteenth embodiments in accordance with this fourteenth embodiment.

### FIFTEENTH EMBODIMENT :

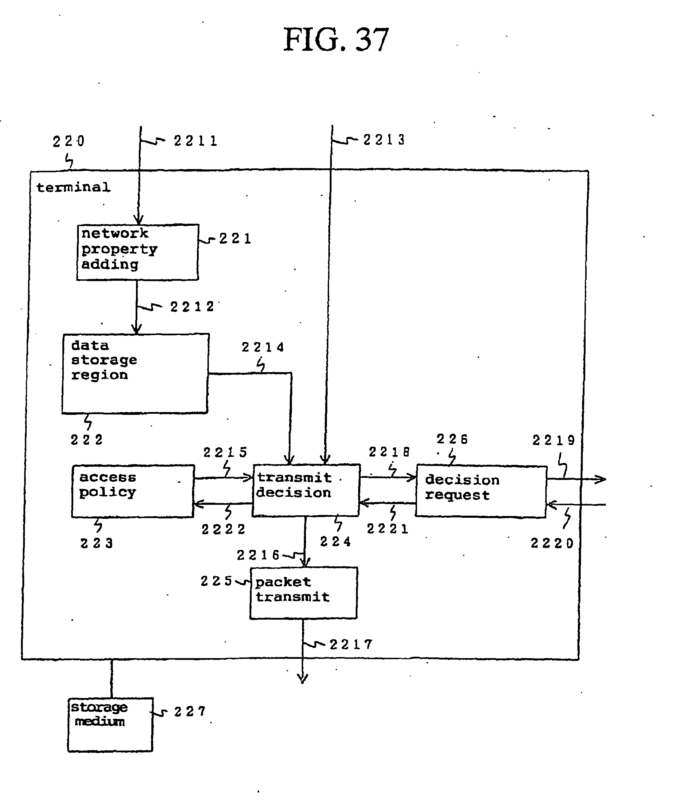

A fifteenth embodiment according to the present invention will be described in detail with reference to the drawings. The fifteenth embodiment is applicable to the data communication system shown in FIG. 1 and described in the first embodiment. FIG. 37 is a block diagram of an internal structure of the data communication terminal of the fifteenth embodiment in accordance with the present invention. A data communication terminal 220 may include a network property value addition function block 221, a data storage region 222, an access policy storage unit 223, a data transmission permission decision function block 224, a packet transmission function block 225, a data transmission permission decision request function block 226 and a storage medium 227 for storing one or more programs to be executed by the above respective function blocks. The storage medium 227 may be realized by any available storage means such as read only memory or integrated circuit memory.

In this embodiment, modifications to the respective operations of the access policy storage unit 223 and the data transmission permission decision function block 224 are different from the fourteenth embodiment. The network property value addition function block 221 is provided for adding a user-designated network property value to data 2211 which have been entered by user of the data communication terminal 220 for allowing the data 2212 together with the added network property value to be stored in the data storage region 222. The operations or processes of the network property value addition function block 221 may be implemented by execution of the program from the storage medium 227, which are described in the second embodiment with reference to FIG. 8. In step S11, the network property value addition function block 221 receives an entry of the data from user with a request for storing the data into the data storage region 222. In step S 12, the network property value addition function block 221 also receives a designation of the network property value from the user. In step S 13, the network property value addition function block 221 adds the user-designated network property value to the data, and sends the data 2212 with the user-designated network property value to the data storage region 222 for storing the same. The data storage region 222 stores the data and the network property values added by the network property value addition function block 221. The access policy storage unit 223 stores an access policy or a transmission policy for allowing a decision, based on the transmission policy, of the permission of transmission of the data stored in the data storage region 222 to other data communication terminals over the data communication networks.

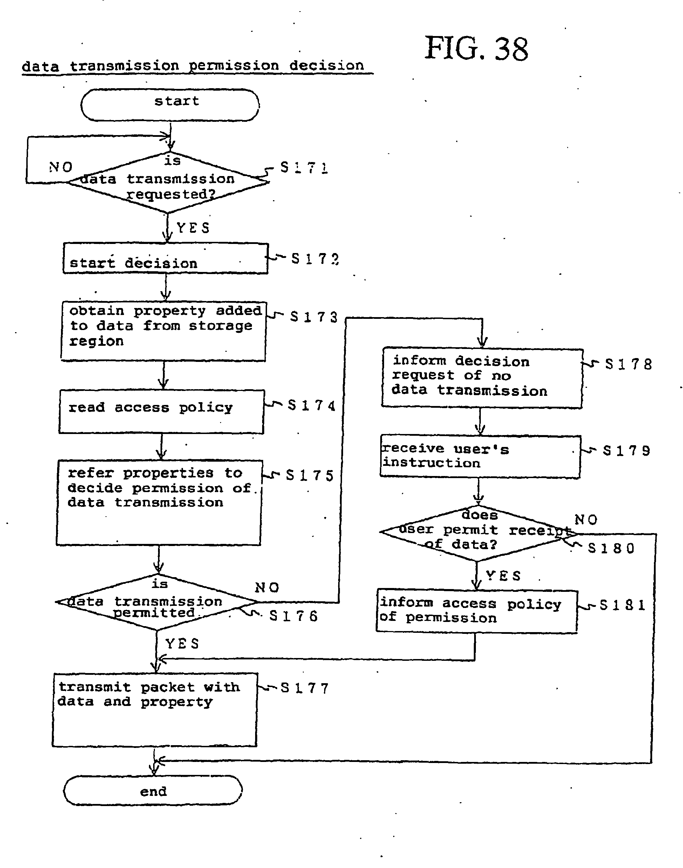

FIG. 38 is a flow chart of operations of the data transmission permission decision function block included in the data communication terminal of FIG. 37. The processes or operations shown by the data transmission permission decision function block 224 are implemented by execution of the program from the storage medium 227. In steps S171 and S172, the data transmission permission decision function block 224 is started upon receipt of a data transmission request 2213. In step S173, the data transmission permission decision function block 224 retrieves the transmission data from the data storage region 222 and obtains the network property value added to the retrieved transmission data 2214. In step S174, the data transmission permission decision function block 224 reads out the transmission policy 2215 from the access policy storage unit 223. In step S175, the data transmission permission decision function block 224 refers the network property value assigned to the data communication network connected with one or more data communication terminals, to which the data transmission is intended to be made, and also refers the network property value assigned to the data communication network connected with the present data communication terminal 220, so that the data transmission permission decision function block 224 makes a decision on the permissibility of the data transmission based on the referred network property values. In step S 176, if the data transmission permission decision function block 224 decides that the data transmission is permitted based on the transmission policy 2215, then in step S177 the data transmission permission decision function block 224 transfers the transmission data 2216 along with the network property value added to the transmission data to the packet transmission function block 225 for requesting the packet transmission function block 225 to transmit the data and the header with the network property value. A transmission data packet 2217 is transmitted by the packet transmission function block 225 onto the data communication network assigned with the network property value of the data. If, however, the data transmission permission decision function block 224 decides that the data transmission is not permitted based on the transmission policy 2215, then in step S178 the data transmission permission decision function block 224 sends the data transmission permission decision request function block 226 an information 2218 to the effect that the data transmission is not permitted. In step S 179, the data transmission permission decision request function block 226 sends user an information 2219 to the effect that the data transmission is not permitted. The data transmission permission decision request function block 226 receives an user's instruction 2220. In step S180, if the user's instruction 2220 is to transmit the data, then the data transmission permission decision request function block 226 sends the data transmission permission decision function block 224 the received user's instruction 2221. In step S181, the data transmission permission decision function block 224 further sends the access policy storage unit 223 an information 2222 to the effect that the data transmission is permitted. The access policy storage unit 223 makes a time-limited registration, on the transmission policy, of the information 2222 to the effect that the data transmission is permitted. In step S177, the data transmission permission decision function block 224 transfers the transmission data 2216 along with the network property value added to the transmission data to the packet transmission function block 225 for requesting the packet transmission function block 225 to transmit the data and the header with the network property value. A transmission data packet 2217 is transmitted by the packet transmission function block 225 onto the data communication network assigned with the network property value of the data. The difference of this embodiment from the fourteenth embodiment may also be applicable to the twelfth and thirteenth embodiments, so as to modify the data communication terminal of the twelfth and thirteenth embodiments in accordance with this fifteenth embodiment.

### SIXTEENTH EMBODIMENT:

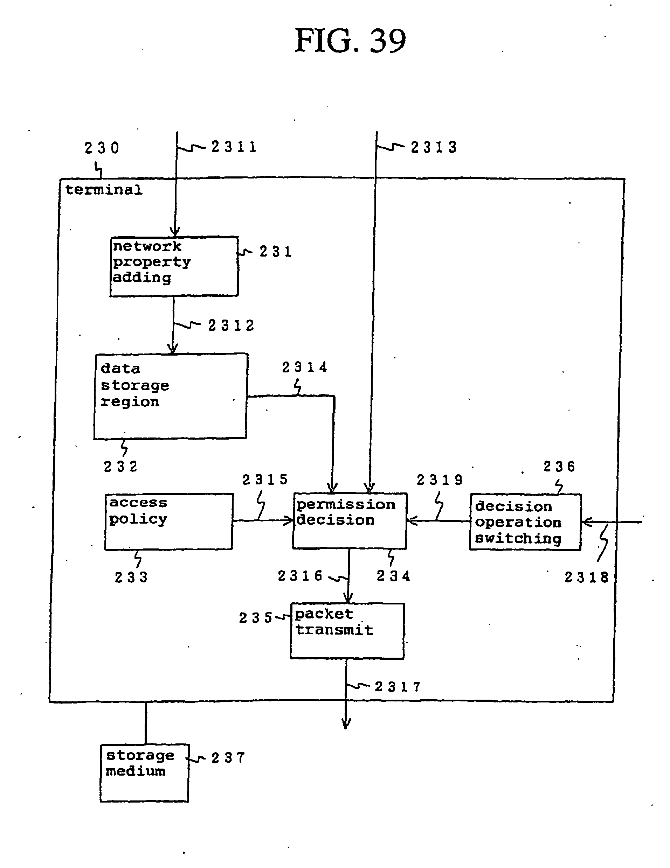

A sixteenth embodiment according to the present invention will be described in detail with reference to the drawings. The sixteenth embodiment is applicable to the data communication system shown in FIG. 1 and described in the first embodiment. FIG. 39 is a block diagram of an internal structure of the data communication terminal of the sixteenth embodiment in accordance with the present invention. A data communication terminal 230 may include a network property value addition function block 231, a data storage region 232, an access policy storage unit 233, a data transmission permission decision function block 234, a packet transmission function block 235, a data transmission permission decision operation inhibiting function block 236 and a storage medium 237 for storing one or more programs to be executed by the above respective function blocks. The storage medium 237 may be realized by any available storage means such as read only memory or integrated circuit memory.

In this embodiment, an additional provision of the data transmission permission decision operation inhibiting function block 236 and a modification to the operation of the data transmission permission decision function block 234 are different from the first embodiment. The network property value addition function block 231 is provided for adding a user-designated network property value to data 2311 which have been entered by user of the data communication terminal 230 for allowing the data 2312 together with the added network property value to be stored in the data storage region 232. The operations or processes of the network property value addition function block 231 may be implemented by execution of the program from the storage medium 237 which have been described in the second embodiment with reference to FIG. 8. In step S11, the network property value addition function block 231 receives an entry of the data from user with a request for storing the data into the data storage region 232. In step S12, the network property value addition function block 231 also receives a designation 2318 of the network property value from the user. In step S13, the network property value addition function block 231 adds the user-designated network property value to the data, and sends the data 2312 with the user-designated network property value to the data storage region 232 for storing the same. The data storage region 232 stores the data and the network property values added by the network property value addition function block 231. The access policy storage unit 233 stores an access policy or a transmission policy for allowing a decision, based on the transmission policy, of the permission of transmission of the data stored in the data storage region 232 to other data communication terminals over the data communication networks.

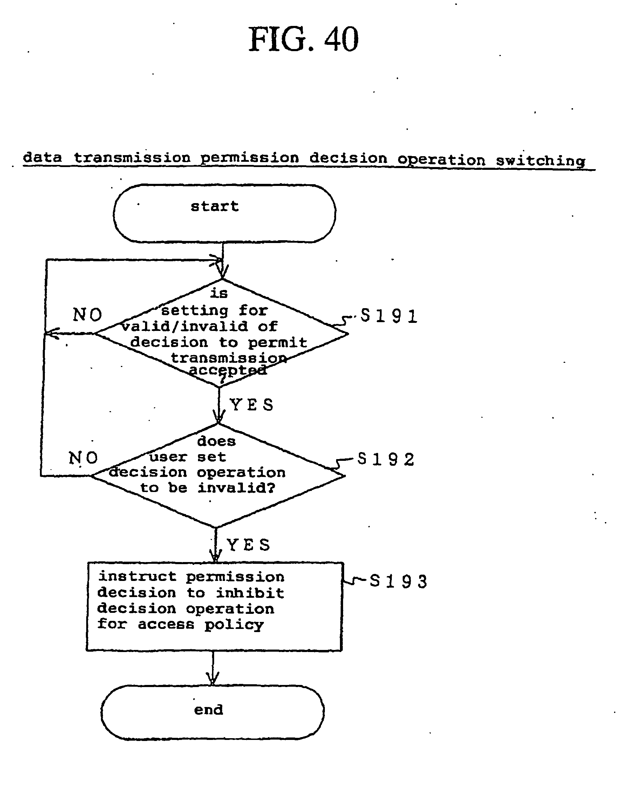

FIG. 40 is a flow chart of operations or processes of the data transmission permission decision operation inhibiting function block included in the data communication terminal of FIG. 39. The processes or operations shown by the data transmission permission decision operation inhibiting function block 236 are implemented by execution of the program from the storage medium 237. In step S191, the data transmission permission decision operation inhibiting function block 236 receives an user's instruction 2318 on whether operation of the data transmission permission decision function block 234 should be made valid or invalid. In step S192, if the user's instruction 2318 is to make invalid operation of the data transmission permission decision function block 234, then in step S193 the data transmission permission decision operation inhibiting function block 236 sends the data transmission permission decision function block 234 an instruction 2319 that the data transmission permission decision function block 234 is not permitted to make any decision on the permissibility o the data transmission based on the transmission policy 2315. The data transmission permission decision function block 234, therefore, does not make any decision on the permissibility o the data transmission based on the transmission policy 2315 even upon receipt of the user's data transmission request 2313. The data transmission permission decision function block 234 automatically transfers the transmission data 2316 along with the network property value added to the transmission data to the packet transmission function block 235 for requesting the packet transmission function block 235 to transmit the data and the header with the network property value. A transmission data packet 2317 is transmitted by the packet transmission function block 235 onto the data communication network assigned with the network property value of the data. In step S 192, if the user's instruction 2318 is to make valid operation of the data transmission permission decision function block 234, then the data transmission permission decision function block 234 refers the network property value assigned to the data communication network connected with one or more data communication terminals, to which the data transmission is intended to be made, and also refers the network property value assigned to the data communication network connected with the present data communication terminal 230, so that the data transmission permission decision function block 234 makes a decision on the permissibility of the data transmission based on the referred network property values. If the data transmission permission decision function block 234 makes a decision that the data transmission is permitted based on the transmission policy 2315, then the data transmission permission decision function block 234 transfers the transmission data 2316 along with the network property value added to the transmission data to the packet transmission function block 235 for requesting the packet transmission function block 235 to transmit the data and the header with the network property value. A transmission data packet 2317 is transmitted by the packet transmission function block 235 onto the data communication network assigned with the network property value of the data. The difference of this embodiment from the first embodiment may also be applicable to the second to fifteenth embodiments, so as to modify the data communication terminal of the second to fifteenth embodiments in accordance with this sixteenth embodiment.

### SEVENTEENTH EMBODIMENT:

A seventeenth embodiment according to the present invention will be described in detail with reference to the drawings. The seventeenth embodiment is applicable to the data communication system shown in FIG. 1 and described in the first embodiment. The structure of the data communication terminal of the seventeenth embodiment is the same as the first embodiment shown in FIG. 2. A data communication terminal 1 may include a network property value addition function block 11, a data storage region 12, an access policy storage unit 13, a data transmission permission decision function block 14, a packet transmission function block 15, and a storage medium 16 for storing one or more programs to be executed by the above respective function blocks. The storage medium 16 may be realized by any available storage means such as read only memory or integrated circuit memory.

In this embodiment, modifications to the respective operations of the data transmission permission decision function block 14 and the packet transmission function block 15 are different from the first embodiment. The network property value addition function block 11 is provided for adding a user-designated network property value to data 111 which have been entered by user of the data communication terminal 1 for allowing the data 112 together with the added network property value to be stored in the data storage region 12. The data storage region 12 stores the data and the network property values added by the network property value addition function block 11. The access policy storage unit 13 stores an access policy or a transmission policy for allowing a decision, based on the transmission policy, of the permission of transmission of the data stored in the data storage region 12 to other data communication terminals over the data communication networks.

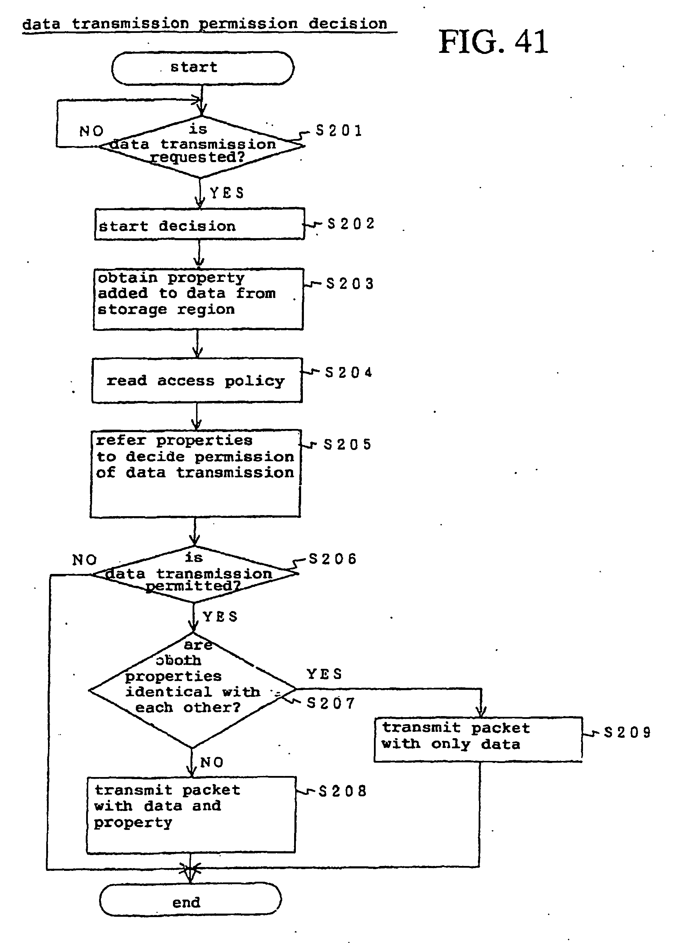

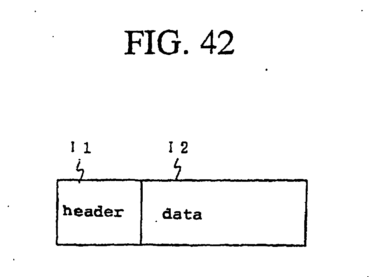

FIG. 41 is a flow chart of operations of the data transmission permission decision function block included in the data communication terminal of FIG. 2. The processes or operations shown by the data transmission permission decision function block 14 are implemented by execution of the program from the storage medium 16 as shown in FIG. 5 and described in the first embodiment. In steps S201 and S202, the data transmission permission decision function block 14 is started upon receipt of a data transmission request 113. In step S203, the data transmission permission decision function block 14 retrieves the transmission data from the data storage region 12 and obtains the network property value added to the retrieved transmission data 114. In step S204, the data transmission permission decision function block 14 reads out the transmission policy 115 from the access policy storage unit 13. In step S205, the data transmission permission decision function block 14 refers the network property value assigned to the data communication network connected with one or more data communication terminals, to which the data transmission is intended to be made, and also refers the network property value assigned to the data communication network connected with the present data communication terminal 1, so that the data transmission permission decision function block 14 makes a decision on the permissibility of the data transmission based on the referred network property values. In step S206, if the data transmission permission decision function block 14 decides that the data transmission is permitted based on the transmission policy, then in step S207 the data transmission permission decision function block 14 verifies whether the present data communication terminal 1 as "sender" is connected to the data communication network having the same network property value as the data communication network connected with any data communication terminal as "receiver", to which the data transmission is intended to be made. If both the network property values are identical with each other, then in step S209 the data transmission permission decision function block 14 transfers only the transmission data 116 without the network property value added to the transmission data to the packet transmission function block 15 for requesting the packet transmission function block 15 to transmit the data and the header only without the network property value. A transmission data packet 117 is transmitted by the packet transmission function block 15 onto the data communication network. FIG. 42 is a diagram of a structure of the transmission data packet free of the network property value involved in step S209 of FIG. 41. The transmission data packet 117 includes the header I1 and the data I2. If both the network property values are different from each other, then in step S208 the data transmission permission decision function block 14 transfers the transmission data 116 along with the network property value added to the transmission data to the packet transmission function block 15 for requesting the packet transmission function block 15 to transmit the data and the header with the network property value. A transmission data packet 117 is transmitted by the packet transmission function block 15 onto the data communication network. The difference of this embodiment from the first embodiment may also be applicable to the second to sixteenth embodiments, so as to modify the data communication terminal of the second to sixteenth embodiments in accordance with this seventeenth embodiment.

### EIGHTEENTH EMBODIMENT :

An eighteenth embodiment according to the present invention will be described. This embodiment is different from the first embodiment only in that the network property values indicate two types of the networks, for example, first one is the private network, and the second one is the public network. The difference of this embodiment from the first embodiment may also be applicable to the second to seventeenth embodiments, so as to modify the data communication terminal of the second to seventeenth embodiments in accordance with this eighteenth embodiment.

### NINETEENTH EMBODIMENT :

A nineteenth embodiment according to the present invention will be described. This embodiment is different from the first embodiment only in that the network property values are identifiers which indicate respective organizations. The difference of this embodiment from the first embodiment may also be applicable to the second to eighteenth embodiments, so as to modify the data communication terminal of the second to eighteenth embodiments in accordance with this nineteenth embodiment.

### TWENTIETH EMBODIMENT:

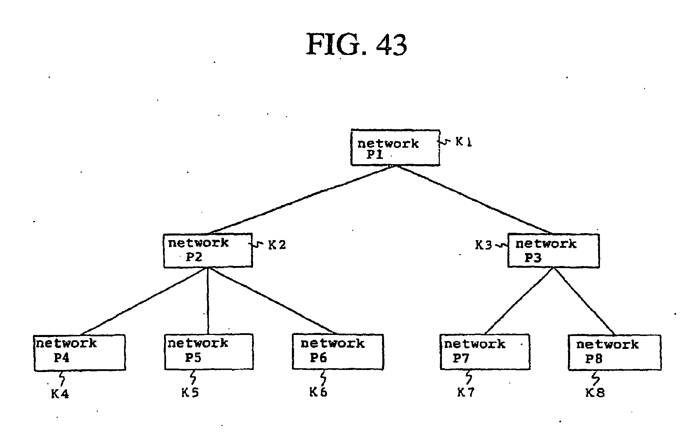

A twentieth embodiment according to the present invention will be described. This embodiment is different from the first embodiment only in that the network property values indicate respective points of a hierarchical network structure. FIG. 43 is a diagram of a typical example of the hierarchical network structure involved in the network property values in the twentieth embodiment in accordance with the present invention. Networks K1-K8 are in the form of a hierarchical network structure, wherein the networks K1-K8 have network property values P1-P8 respectively, which indicate respective points of the hierarchical network structure.

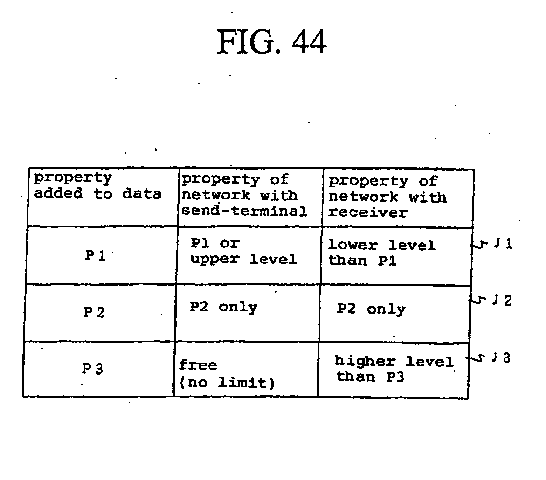

FIG. 44 is a diagram of a typical example of a transmission policy suitable for the hierarchical network structure of FIG. 43. The transmission policy may include tree entries J1, J2 and J3. The entry J1 is that in case of transmission of data added with the network property value P1, if the present data communication terminal as "sender" is connected with the data communication network assigned with a network property value which represents P1 or upper level and further if the data communication terminal as "receiver", to which the data transmission is intended to be made, is assigned with a network property value which represents any lower level than P1, then the data transmission is permitted. The entry J2 is that in case of transmission of data added with the network property value P2, if the present data communication terminal as "sender" is connected with the data communication network assigned with a network property value which represents just P2 and if the data communication terminal as "receiver", to which the data transmission is intended to be made, is assigned with a network property value which also represents just P2, then the data transmission is permitted. The entry J3 is that in case of transmission of data added with the network property value P3, if the data communication terminal as "receiver", to which the data transmission is intended to be made, is assigned with a network property value which represents any higher level than P3, then the data transmission is permitted regardless of the network property value of the data communication network connected with the present data communication terminal as "sender". The difference of this embodiment from the first embodiment may also be applicable to the second to seventeenth embodiments, so as to modify the data communication terminal of the second to seventeenth embodiments in accordance with this twentieth embodiment.

### TWENTY FIRST EMBODIMENT:

A twenty first embodiment according to the present invention will be described. This embodiment is different from the first embodiment only in that the network property values include network-irrelative identifiers which do not specify the networks. The difference of this embodiment from the first embodiment may also be applicable to the second to twentieth embodiments, so as to modify the data communication terminal of the second to twentieth embodiments in accordance with this twenty first embodiment.

### TWENTY SECOND EMBODIMENT :

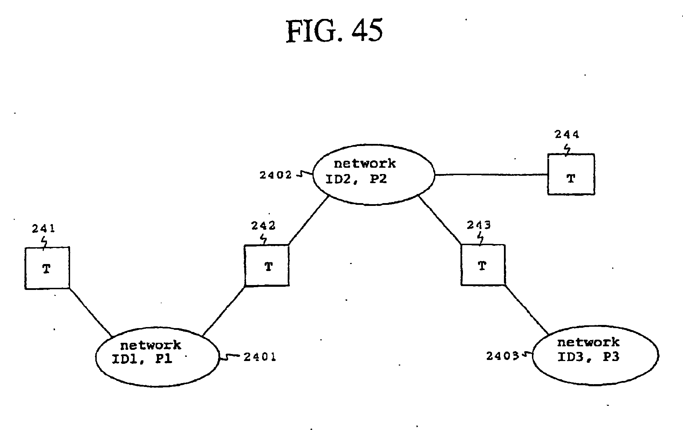

A twenty second embodiment according to the present invention will be described in detail with reference to the drawings. FIG. 45 is a block diagram of a data communication system in a twenty second embodiment in accordance with the present invention. The data communication system in accordance with the present invention may include a plurality of different data communication networks and a plurality of data communication terminals. As one example, it will be assumed that the data communication system includes three different data communication networks 2401, 2402 and 2403 and four data communication terminals 241, 242, 243 and 244. The data communication network 2401 is assigned with a property value P1 and an identifier ID1. The data communication network 2402 is assigned with a property value P2 and an identifier ID2. The data communication network 2403 is assigned with a property value P3 and an identifier ID3. Those property values P1, P2 and P3 may be either different from each other or identical with each other. Those property values P1, P2 and P3 are identifiers which identify the kinds of the networks. Those identifiers ID1, ID2 and ID3 are unique and identify directly the data communication networks 2401, 2402, and 2403 respectively. The data communication terminals 241, 242, 243 and 244 are given respective terminal addresses which uniquely identify those terminals in the data communication system of FIG. 45, so as to make it possible that the network identifiers of the respective networks connected with the terminal are available from the terminal address.

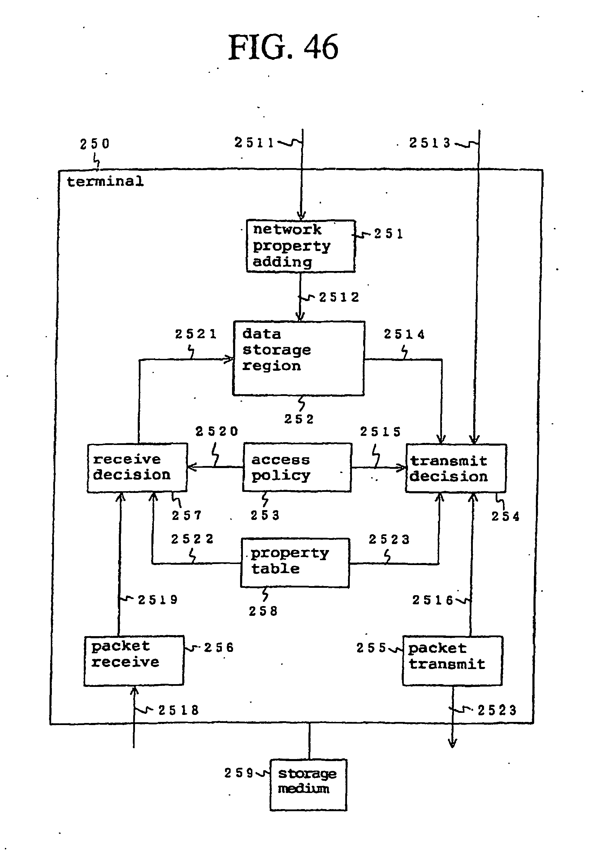

FIG. 46 is a block diagram of an internal structure of the data communication terminal of the twenty second embodiment in accordance with the present invention. A data communication terminal 250 may include a network property value addition function block 251, a data storage region 252, an access policy storage unit 253, a data transmission permission decision function block 254, a packet transmission function block 255, a packet receiving function block 256, a data receiving permission decision function block 257, a network property value table 258 and a storage medium 259 for storing one or more programs to be executed by the above respective function blocks. The storage medium 259 may be realized by any available storage means such as read only memory or integrated circuit memory.

In this embodiment, an additional provision of the network property value table 258 as well as modifications to the respective operations of the data transmission permission decision function block 254 and the data receiving permission decision function block 257 are different from the third embodiment. The network property value addition function block 251 is provided for adding a determined network property value to data 2511 which have been entered by user of the data communication terminal 250 for allowing the data 2512 together with the added network property value to be stored in the data storage region 252. The data storage region 252: stores the data and the network property values added by the network property value addition function block 251. The access policy storage unit 253 stores not only a transmission policy but also a receiving policy. The transmission policy allows a decision, based on the transmission policy, of the permission of transmission of the data stored in the data storage region 252 to other data communication terminals over the data communication networks. The receiving policy allows a decision, based on the receiving policy, of the permission of receipt of the data from other data communication terminals over the data communication networks.

FIG.. 47 is a diagram of a typical example of contents registered on the network property value table included in the data communication terminal of FIG. 46. The network property value table 258 includes three entries L1, L2 and L3, each of which stores a respective correspondence of a network identifier and a network property value. The entry L1 stores a correspondence of ID1 and P1. The entry L2 stores a correspondence of ID2 and P2. The entry L3 stores a correspondence of ID3 and P3.

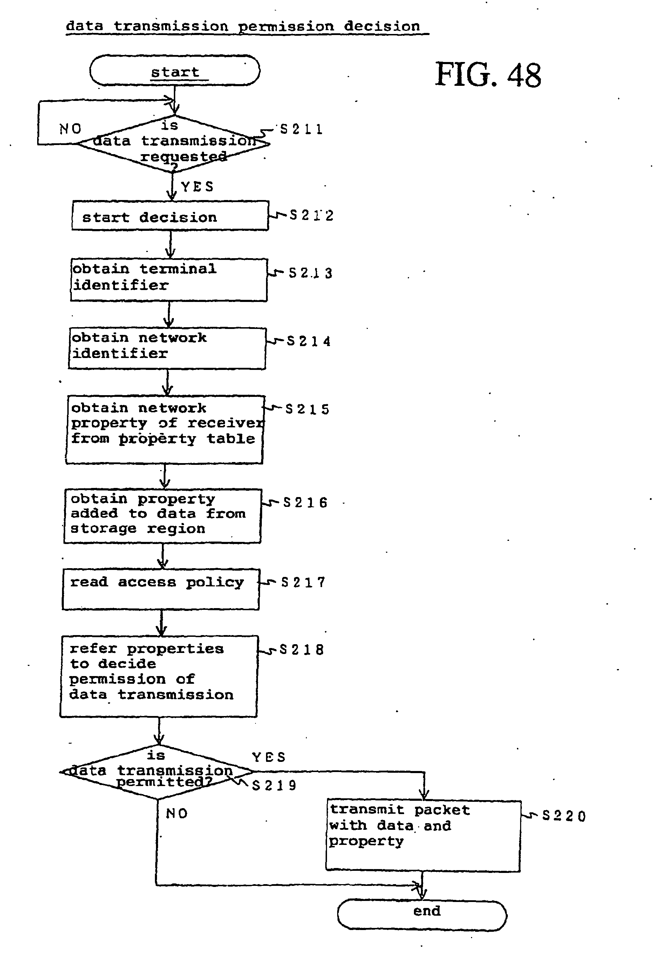

FIG. 48 is a flow chart of operations of the data transmission permission decision function block included in the data communication terminal of FIG. 46. The processes or operations shown by the data transmission permission decision function block 254 are implemented by execution of the program from the storage medium 259. In steps S211 and S212, the data transmission permission decision function block 254 is started upon receipt of a data transmission request 2513. In step S213, the data transmission permission decision function block 254 obtains, from the received data transmission request 2513, a terminal identifier which identifies a data communication terminal as "receiver", to which the data transmission is intended to be made. In step S214, the data transmission permission decision function block 254 also obtains a network identifier which identifies the data transmission network connected with the data communication terminal as "receiver", to which the data transmission is intended to be made. In step S215, the data transmission permission decision function block 254 retrieves the network property value table 258 and obtains the network property value assigned to the data communication network connected with the data communication terminal as "receiver", to which the data transmission is intended to be made. In step S216, the data transmission permission decision function block 254 further retrieves the transmission data from the data storage region 252 and obtains the network property value added to the retrieved transmission data 2514. In step S217, the data transmission permission decision function block 254 reads out the transmission policy 2515 from the access policy storage unit 253. In step S218, the data transmission permission decision function block 254 refers the network property value assigned to the data communication network connected with one or more data communication terminals, to which the data transmission is intended to be made, and also refers the network property value assigned to the data communication network connected with the present data communication terminal 250, so that the data transmission permission decision function block 254 makes a decision on the permissibility of the data transmission based on the referred network property values. In step S219, if the data transmission permission decision function block 254 decides that the data transmission is permitted based on the transmission policy, then in step S220 the data transmission permission decision function block 254 transfers the transmission data 2516 along with the network property value added to the transmission data to the packet transmission function block 255 for requesting the packet transmission function block 255 to transmit the data and the header with the network property value. A transmission data packet 2523 is transmitted by the packet transmission function block 255 onto the data communication network assigned with the network property value of the data. If the data communication terminal as "sender", from which the data are transmitted, is connected to plural data communication networks, the data transmission permission decision function block 254 refers the network property value assigned to the data communication network, via which the data transmission is intended to be made. If the data communication terminal as "receiver", to which the data are transmitted, is connected to plural data communication networks, the data transmission permission decision function block 254 refers the network property value assigned to the data communication network, via which the data transmission as "receiver" is intended to receive the transmitted data.

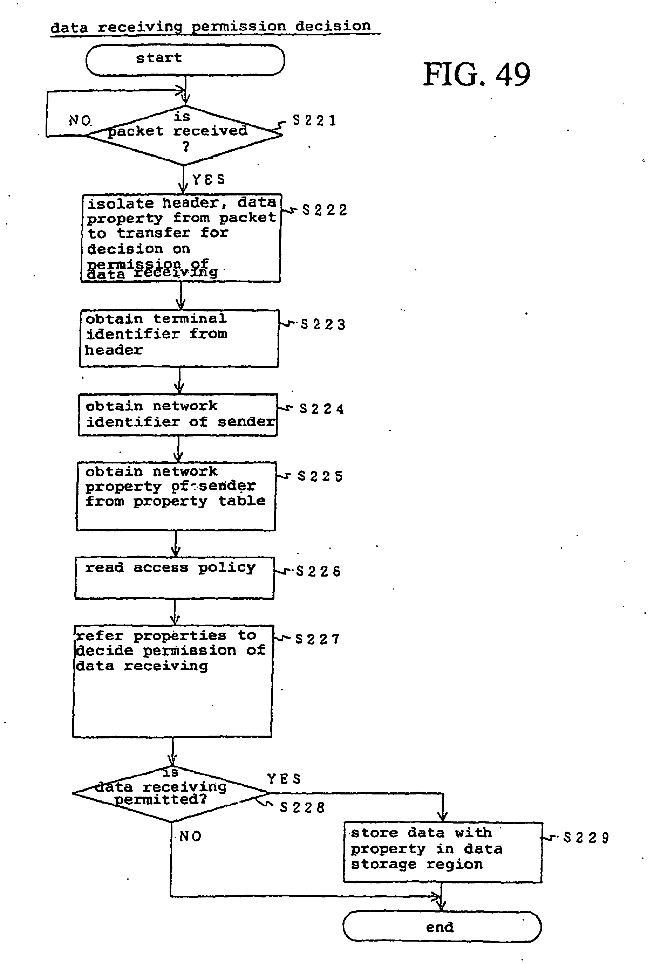

FIG. 49 is a flow chart illustrative of a typical example of processes or operations shown by the data receiving permission decision function block included in the data communication terminal of FIG. 46. The processes or operations shown by the data receiving permission decision function block 257 are implemented by execution of the program from the storage medium 259. In step S221, the packet receiving function block 256 receives a packet 2518. In step S222, the packet receiving function block 256 isolates a transmission control header, a network property value and the data from the received packet 2518. The packet receiving function block 256 sends a set 2519 of the isolated transmission control header, the network property value and the data to the data receiving permission decision function block 257. In step S223, the data receiving permission decision function block 257 obtains, from the received transmission control header, a terminal identifier which identifies a data communication terminal as "sender", from which the data have been transmitted. In step S224, the data receiving permission decision function block 257 also obtains a network identifier which identifies the data communication network connected with the data communication terminal as "sender", from which the data have been transmitted. In step S225, the data receiving permission decision function block 257 retrieves the network property value table 258 and obtains a network property value assigned to the data communication network connected with the data communication terminal as "sender", from which the data have been transmitted. In step S226, the data receiving permission decision function block 257 reads out the receiving policy 2520 from the access policy storage unit 253. In step S227, the data receiving permission decision function block 257 refers a network property value which is assigned to the data communication network connected with the "sender" data communication terminal, and also refers the network property value received from the packet receiving function block 256, so that the data receiving permission decision function block 257 makes a decision on the permissibility of the data receiving with reference to the above both network property values. In step S228, if the data receiving permission decision function block 257 decides that the data receiving is permitted based on the receiving policy, then in step S229, the data receiving permission decision function block 257 sends the received data 2521 together with the network property value of the received data to the data storage region 252. If the sender data communication terminal as "sender", from which the data are transmitted, is connected to plural data communication networks, the data transmission receiving decision function block 257 refers the network property value assigned to the data communication network, via which the data transmission was made. If the present data communication terminal as "receiver", to which the data were transmitted, is connected to plural data communication networks, the data transmission receiving decision function block 257 refers the network property value assigned to the data communication network, via which the present data transmission as "receiver" receives the transmitted data. The difference of this embodiment from the third embodiment may also be applicable to the first and second embodiments and the fourth to twenty first embodiments, so as to modify the data communication terminals of the first and second embodiments and the fourth to twenty first embodiments in accordance with this twenty second embodiment.

### TWENTY THIRD EMBODIMENT:

A twenty third embodiment according to the present invention will be described. This embodiment is different from the first embodiment only in that the data communication terminal 1 has one or more file system which serves as a data storage region. The difference of this embodiment from the first embodiment may also be applicable to the second to twenty second embodiments, so as to modify the data communication terminal of the second to twenty second embodiments in accordance with this twenty third embodiment.

### TWENTY FOURTH EMBODIMENT:

A twenty fourth embodiment according to the present invention will be described. This embodiment is different from the first embodiment only in that the data communication terminal 1 has one or more hard disk which serves as a data storage region. The difference of this embodiment from the first embodiment may also be applicable to the second to twenty second embodiments, so as to modify the data communication terminal of the second to twenty second embodiments in accordance with this twenty fourth embodiment.

## Claims

1. A data communication system including :
a plurality of networks ;
a plurality of terminals allowing the access to said plurality of networks;
wherein each of said plurality of networks is identified with the corresponding network parameter, and
a terminal of a first network possessing a set of access rules for the access to a second terminal of a second network, such that the access rules are based on the parameters of both networks and such that only when the access is permitted according to said access rules the terminal of the first network accesses the terminal of the second network;
**characterized in that** said at least an access rule includes at least a transmission rule for making a decision on permissibility for data transmission to said other terminal, with reference to at least one of said first and second network parameters, so that only when said data transmission is permitted based on said transmission rule then said terminal makes said data transmission to said other terminal.
wherein said at least an access rule further includes, in addition to said at least a transmission rule, at least a receiving rule for making a decision on permissibility for data receiving from said other terminal, with reference to at least one of said first and second network parameters, so that only when said data receiving is permitted based on said receiving rule, then said terminal makes said data receiving from said other terminal.
wherein said terminal is adjusted that a data-accompanying network parameter is added to data entered by user before said data accompanied with said data-accompanying network parameter are stored in at least a data storage region of said terminal, to make said decision on permissibility for at least one of data transmission and data receiving, based on at least one of said at least a transmission rule and said at least a receiving rule, with reference to said first and second network parameters and said data-accompanying network parameter, so that only when said data transmission is permitted based on said transmission rule, then said terminal makes a transmission of said data accompanied with said data-accompanying network parameter to said other terminal, as well as only when said data receiving is permitted based on said receiving rule, then said terminal receives data of said data accompanied with said data-accompanying network parameter from said other terminal.
wherein said terminal is adjusted to allow an user's instruction to set said data-accompanying network parameter to be added to said entered data every time when said entered data are stored in said at least a data storage region.

2. The system as claimed in claim 1, **characterized in that** said first and second network parameters are either identical with or different each other, and said first and second networks are also either identical with or different each other.

3. The system as claimed in claim 1, **characterized in that** said terminal is adjusted to set and change said data-accompanying network parameter stored in said at least a data storage region.

4. The system as claimed in claim 1, **characterized in that** said terminal is adjusted to change said receiving rule.

5. The system as claimed in claim 1, **characterized in that** said terminal is adjusted to inform user that said data receiving is not permitted based on said receiving rule.

6. The system as claimed in claim 1, **characterized in that** said terminal is adjusted that if said data receiving is not permitted based on said receiving rule, then said decision on permissibility of data receiving is made in accordance with an user's instruction.

7. The system as claimed in claim 6, **characterized in that** said terminal is adjusted that if said user's instruction is to permit storing said received data, then a temporary permission for receiving data is added to said receiving rule in a predetermined time period.

8. The system as claimed in claim 1, **characterized in that** said terminal is adjusted to inform user that said data transmission is not permitted based on said transmission rule.

9. The system as claimed in claim 1, **characterized in that** said terminal is adjusted that if said data transmission is not permitted based on said transmission rule, then said decision on permissibility of data transmission is made in accordance with an user's instruction.

10. The system as claimed in claim 9, **characterized in that** said terminal is adjusted that if said user's instruction is to permit transmitting said data, then a temporary permission for transmitting data is added to said transmission rule in a predetermined time period.

11. The system as claimed in claim 1, **characterized in that** said terminal is adjusted to allow an entered user's instruction to make invalid said decision on permissibility for access based on said access rule.

12. The system as claimed in claim 1, **characterized in that** said network parameter includes identifiers which identify a private network and a public network respectively.

13. The system as claimed in claim 1, **characterized in that** said network parameter includes identifiers which identify different network providers respectively.

14. The system as claimed in claim 1, **characterized in that** said network parameter includes identifiers which identify respective node points included in a hierarchical network structure.

15. The system as claimed in claim 1, **characterized in that** said network parameter which specifies every network.

16. The system as claimed in claim 1, **characterized in that** each of said plurality of network is assigned with each network identifier which uniquely identifies said each network, and said each terminal is adjusted to specify said other terminal, to which said each terminal makes an access, based on a terminal address which includes said each network identifier.

17. The system as claimed in claim 16, **characterized in that** said terminal is adjusted to hold respective correspondence between said each network identifier and said each network parameter assigned to a network which is also assigned to said each network identifier for obtaining a network identifier assigned to a network connected to said other terminal, to which said each terminal makes an access, based on a terminal address of said other terminal, to specify a corresponding network parameter to said obtained network identifier.

18. The system as claimed in claim 1, **characterized in that** said terminal includes at least one file system which provides an additional data storage region.

19. The system as claimed in claim 1, **characterized in that** said terminal includes at least one hard disk which provides an additional data storage region.

20. A terminal allowing the access through a plurality of networks identified with the corresponding network parameter to other terminals for data communication, wherein said terminal includes :
an access rule storing unit for storing at least an access rule; and
a terminal of a first network possessing an access permission decision function block for the access to a second terminal of a second network, such that the decisions of the access permission decision function block are based on the parameters of both networks and such that only when the access is permitted according to said access permission decision function block the terminal of the first network accesses the terminal of the second network;
**characterized in that** said at least an access rule includes at least a transmission rule, and said access permission decision function block includes a data transmission permission decision function block which makes a decision on permissibility for data transmission to said other terminal, with reference to at least one of said first and second network parameters, so that only when said data transmission is permitted based on said transmission rule, then said terminal makes said data transmission to said other terminal.
further including a data receiving permission decision function block, and
wherein said access rule storing unit further stores, in addition to said transmission rule, at least a receiving rule, for allowing said data receiving permission decision function block to make a decision on permissibility for data receiving from said other terminal, with reference to at least one of said first and second network parameters, so that only when said data receiving is permitted based on said receiving rule, then said terminal makes said data receiving from said other terminal,
wherein said network parameter adding function block is adjusted to add a data-accompanying network parameter to data entered by user before said at least a data storage region stores said data accompanied with said data-accompanying network parameter, to allow at least one of said data transmission permission decision function block and said data receiving permission decision function block to make said decision on permissibility for at least one of data transmission and data receiving, based on at least one of said at least a transmission rule and said at least a receiving rule, with reference to said first and second network parameters and said data-accompanying network parameter, so that only when said data transmission is permitted based on said transmission rule, then said terminal makes a transmission of said data accompanied with said data-accompanying network parameter to said other terminal, as well as only when said data receiving is permitted based on said receiving rule, then said terminal receives data of said data accompanied with said data-accompanying network parameter from said other terminal;
wherein said network parameter adding function block is adjusted to allow an user's instruction to set said data-accompanying network parameter to be added to said entered data every time when said entered data are stored in said at least a data storage region.

21. The terminal as claimed in claim 20, **characterized in that** said first and second network parameters are either identical with or different each other, and said first and second networks are also either identical with or different each other.

22. The terminal as claimed in claim 20, **characterized by** further including an network parameter changing function block for setting and changing said data-accompanying network parameter stored in said at least a data storage region.

23. The terminal as claimed in claim 20, **characterized by** further including an access rule changing function block for changing at least one of said transmission rule and said receiving rule.

24. The terminal as claimed in claim 20, **characterized by** further including an alarm function block for informing user that said data receiving is not permitted based on said receiving rule.

25. The terminal as claimed in claim 20, **characterized by** further including a data receiving permission decision request function block which is adjusted that if said data receiving is not permitted based on said receiving rule, then said decision on permissibility of data receiving is made in accordance with an user's instruction.

26. The terminal as claimed in claim 25, **characterized in that** said data receiving permission decision request function block is adjusted that if said user's instruction is to permit storing said received data, then a temporary permission for receiving data is added to said receiving rule in a predetermined time period.

27. The terminal as claimed in claim 20, **characterized by** further including an alarm function block for informing user that said data transmission is not permitted based on said transmission rule .

28. The terminal as claimed in claim 20, **characterized by** further including a data transmission permission decision request function block for making said decision on permissibility of data transmission in accordance with an user's instruction, if said data transmission is not permitted based on said transmission rule.

29. The terminal as claimed in claim 28, **characterized in that** said data transmission permission decision request function block adds a temporary permission for transmitting data to said transmission rule in a predetermined time period, if said user's instruction is to permit transmitting said data.

30. The terminal as claimed in claim 20, **characterized by** further including an access permission decision operation inhibiting function block for making invalid said decision on permissibility for access based on said access rule in accordance with an entered user's instruction.

31. The terminal as claimed in claim 20, **characterized by** further including a network parameter table for holding respective correspondence between each network identifier and each network parameter assigned to a network which is also assigned to said each network identifier for said access permission decision function block to obtain a network identifier assigned to a network connected to said other terminal, to which said each terminal makes an access, based on a terminal address of said other terminal, to specify a corresponding network parameter to said obtained network identifier.

32. The terminal as claimed in claim 20, **characterized in that** said terminal includes at least one file terminal which provides an additional data storage region.

33. The terminal as claimed in claim 20, **characterized in that** said terminal includes at least one hard disk which provides an additional data storage region.

34. A method for data communication between a plurality of terminals allowing the access through a plurality of networks, including:
identifying each of said plurality of networks with the corresponding network parameter;
setting at least an access rule;
accessing a second terminal of a second network with a terminal of a first network possessing a set of access rules for accessing, such that the access rules are based on the parameters of both networks and such that only when the accessing is permitted according to said access rules the terminal of the first network accesses the terminal of the second network;
**characterized in that** said at least an access rule includes at least a transmission rule for making a decision on permissibility for data transmission to said other terminal, with reference to at least one of said first and second network parameters so that only when said data transmission is permitted based on said transmission rule, then said terminal makes said data transmission to said other terminal.
wherein said at least an access rule further includes, in addition to said at least a transmission rule, at least a receiving rule for making a decision on permissibility for data receiving from said other terminal, with reference to at least one of said first and second network parameters so that only when said data receiving is permitted based on said receiving rule then said terminal makes said data receiving from said other terminal.
wherein a data-accompanying network parameter is added to data entered by user before said data accompanied with said data-accompanying network parameter are stored in at least a data storage region of said terminal, to make said decision on permissibility for at least one of data transmission and data receiving, based on at least one of said at least a transmission rule and said at least a receiving rule, with reference to said first and second network parameters and said data-accompanying network parameter, so that only when said data transmission is permitted based on said transmission rule, then said terminal makes a transmission of said data accompanied with said data-accompanying network parameter to said other terminal, as well as only when said data receiving is permitted based on said receiving rule, then said terminal receives data of said data accompanied with said data-accompanying network parameter from said other terminal;
further including the step of: allowing an user's instruction to set said data-accompanying network parameter to be added to said entered data every time when said entered data are stored in said at least a data storage region.

35. The method as claimed in claim 34, **characterized in that** said first and second network parameters are either identical with or different each other, and said first and second networks are also either identical with or different each other.

36. The method as claimed in claim 34, **characterized by** further including: setting and changing said data-accompanying network parameter stored in said at least a data storage region.

37. The method as claimed in claim 34, **characterized by** further including : changing said receiving rule.

38. The method as claimed in claim 34, **characterized by** further including informing user that said data receiving is not permitted based on said receiving rule.

39. The method as claimed in claim 34, **characterized in that** if said data receiving is not permitted based on said receiving rule, then said decision on permissibility of data receiving is made in accordance with an user's instruction.

40. The method as claimed in claim 39, **characterized in that** if said user's instruction is to permit storing said received data, then a temporary permission for receiving data is added to said receiving rule in a predetermined time period.

41. The method as claimed in claim 34, **characterized by** further including : informing user that said data transmission is not permitted based on said transmission rule.

42. The method as claimed in claim 34, **characterized in that** if said data transmission is not permitted based on said transmission rule, then said decision on permissibility of data transmission is made in accordance with an user's instruction.

43. The method as claimed in claim 42, **characterized in that** if said user's instruction is to permit transmitting said data, then a temporary permission for transmitting data is added to said transmission rule in a predetermined time period.

44. The method as claimed in claim 34, **characterized by** further including allowing an entered user's instruction to make, invalid said decision on permissibility for access based on said access rule.

45. The method as claimed in claim 34, **characterized in that** said network parameter includes identifiers which identify a private network and a public network respectively.

46. The method as claimed in claim 34, **characterized in that** said network parameter includes identifiers which identify different network providers respectively.

47. The method as claimed in claim 34, **characterized in that** said network parameter includes identifiers which identify respective node points included in a hierarchical network structure.

48. The method as claimed in claim 34, **characterized in that** said network parameter which specifies every network.

49. The method as claimed in claim 34, **characterized in that** each of said plurality of network is assigned with each network identifier which uniquely identifies said each network, to specify said other terminal, to which said each terminal makes an access, based on a terminal address which includes said each network identifier.

50. The method as claimed in claim 49, **characterized by** further including : holding respective correspondence between said each network identifier and said each network parameter assigned to a network which is also assigned to said each network identifier for obtaining a network identifier assigned to a network connected to said other terminal, to which said each terminal makes an access, based on a terminal address of said other terminal, to specify a corresponding network parameter to said obtained network identifier.

## Patentansprüche

1. Datenkommunikationssystem mit:
mehreren Netzwerken;
mehreren Endgeräten, denen der Zugriff auf die mehreren Netzwerke ermöglicht wird;
wobei jedes der mehreren Netzwerke durch einen entsprechenden Netzwerkparameter identifiziert wird; und
ein Endgerät eines ersten Netzwerks einen Satz von Zugriffsregeln für einen Zugriff auf ein zweites Endgerät eines zweiten Netzwerks aufweist, derart, dass die Zugriffsregeln auf Parametern beider Netzwerke basieren, und derart, dass, nur wenn der Zugriff gemäß den Zugriffsregeln zulässig ist, das Endgerät des ersten Netzwerks auf das Endgerät des zweiten Netzwerks zugreift;
**dadurch gekennzeichnet, dass**
die mindestens eine Zugriffsregel mindestens eine Senderegel zum Ausführen einer Entscheidungsoperation bezüglich der Zulässigkeit einer Datenübertragung zum anderen Endgerät unter Bezug auf den ersten und/oder den zweiten Netzwerkparameter aufweist, so dass, nur wenn die Datenübertragung basierend auf der Senderegel zulässig ist, das Endgerät die Datenübertragung zum anderen Endgerät ausführt;
wobei die mindestens eine Zugriffsregel zusätzlich zur mindestens einen Senderegel ferner mindestens eine Empfangsregel zum Ausführen einer Entscheidungsoperation bezüglich der Zulässigkeit eines Datenempfangs vom anderen Endgerät unter Bezug auf den ersten und/oder den zweiten Netzwerkparameter aufweist, so dass, nur wenn der Datenempfang basierend auf der Empfangsregel zulässig ist, das Endgerät Daten vom anderen Endgerät empfängt;
wobei das Endgerät dazu eingerichtet ist, durch den Benutzer eingegebenen Daten einen mit den Daten verknüpften Netzwerkparameter hinzuzufügen, bevor die Daten mit dem mit den Daten verknüpften Netzwerkparameter in mindestens einen Datenspeicherbereich des Endgeräts gespeichert werden, um eine Entscheidungsoperation bezüglich der Zulässigkeit der Datenübertragung und/oder des Datenempfangs basierend auf der Senderegel und/oder der Empfangsregel unter Bezug auf den ersten und den zweiten Netzwerkparameter und den mit den Daten verknüpften Netzwerkparameter auszuführen, so dass, nur wenn die Datenübertragung basierend auf der Senderegel zulässig ist, das Endgerät die Daten mit dem mit den Daten verknüpften Netzwerkparameter an das andere Endgerät überträgt, und nur wenn der Datenempfang basierend auf der Empfangsregel zulässig ist, das Endgerät die Daten mit dem mit den Daten verknüpften Netzwerkparameter vom anderen Endgerät empfängt;
wobei das Endgerät dazu eingerichtet ist, den den eingegebenen Daten hinzuzufügenden, mit den Daten verknüpften Netzwerkparameter durch eine Benutzeranweisung zu setzen, immer wenn die eingegebenen Daten in dem mindestens einen Datenspeicherbereich gespeichert werden.

2. System nach Anspruch 1, **dadurch gekennzeichnet, dass** der erste und der zweite Netzwerkparameter identisch oder voneinander verschieden sind, und das erste und das zweite Netzwerk ebenfalls identisch oder voneinander verschieden sind.

3. System nach Anspruch 1, **dadurch gekennzeichnet, dass** das Endgerät dazu eingerichtet ist, den in dem mindestens einen Datenspeicherbereich gespeicherten, mit Daten verknüpften Netzwerkparameter zu setzen und zu ändern.

4. System nach Anspruch 1, **dadurch gekennzeichnet, dass** das Endgerät dazu eingerichtet ist, die Zugriffsregel zu ändern.

5. System nach Anspruch 1, **dadurch gekennzeichnet, dass** das Endgerät dazu eingerichtet ist, den Benutzer darüber zu informieren, dass der Datenempfang basierend auf der Empfangsregel unzulässig ist.

6. System nach Anspruch 1, **dadurch gekennzeichnet, dass** das Endgerät dazu eingerichtet ist, wenn der Datenempfang basierend auf der Empfangsregel unzulässig ist, die Entscheidungsoperation bezüglich der Zulässigkeit des Datenempfangs gemäß einer Benutzeranweisung auszuführen.

7. System nach Anspruch 6, **dadurch gekennzeichnet, dass** das Endgerät dazu eingerichtet ist, wenn die Benutzeranweisung anzeigt, die Speicherung der empfangenen Daten zuzulassen, der Empfangsregel innerhalb einer vorgegebenen Zeitdauer eine vorübergehende Erlaubnis für einen Datenempfang hinzuzufügen.

8. System nach Anspruch 1, **dadurch gekennzeichnet, dass** das Endgerät dazu eingerichtet ist, den Benutzer darüber zu informieren, dass die Datenübertragung basierend auf der Senderegel unzulässig ist.

9. System nach Anspruch 1, **dadurch gekennzeichnet, dass** das Endgerät dazu eingerichtet ist, wenn die Datenübertragung basierend auf der Senderegel unzulässig ist, die Entscheidungsoperation bezüglich der Zulässigkeit der Datenübertragung gemäß einer Benutzeranweisung auszuführen.

10. System nach Anspruch 9, **dadurch gekennzeichnet, dass** das Endgerät dazu eingerichtet ist, wenn die Benutzeranweisung die Zulässigkeit der Datenübertragung anzeigt, der Senderegel innerhalb einer vorgegebenen Zeitdauer eine vorübergehende Erlaubnis für eine Datenübertragung hinzuzufügen.

11. System nach Anspruch 1, **dadurch gekennzeichnet, dass** das Endgerät dazu eingerichtet ist, die Entscheidung bezüglich der Zulässigkeit eines Zugriffs basierend auf der Zugriffsregel durch eine eingegebene Benutzeranweisung ungültig zu machen.

12. System nach Anspruch 1, **dadurch gekennzeichnet, dass** der Netzwerkparameter Identifizierungen aufweist, die ein privates Netzwerk bzw. ein öffentliches Netzwerk identifizieren.

13. System nach Anspruch 1, **dadurch gekennzeichnet, dass** der Netzwerkparameter Identifizierungen aufweist, die verschiedene Netzwerkanbieter identifizieren.

14. System nach Anspruch 1, **dadurch gekennzeichnet, dass** der Netzwerkparameter Identifizierungen aufweist, die jeweilige Knotenpunkte einer hierarchischen Netzwerkstruktur identifizieren.

15. System nach Anspruch 1, **dadurch gekennzeichnet, dass** der Netzwerkparameter jedes Netzwerk spezifiziert.

16. System nach Anspruch 1, **dadurch gekennzeichnet, dass** jedem der mehreren Netzwerke jeweils eine Netzwerkidentifizierung zugewiesen ist, die das jeweilige Netzwerk eindeutig identifiziert, und wobei jedes Endgerät dazu eingerichtet ist, ein anderes Endgerät, auf das das Endgerät zugreift, basierend auf einer Endgerätadresse zu spezifizieren, die eine entsprechende Netzwerkidentifizierung aufweist.

17. System nach Anspruch 16, **dadurch gekennzeichnet, dass** das Endgerät dazu eingerichtet ist, Zuordnungen zwischen jeweiligen Netzwerkidentifizierungen und Netzwerkparametern zu speichern, die jeweils einem Netzwerk zugewiesen sind, dem auch eine entsprechende Netzwerkidentifizierung zugewiesen ist, um eine Netzwerkidentifizierung, die einem Netzwerk zugewiesen ist, das mit dem anderen Endgerät verbunden ist, auf das das eine Endgerät zugreift, basierend auf einer Endgerätadresse des anderen Endgeräts zu erhalten und einen entsprechenden Netzwerkparameter für die erhaltene Netzwerkidentifizierung zu spezifizieren.

18. System nach Anspruch 1, **dadurch gekennzeichnet, dass** das Endgerät mindestens ein Dateisystem aufweist, durch das ein zusätzlicher Datenspeicherbereich bereitgestellt wird.

19. System nach Anspruch 1, **dadurch gekennzeichnet, dass** das Endgerät mindestens eine Festplatte aufweist, durch die ein zusätzlicher Datenspeicherbereich bereitgestellt wird.

20. Endgerät, das über mehrere Netzwerke, die durch jeweilige Netzwerkparameter identifiziert sind, für eine Datenkommunikation auf andere Endgeräte zugreifen kann;
wobei das Endgerät aufweist:
eine Zugriffsregelspeichereinheit zum Speichern mindestens einer Zugriffsregel;
wobei ein Endgerät eines ersten Netzwerks einen Zugriffzulässigkeitsentscheidungsfunktionsblock für einen Zugriff auf ein zweites Endgerät eines zweiten Netzwerks aufweist, derart, dass die Entscheidungen des Zugriffzulässigkeitsentscheidungsfunktionsblocks auf den Parametern beider Netzwerke basieren, und derart, dass, nur wenn ein Zugriff gemäß der Entscheidung des Zugriffzulässigkeitsentscheidungsfunktionsblock zulässig ist, das Endgerät des ersten Netzwerks auf das Endgerät des zweiten Netzwerks zugreift;
**dadurch gekennzeichnet, dass**
die mindestens eine Zugriffsregel mindestens eine Senderegel aufweist, und der Zugriffzulässigkeitsentscheidungsfunktionsblock einen Datenübertragungszulässigkeitsentscheidungsfunktionsblock aufweist, der eine Entscheidungsoperation bezüglich der Zulässigkeit einer Datenübertragung zum anderen Endgerät unter Bezug auf den ersten und/oder den zweiten Netzwerkparameter ausführt, so dass, nur wenn die Datenübertragung basierend auf der Senderegel zulässig ist, das Endgerät die Datenübertragung zum anderen Endgerät ausführt;
ferner mit einem Datenempfangszulässigkeitsentscheidungsfunktionsblock; und
wobei die Zugriffsregelspeichereinheit zusätzlich zur Senderegel ferner mindestens eine Empfangsregel speichert, um zu ermöglichen, dass der Datenempfangszulässigkeitsentscheidungsfunktionsblock eine Entscheidungsoperation bezüglich der Zulässigkeit eines Datenempfangs vom anderen Endgerät unter Bezug auf den ersten und/oder den zweiten Netzwerkparameter ausführt, so dass, nur wenn der Datenempfang basierend auf der Empfangsregel zulässig ist, das Endgerät Daten vom anderen Endgerät empfängt;
wobei der Netzwerkparameteradditionsfunktionsblock dazu eingerichtet ist, durch den Benutzer eingegebenen Daten einen mit den Daten verknüpften Netzwerkparameter hinzuzufügen, bevor die Daten mit dem mit den Daten verknüpften Netzwerkparameter in mindestens einen Datenspeicherbereich gespeichert werden, um dem Datenübertragungszulässigkeitsentscheidungsfunktionsblock und/oder dem Datenempfangszulässigkeitsentscheidungsfunktionsblock zu ermöglichen, eine Entscheidungsoperation bezüglich der Zulässigkeit der Datenübertragung und/oder des Datenempfangs basierend auf der Senderegel und/oder der Empfangsregel unter Bezug auf den ersten und den zweiten Netzwerkparameter und den mit den Daten verknüpften Netzwerkparameter auszuführen, so dass, nur wenn die Datenübertragung basierend auf der Senderegel zulässig ist, das Endgerät die Daten mit dem mit den Daten verknüpften Netzwerkparameter an das andere Endgerät überträgt, und nur wenn der Datenempfang basierend auf der Empfangsregel zulässig ist, das Endgerät die Daten mit dem mit den Daten verknüpften Netzwerkparameter vom anderen Endgerät empfängt;
wobei der Netzwerkparameteradditionsfunktionsblock dazu geeignet ist, den den eingegebenen Daten hinzuzufügenden, mit den Daten verknüpften Netzwerkparameter durch eine Benutzeranweisung zu setzen, immer wenn die eingegebenen Daten in dem mindestens einen Datenspeicherbereich gespeichert werden.

21. Endgerät nach Anspruch 20, **dadurch gekennzeichnet, dass** der erste und der zweite Netzwerkparameter identisch oder voneinander verschieden sind, und das erste und das zweite Netzwerk ebenfalls identisch oder voneinander verschieden sind.

22. Endgerät nach Anspruch 20, ferner mit einem Netzwerkparameteränderungsfunktionsblock zum Setzen und Ändern des in dem mindestens einen Datenspeicherbereich gespeicherten, mit Daten verknüpften Netzwerkparameters.

23. Endgerät nach Anspruch 20, ferner mit einem Zugriffregeländerungsfunktionsblock zum Ändern der Senderegel und/oder der Empfangsregel.

24. Endgerät nach Anspruch 20, ferner mit einem Alarmfunktionsblock, der einen Benutzer darüber informiert, dass der Datenempfang basierend auf der Empfangsregel unzulässig ist.

25. Endgerät nach Anspruch 20, ferner mit einem Datenempfangsentscheidungsanforderungsfunktionsblock, der dazu eingerichtet ist, wenn der Datenempfang basierend auf der Empfangsregel unzulässig ist, zu veranlassen, dass die Entscheidungsoperation bezüglich der Zulässigkeit des Datenempfangs gemäß einer Benutzeranweisung ausgeführt wird.

26. Endgerät nach Anspruch 25, wobei der Datenempfangsentscheidungsanforderungsfunktionsblock dazu eingerichtet ist, dass, wenn die Benutzeranweisung anzeigt, das Speichern der empfangenen Daten zuzulassen, der Empfangsregel innerhalb einer vorgegebenen Zeitdauer eine vorübergehende Erlaubnis für einen Datenempfang hinzugefügt wird.

27. Endgerät nach Anspruch 20, ferner mit einem Alarmfunktionsblock, der einen Benutzer darüber informiert, dass die Datenübertragung basierend auf der Senderegel unzulässig ist.

28. Endgerät nach Anspruch 20, ferner mit einem Datenübertragungsentscheidungsanforderungsfunktionsblock, der dazu eingerichtet ist, wenn die Datenübertragung basierend auf der Senderegel unzulässig ist, zu veranlassen, dass die Entscheidungsoperation bezüglich der Zulässigkeit der Datenübertragung gemäß einer Benutzeranweisung ausgeführt wird.

29. Endgerät nach Anspruch 28, **dadurch gekennzeichnet, dass** der Datenübertragungsentscheidungsanforderungsfunktionsblock der Senderegel innerhalb einer vorgegebenen Zeitdauer eine vorübergehende Erlaubnis für eine Datenübertragung hinzufügt, wenn die Benutzeranweisung die Zulässigkeit der Datenübertragung anzeigt.

30. Endgerät nach Anspruch 20, ferner mit einem Zugriffszulässigkeitsentscheidungsoperationunterdrückungsfunktionsblock, der dazu eingerichtet ist, die Entscheidungsoperation bezüglich der Zulässigkeit eines Zugriffs basierend auf der Zugriffsregel gemäß einer eingegebenen Benutzeranweisung ungültig zu machen.

31. Endgerät nach Anspruch 20, ferner mit einer Netzwerkparametertabelle, die Zuordnungen zwischen jeweiligen Netzwerkidentifizierungen und Netzwerkparametern speichert, die jeweils einem Netzwerk zugewiesen sind, dem auch eine entsprechende Netzwerkidentifizierung zugewiesen ist, um zu veranlassen, dass der Zugriffszulässigkeitsentscheidungsfunktionsblock eine Netzwerkidentifizierung, die einem Netzwerk zugewiesen ist, das mit einem anderen Endgerät verbunden ist, auf das ein Endgerät zugreift, basierend auf einer Endgerätadresse des anderen Endgeräts erhält, um einen entsprechenden Netzwerkparameter für die erhaltene Netzwerkidentifizierung zu spezifizieren.

32. Endgerät nach Anspruch 20, **dadurch gekennzeichnet, dass** das Endgerät mindestens ein Dateisystem aufweist, durch das ein zusätzlicher Datenspeicherbereich bereitgestellt wird.

33. Endgerät nach Anspruch 20, **dadurch gekennzeichnet, dass** das Endgerät mindestens eine Festplatte aufweist, durch die ein zusätzlicher Datenspeicherbereich bereitgestellt wird.

34. Verfahren für eine Datenkommunikation zwischen mehreren Endgeräten, die einen Zugriff über mehrere Netzwerke ermöglichen, mit den Schritten:
Identifizieren jedes der mehreren Netzwerke durch einen entsprechenden Netzwerkparameter;
Festlegen mindestens einer Zugriffsregel;
Zugreifen auf ein zweites Endgerät eines zweiten Netzwerks von einem Endgerät eines ersten Netzwerks, das einen Satz von Zugriffsregeln aufweist, wobei die Zugriffsregeln auf den Parametern beider Netzwerke basieren, so dass, nur wenn der Zugriff gemäß den Zugriffsregeln zulässig ist, das Endgerät des ersten Netzwerks auf das Endgerät des zweiten Netzwerks zugreift;
**dadurch gekennzeichnet, dass**
die mindestens eine Zugriffsregel mindestens eine Senderegel zum Ausführen einer Entscheidungsoperation bezüglich der Zulässigkeit einer Datenübertragung zum anderen Endgerät unter Bezug auf den ersten und/oder den zweiten Netzwerkparameter aufweist, so dass, nur wenn die Datenübertragung basierend auf der Senderegel zulässig ist, das Endgerät die Datenübertragung zum anderen Endgerät ausführt;
wobei die mindestens eine Zugriffsregel zusätzlich zur mindestens einen Senderegel ferner mindestens eine Empfangsregel zum Ausführen einer Entscheidungsoperation bezüglich der Zulässigkeit eines Datenempfangs vom anderen Endgerät unter Bezug auf den ersten und/oder den zweiten Netzwerkparameter aufweist, so dass, nur wenn der Datenempfang basierend auf der Empfangsregel zulässig ist, das Endgerät Daten vom anderen Endgerät empfängt;
wobei durch den Benutzer eingegebenen Daten ein mit den Daten verknüpfter Netzwerkparameter hinzugefügt wird, bevor die Daten mit dem mit den Daten verknüpften Netzwerkparameter in mindestens einen Datenspeicherbereich des Endgeräts gespeichert werden, um eine Entscheidungsoperation bezüglich der Zulässigkeit der Datenübertragung und/oder des Datenempfangs basierend auf der Senderegel und/oder der Empfangsregel unter Bezug auf den ersten und den zweiten Netzwerkparameter und den mit den Daten verknüpften Netzwerkparameter auszuführen, so dass, nur wenn die Datenübertragung basierend auf der Senderegel zulässig ist, das Endgerät die Daten mit dem mit den Daten verknüpften Netzwerkparameter an das andere Endgerät überträgt, und nur wenn der Datenempfang basierend auf der Empfangsregel zulässig ist, das Endgerät die Daten mit dem mit den Daten verknüpften Netzwerkparameter vom anderen Endgerät empfängt;
ferner mit dem Schritt zum Setzen des dem eingegebenen Daten hinzuzufügenden Netzwerkparameters durch eine Benutzeranweisung, immer wenn die eingegebenen Daten in dem mindestens einen Datenspeicherbereich gespeichert werden.

35. Verfahren nach Anspruch 34, **dadurch gekennzeichnet, dass** der erste und der zweite Netzwerkparameter identisch oder voneinander verschieden sind, und das erste und das zweite Netzwerk ebenfalls identisch oder voneinander verschieden sind.

36. Verfahren nach Anspruch 34, ferner mit dem Schritt zum Setzen und Ändern des in dem mindestens einen Datenspeicherbereich gespeicherten, mit Daten verknüpften Netzwerkparameters.

37. Verfahren nach Anspruch 34, ferner mit dem Schritt zum Ändern der Empfangsregel.

38. Verfahren nach Anspruch 34, ferner mit dem Schritt zum Informieren eines Benutzers darüber, dass der Datenempfang basierend auf der Empfangsregel unzulässig ist.

39. Verfahren nach Anspruch 34, ferner mit dem Schritt zum Veranlassen, dass die Entscheidungsoperation bezüglich der Zulässigkeit des Datenempfangs gemäß einer Benutzeranweisung ausgeführt wird, wenn der Datenempfang basierend auf der Empfangsregel unzulässig ist.

40. Verfahren nach Anspruch 39, **dadurch gekennzeichnet, dass**, wenn die Benutzeranweisung anzeigt, die Speicherung der empfangenen Daten zuzulassen, der Empfangsregel innerhalb einer vorgegebenen Zeitdauer eine vorübergehende Erlaubnis für einen Datenempfang hinzugefügt wird.

41. Verfahren nach Anspruch 34, ferner mit dem Schritt zum Informieren eines Benutzers darüber, dass die Datenübertragung basierend auf der Senderegel unzulässig ist.

42. Verfahren nach Anspruch 34, **dadurch gekennzeichnet, dass**, wenn die Datenübertragung basierend auf der Senderegel unzulässig ist, die Entscheidungsoperation bezüglich der Zulässigkeit der Datenübertragung gemäß einer Benutzeranweisung ausgeführt wird.

43. Verfahren nach Anspruch 42, **dadurch gekennzeichnet, dass**, wenn die Benutzeranweisung die Zulässigkeit der Datenübertragung anzeigt, der Senderegel innerhalb einer vorgegebenen Zeitdauer eine vorübergehende Erlaubnis für eine Datenübertragung hinzugefügt wird.

44. Verfahren nach Anspruch 34, ferner mit dem Schritt zum Ungültigmachen der Entscheidung bezüglich der Zulässigkeit eines Zugriffs basierend auf der Zugriffsregel durch eine eingegebene Benutzeranweisung.

45. Verfahren nach Anspruch 34, **dadurch gekennzeichnet, dass** der Netzwerkparameter Identifizierungen aufweist, die ein privates Netzwerk bzw. ein öffentliches Netzwerk identifizieren.

46. Verfahren nach Anspruch 34, **dadurch gekennzeichnet, dass** der Netzwerkparameter Identifizierungen aufweist, die verschiedene Netzwerkanbieter identifizieren.

47. Verfahren nach Anspruch 34, **dadurch gekennzeichnet, dass** der Netzwerkparameter Identifizierungen aufweist, die jeweilige Knotenpunkte einer hierarchischen Netzwerkstruktur identifizieren.

48. Verfahren nach Anspruch 34, **dadurch gekennzeichnet, dass** der Netzwerkparameter jedes Netzwerk spezifiziert.

49. Verfahren nach Anspruch 34, **dadurch gekennzeichnet, dass** jedem der mehreren Netzwerke jeweils eine Identifizierung zugewiesen ist, die das jeweilige Netzwerk eindeutig identifiziert, um das andere Endgerät, auf das das eine Endgerät zugreift, basierend auf einer Endgerätadresse zu spezifizieren, die die die jeweilige Netzwerkidentifizierung aufweist.

50. Verfahren nach Anspruch 49, ferner mit dem Schritt zum Speichern von Zuordnungen zwischen jeweiligen Netzwerkidentifizierungen und Netzwerkparametern, die jeweils einem Netzwerk zugewiesen sind, dem auch eine entsprechende Netzwerkidentifizierung zugewiesen ist, um eine Netzwerkidentifizierung, die einem Netzwerk zugewiesen ist, das mit dem anderen Endgerät verbunden ist, auf das das eine Endgerät zugreift, basierend auf einer Endgerätadresse des anderen Endgeräts zu erhalten und einen der erhaltenen Netzwerkidentifizierung entsprechenden Netzwerkparameter zu spezifizieren.

## Revendications

1. Système de communication de données comprenant :
une pluralité de réseaux ;
une pluralité de terminaux permettant l'accès à ladite pluralité de réseaux ;
dans lequel chacun de ladite pluralité de réseaux est identifié avec le paramètre de réseau correspondant ; et
un terminal d'un premier réseau possédant un ensemble de règles d'accès pour l'accès à un deuxième terminal d'un deuxième réseau, si bien que les règles d'accès sont basées sur les paramètres des deux réseaux et si bien que ce n'est que quand l'accès est autorisé en accord avec lesdites règles d'accès que le terminal du premier réseau peut accéder au terminal du deuxième réseau ;
**caractérisé en ce que** ladite au moins une règle d'accès comprend au moins une règle de transmission pour prendre une décision quant à une autorisation de transmission de données vers ledit autre terminal, en référence à au moins un desdits paramètres de premier et de deuxième réseaux, si bien que ce n'est que lorsque ladite transmission de données est autorisée sur la base de ladite règle de transmission que ledit terminal exécute ladite transmission de données vers ledit autre terminal ;
dans lequel ladite au moins une règle d'accès comprend par ailleurs, en plus de ladite-au moins une règle de transmission, au moins une règle de réception pour prendre une décision quant à une autorisation de réception de données en provenance dudit un autre terminal, en référence à au moins un desdits paramètres de premier et de deuxième réseaux, si bien que ce n'est que lorsque ladite réception de données est autorisée sur la base de ladite règle de réception que ledit terminal exécute ladite réception de données en provenance dudit autre terminal ;
dans lequel ledit terminal est configuré de telle sorte qu'un paramètre de réseau d'accompagnement de données est ajouté à des données entrées par un utilisateur avant que lesdites données accompagnées dudit paramètre de réseau d'accompagnement de données ne soient enregistrées dans au moins une zone de stockage de données dudit terminal, afin de prendre ladite décision d'autorisation pour au moins une de la transmission de données et de la réception de données, sur la base d'au moins une de ladite au moins une règle de transmission et de ladite au moins une règle de réception, en référence aux dits paramètres de premier et de deuxième réseaux et au dit paramètre de réseau d'accompagnement de données, si bien que ce n'est que lorsque ladite transmission de données est autorisée sur la base de ladite règle de transmission que ledit terminal exécute une transmission desdites données accompagnées dudit paramètre de réseau d'accompagnement de données vers ledit autre terminal et si bien que ce n'est que lorsque ladite réception de données est autorisée sur la base de ladite règle de réception que ledit terminal exécute une réception de données desdites données accompagnées dudit paramètre de réseau d'accompagnement de données en provenance dudit autre terminal ;
dans lequel ledit terminal est configuré pour permettre à une instruction utilisateur de programmer l'ajout dudit paramètre de réseau d'accompagnement de données aux dites données entrées chaque fois que lesdites données entrées sont enregistrées dans ladite au moins une zone de stockage de données.

2. Système selon la revendication 1, **caractérisé en ce que** lesdits paramètres de premier et de deuxième réseaux sont, soit identiques l'un à l'autre, soit différents l'un de l'autre, et lesdits premier et deuxième réseaux sont eux aussi, soit identiques l'un à l'autre, soit différents l'un de l'autre.

3. Système selon la revendication 1, **caractérisé en ce que** ledit terminal est configuré pour programmer et pour modifier ledit paramètre de réseau d'accompagnement de données enregistré dans ladite au moins une zone de stockage de données.

4. Système selon la revendication 1 **caractérisé en ce que** ledit terminal est configuré pour modifier ladite règle de réception.

5. Système selon la revendication 1, **caractérisé en ce que** ledit terminal est configuré pour informer un utilisateur que ladite réception de données n'est pas autorisée sur la base de ladite règle de réception.

6. Système selon la revendication 1, **caractérisé en ce que** ledit terminal est configuré pour que, si ladite réception de données n'est pas autorisée sur la base de ladite règle de réception, alors ladite décision d'autorisation de réception de données est exécutée en accord avec une instruction d'un utilisateur.

7. Système selon la revendication 6, **caractérisé en ce que** ledit terminal est configuré pour que, si ladite instruction d'un utilisateur consiste à autoriser le stockage desdites données reçues, alors une autorisation provisoire de réception de données est ajoutée à ladite règle de réception à l'intérieur d'une période de temps prédéterminée.

8. Système selon la revendication 1, **caractérisé en ce que** ledit terminal est configuré pour informer un utilisateur que ladite transmission de données n'est pas autorisée sur la base de ladite règle de transmission.

9. Système selon la revendication 1, **caractérisé en ce que** ledit terminal est configuré pour que, si ladite transmission de données n'est pas autorisée sur la base de ladite règle de transmission, alors ladite décision d'autorisation de transmission de données est exécutée en accord avec une instruction d'un utilisateur.

10. Système selon la revendication 9, **caractérisé en ce que** ledit terminal est configuré pour que, si ladite instruction d'un utilisateur consiste à autoriser la transmission desdites données, alors une autorisation provisoire de transmission de données est ajoutée à ladite règle de transmission à l'intérieur d'une période de temps prédéterminée.

11. Système selon la revendication 1, **caractérisé en ce que** ledit terminal est configuré pour permettre à une instruction entrée par un utilisateur de rendre invalide ladite décision d'autorisation d'accès sur la base de ladite règle d'accès.

12. Système selon la revendication 1, **caractérisé en ce que** ledit paramètre de réseau comprend des identificateurs qui identifient un réseau privé et un réseau public, respectivement.

13. Système selon la revendication 1, **caractérisé en ce que** ledit paramètre de réseau comprend des identificateurs qui identifient différents fournisseurs d'accès, respectivement.

14. Système selon la revendication 1, **caractérisé en ce que** ledit paramètre de réseau comprend des identificateurs qui identifient des noeuds respectifs inclus dans une structure de réseau hiérarchique.

15. Système selon la revendication 1, **caractérisé en ce que** ledit paramètre de réseau qui spécifie chaque réseau.

16. Système selon la revendication 1, **caractérisé en ce que**, à chacun de ladite pluralité de réseaux est attribué un identificateur de réseau qui identifie de façon unique ledit chaque réseau, et ledit chaque terminal est configuré pour spécifier ledit autre terminal avec lequel ledit chaque terminal établit un accès, sur la base d'une adresse de terminal qui comprend ledit chaque identificateur de réseau.

17. Système selon la revendication 16, **caractérisé en ce que** ledit terminal est configuré pour entretenir une correspondance respective entre ledit chaque identificateur de réseau et ledit chaque paramètre de réseau attribué à un réseau qui est également attribué au dit chaque identificateur de réseau pour obtenir un identificateur de réseau attribué à un réseau connecté au dit autre terminal, avec lequel ledit autre terminal établit un accès, sur la base d'une adresse de terminal dudit autre terminal, pour spécifier un paramètre de réseau correspondant au dit identificateur de réseau obtenu.

18. Système selon la revendication 1, **caractérisé en ce que** ledit terminal comprend au moins un système de fichiers qui procure une zone de stockage de données supplémentaire.

19. Système selon la revendication 1, **caractérisé en ce que** ledit terminal comprend au moins un disque dur qui procure une zone de stockage de données supplémentaire.

20. Terminal permettant l'accès, au sein d'une pluralité de réseaux identifiés par le paramètre de réseau correspondant, à d'autres terminaux, pour une communication de données, dans lequel ledit terminal comprend :
une unité de stockage de règle d'accès pour stocker au moins une règle d'accès ;
dans lequel un terminal d'un premier réseau possédant un bloc de fonction de décision d'autorisation d'accès pour l'accès à un deuxième terminal d'un deuxième réseau, si bien que les décisions du bloc de fonction de décision d'autorisation d'accès sont basées sur les paramètres des deux réseaux et si bien que ce n'est que quand l'accès est autorisé en accord avec ledit bloc de fonction de décision d'autorisation d'accès que le terminal du premier réseau peut accéder au terminal du deuxième réseau ;
**caractérisé en ce que** ladite au moins une règle d'accès comprend au moins une règle de transmission et ledit bloc de fonction de décision d'autorisation d'accès comprend un bloc de fonction de décision d'autorisation de transmission de données qui prend une décision quant à une autorisation de transmission de données vers ledit autre terminal, en référence à au moins un desdits paramètres de premier et de deuxième réseaux, si bien que ce n'est que lorsque ladite transmission de données est autorisée sur la base de ladite règle de transmission que ledit terminal exécute ladite transmission de données vers ledit autre terminal ;
et comprenant en outre un bloc de fonction de décision d'autorisation de réception de données ; et
dans lequel ladite unité de stockage de règle d'accès contient par ailleurs, en plus de ladite règle de transmission, au moins une règle de réception, pour permettre au dit bloc de fonction de décision d'autorisation de réception de données de prendre une décision quant à une autorisation de réception de données en provenance dudit autre terminal, en référence à au moins un desdits paramètres de premier et de deuxième réseaux, si bien que ce n'est que lorsque ladite réception de données est autorisée sur la base de ladite règle de réception que ledit terminal exécute ladite réception de données en provenance dudit autre terminal ;
dans lequel ledit bloc de fonction d'ajout de paramètre de réseau est configuré pour ajouter un paramètre de réseau d'accompagnement de données à des données entrées par un utilisateur avant que ladite au moins une zone de stockage de données ne stocke lesdites données accompagnées dudit paramètre de réseau d'accompagnement de données, pour permettre à au moins un dudit bloc de fonction de décision d'autorisation de transmission de données et dudit bloc de fonction de décision d'autorisation de réception de données de prendre ladite décision d'autorisation pour au moins une d'une transmission de données et d'une réception de données, sur la base d'au moins une de ladite au moins une règle de transmission et de ladite au moins une règle de réception, en référence aux dits paramètres de premier et de deuxième réseaux et dit paramètre de réseau d'accompagnement de données, si bien que ce n'est que lorsque ladite transmission de données est autorisée sur la base de ladite règle de transmission que ledit terminal exécute une transmission desdites données accompagnées dudit paramètre de réseau d'accompagnement de données vers ledit autre terminal, et si bien que ce n'est que lorsque ladite réception de données est autorisée sur la base de ladite règle de réception que ledit terminal exécute une réception de données desdites données accompagnées dudit paramètre de réseau d'accompagnement de données en provenance dudit autre terminal ;
dans lequel ledit bloc de fonction d'ajout de paramètre de réseau est configuré pour permettre à une instruction utilisateur de programmer l'ajout dudit paramètre de réseau d'accompagnement de données aux dites données entrées chaque fois que lesdites données entrées sont enregistrées dans ladite au moins une zone de stockage de données.

21. Terminal selon la revendication 20, **caractérisé en ce que** lesdits paramètres de premier et de deuxième réseaux sont, soit identiques l'un à l'autre, soit différents l'un de l'autre, et lesdits premier et deuxième réseaux sont eux aussi, soit identiques l'un à l'autre, soit différents l'un de l'autre.

22. Terminal selon la revendication 20, **caractérisé en ce qu'**il comprend en outre un bloc de fonction de modification de paramètre de réseau pour programmer et modifier ledit paramètre de réseau d'accompagnement de données stocké dans ladite au moins une zone de stockage de données.

23. Terminal selon la revendication 20, **caractérisé en ce qu'**il comprend en outre un bloc de fonction de modification de règle d'accès pour modifier au moins une de ladite règle de transmission et de ladite règle de réception.

24. Terminal selon la revendication 20, **caractérisé en ce qu'**il comprend en outre un bloc de fonction d'avertissement pour informer un utilisateur que ladite réception de données n'est pas autorisée sur la base de ladite règle de réception.

25. Terminal selon la revendication 20, **caractérisé en ce qu'**il comprend en outre un bloc de fonction de demande de décision d'autorisation de réception de données qui est configuré pour que, si ladite réception de données n'est pas autorisée sur la base de ladite règle de réception, alors ladite décision d'autorisation de réception de données est exécutée en accord avec une instruction d'un utilisateur.

26. Terminal selon la revendication 25, **caractérisé en ce que** ledit bloc de fonction de demande de décision d'autorisation de réception de données est configuré pour que, si ladite instruction d'un utilisateur consiste à autoriser le stockage desdites données reçues, alors une autorisation provisoire de réception de données est ajoutée à ladite règle de réception à l'intérieur d'une période de temps prédéterminée.

27. Terminal selon la revendication 20, **caractérisé en ce qu'**il comprend en outre un bloc de fonction d'avertissement pour informer un utilisateur que ladite transmission de données n'est pas autorisée sur la base de ladite règle de transmission.

28. Terminal selon la revendication 20, **caractérisé en ce qu'**il comprend en outre un bloc de fonction de demande de décision d'autorisation de transmission de données pour prendre ladite décision d'autorisation de transmission de données en accord avec une instruction d'un utilisateur, si ladite transmission de données n'est pas autorisée sur la base de ladite règle de transmission.

29. Terminal selon la revendication 28, **caractérisé en ce que** ledit bloc de fonction de demande de décision d'autorisation de transmission de données ajoute une autorisation provisoire pour transmettre des données à ladite règle de transmission à l'intérieur d'une période de temps prédéterminée, si ladite instruction d'un utilisateur consiste à autoriser la transmission desdites données.

30. Terminal selon la revendication 20, **caractérisé en ce qu'**il comprend en outre un bloc de fonction d'empêchement d'opération de décision d'autorisation d'accès pour rendre invalide ladite décision d'autorisation d'accès sur la base de ladite règle d'accès en accord avec une instruction entrée par un utilisateur.

31. Terminal selon la revendication 20, **caractérisé en ce qu'**il comprend en outre une table de paramètres de réseau pour entretenir une correspondance respective entre chaque identificateur de réseau et chaque paramètre de réseau attribué à un réseau qui est également attribué au dit chaque identificateur de réseau pour ledit bloc de fonction de décision d'autorisation d'accès pour obtenir un identificateur de réseau attribué à un réseau connecté au dit autre terminal, avec lequel ledit autre terminal établit un accès, sur la base d'une adresse de terminal dudit autre terminal, pour spécifier un paramètre de réseau correspondant au dit identificateur de réseau obtenu.

32. Terminal selon la revendication 20, **caractérisé en ce que** ledit terminal comprend au moins un terminal de fichiers qui procure une zone de stockage de données supplémentaire.

33. Terminal selon la revendication 20, **caractérisé en ce que** ledit terminal comprend au moins un disque dur qui procure une zone de stockage de données supplémentaire.

34. Procédé de communication de données entre une pluralité de terminaux permettant l'accès au sein d'une pluralité de réseaux, comprenant les étapes consistant à :
identifier chacun de ladite pluralité de réseaux avec le paramètre de réseau correspondant ;
définir au moins une règle d'accès ;
accéder à un deuxième terminal d'un deuxième réseau avec un terminal d'un premier réseau possédant un ensemble de règles d'accès pour l'accès, si bien que les règles d'accès sont basées sur les paramètres des deux réseaux et si bien que ce n'est que quand l'accès est autorisé en accord avec lesdites règles d'accès que le terminal du premier réseau peut accéder au terminal du deuxième réseau ;
**caractérisé en ce que** ladite au moins une règle d'accès comprend au moins une règle de transmission pour prendre une décision quant à une autorisation de transmission de données vers ledit autre terminal, en référence à au moins un desdits paramètres de premier et de deuxième réseaux, si bien que ce n'est que lorsque ladite transmission de données est autorisée sur la base de ladite règle de transmission que ledit terminal exécute ladite transmission de données vers ledit autre terminal ;
dans lequel ladite au moins une règle d'accès comprend par ailleurs, en plus de ladite au moins une règle de transmission, au moins une règle de réception pour prendre une décision quant à une autorisation de réception de données en provenance dudit un autre terminal, en référence à au moins un desdits paramètres de premier et de deuxième réseaux, si bien que ce n'est que lorsque ladite réception de données est autorisée sur la base de ladite règle de réception que ledit terminal exécute ladite réception de données en provenance dudit autre terminal ;
dans lequel un paramètre de réseau d'accompagnement de données est ajouté à des données entrées par un utilisateur avant que lesdites données accompagnées dudit paramètre de réseau d'accompagnement de données ne soient enregistrées dans au moins une zone de stockage de données dudit terminal, afin de prendre ladite décision d'autorisation pour au moins une de la transmission de données et de la réception de données, sur la base d'au moins une de ladite au moins une règle de transmission et de ladite au moins une règle de réception, en référence aux dits paramètres de premier et de deuxième réseaux et au dit paramètre de réseau d'accompagnement de données, si bien que ce n'est que lorsque ladite transmission de données est autorisée sur la base de ladite règle de transmission que ledit terminal exécute une transmission desdites données accompagnées dudit paramètre de réseau d'accompagnement de données vers ledit autre terminal et si bien que ce n'est que lorsque ladite réception de données est autorisée sur la base de ladite règle de réception que ledit terminal exécute une réception de données desdites données accompagnées dudit paramètre de réseau d'accompagnement de données en provenance dudit autre terminal ;
le procédé comprenant en outre l'étape consistant à : permettre à une instruction utilisateur de programmer l'ajout dudit paramètre de réseau d'accompagnement de données aux dites données entrées chaque fois que lesdites données entrées sont enregistrées dans ladite au moins une zone de stockage de données.

35. Procédé selon la revendication 34, **caractérisé en ce que** lesdits paramètres de premier et de deuxième réseaux sont, soit identiques l'un à l'autre, soit différents l'un de l'autre, et lesdits premier et deuxième réseaux sont eux aussi, soit identiques l'un à l'autre, soit différents l'un de l'autre.

36. Procédé selon la revendication 34, **caractérisé en ce qu'**il comprend en outre les étapes consistant à : programmer et modifier ledit paramètre de réseau d'accompagnement de données stocké dans ladite au moins une zone de stockage de données.

37. Procédé selon la revendication 34, **caractérisé en ce qu'**il comprend en outre l'étape consistant à : modifier ladite règle de réception.

38. Procédé selon la revendication 34, **caractérisé en ce qu'**il comprend en outre l'étape consistant à : informer un utilisateur que ladite réception de données n'est pas autorisée sur la base de ladite règle de réception.

39. Procédé selon la revendication 34, **caractérisé en ce que**, si ladite réception de données n'est pas autorisée sur la base de ladite règle de réception, alors ladite décision d'autorisation de réception de données est exécutée en accord avec une instruction d'un utilisateur.

40. Procédé selon la revendication 39, **caractérisé en ce que**, si ladite instruction d'un utilisateur consiste à autoriser le stockage desdites données reçues, alors une autorisation provisoire de réception de données est ajoutée à ladite règle de réception à l'intérieur d'une période de temps prédéterminée.

41. Procédé selon la revendication 34, **caractérisé en ce qu'**il comprend en outre l'étape consistant à : informer un utilisateur que ladite transmission de données n'est pas autorisée sur la base de ladite règle de transmission.

42. Procédé selon la revendication 34, **caractérisé en ce que**, si ladite transmission de données n'est pas autorisée sur la base de ladite règle de transmission, alors ladite décision d'autorisation de transmission de données est exécutée en accord avec une instruction d'un utilisateur.

43. Procédé selon la revendication 42, **caractérisé en ce que**, si ladite instruction d'un utilisateur consiste à autoriser la transmission desdites données reçues, alors une autorisation provisoire de transmission de données est ajoutée à ladite règle de transmission à l'intérieur d'une période de temps prédéterminée.

44. Procédé selon la revendication 34, **caractérisé en ce qu'**il comprend en outre l'étape consistant à : permettre à une instruction entrée par un utilisateur de rendre invalide ladite décision d'autorisation d'accès sur la base de ladite règle d'accès.

45. Procédé selon la revendication 34, **caractérisé en ce que** ledit paramètre de réseau comprend des identificateurs qui identifient un réseau privé et un réseau public, respectivement.

46. Procédé selon la revendication 34, **caractérisé en ce que** ledit paramètre de réseau comprend des identificateurs qui identifient différents fournisseurs d'accès, respectivement.

47. Procédé selon la revendication 34, **caractérisé en ce que** ledit paramètre de réseau comprend des identificateurs qui identifient des noeuds respectifs inclus dans une structure de réseau hiérarchique.

48. Procédé selon la revendication 34, **caractérisé en ce que** ledit paramètre de réseau qui spécifie chaque réseau.

49. Procédé selon la revendication 34, **caractérisé en ce que**, à chacun de ladite pluralité de réseaux est attribué un identificateur de réseau qui identifie de façon unique ledit chaque réseau, pour spécifier ledit autre terminal avec lequel ledit chaque terminal établit un accès, sur la base d'une adresse de terminal qui comprend ledit chaque identificateur de réseau.

50. Procédé selon la revendication 49, **caractérisé en ce qu'**il comprend en outre l'étape consistant à : entretenir une correspondance respective entre ledit chaque identificateur de réseau et ledit chaque paramètre de réseau attribué à un réseau qui est également attribué au dit chaque identificateur de réseau pour obtenir un identificateur de réseau attribué à un réseau connecté au dit autre terminal, avec lequel ledit autre terminal établit un accès, sur la base d'une adresse de terminal dudit autre terminal, pour spécifier un paramètre de réseau correspondant au dit identificateur de réseau obtenu.
